# EUROPÄISCHE PATENTSCHRIFT

(11) **EP 3 683 713 B1**
(45) Veröffentlichungstag und Bekanntmachung des Hinweises auf die Patenterteilung: **30.12.2020**
(21) Anmeldenummer: 19152115.2
(22) Anmeldetag: 16.01.2019
(51) Int. Cl.: H04L 9/32

(54) **VERFAHREN, VORRICHTUNGEN UND SYSTEM ZUM SICHERHEITSGESCHÜTZTEN BEREITSTELLEN VON DATENSÄTZEN**
METHOD, DEVICES AND SYSTEM FOR PROVIDING SECURE DATA SETS
PROCÉDÉ, DISPOSITIFS ET SYSTÈME DE FOURNITURE SÉCURISÉE DES ENSEMBLES DE DONNÉES

(43) Veröffentlichungstag der Anmeldung: 22.07.2020
(73) Patentinhaber: Siemens Aktiengesellschaft, 80333 München (DE)
(72) Erfinder: Jetzfellner, Thomas, 85609 Aschheim (DE)

(56) Entgegenhaltungen:
- EP-A1- 2 887 333
- EP-A1- 3 340 213
- US-A1- 2016 300 234
- US-A1- 2018 276 600
- CLARKSON W ET AL: "Fingerprinting Blank Paper Using Commodity Scanners", SECURITY AND PRIVACY, 2009 30TH IEEE SYMPOSIUM ON, IEEE, PISCATAWAY, NJ, USA, 17. Mai 2009 (2009-05-17), Seiten 301-314, XP031515112, ISBN: 978-0-7695-3633-0
- GERALD DEJEAN ET AL: "RF-DNA: Radio-Frequency Certificates of Authenticity", 10. September 2007 (2007-09-10), CRYPTOGRAPHIC HARDWARE AND EMBEDDED SYSTEMS - CHES 2007; [LECTURE NOTES IN COMPUTER SCIENCE], SPRINGER BERLIN HEIDELBERG, BERLIN, HEIDELBERG, PAGE(S) 346 - 363, XP047030366, ISBN: 978-3-540-74734-5 * Zusammenfassung * * Section 1; Seite 346 - Seite 351 *
- UNKNOWN ET AL: "Resource Fairness and Prioritization of Transactions in Permissioned Blockchain Systems (Industry Track)", PROCEEDINGS OF THE 19TH INTERNATIONAL MIDDLEWARE CONFERENCE INDUSTRY ON , MIDDLEWARE '18, 10. Dezember 2018 (2018-12-10), Seiten 46-53, XP055604353, New York, New York, USA DOI: 10.1145/3284028.3284035 ISBN: 978-1-4503-6016-6
- CHEN S ET AL: "AN OVERVIEW OF QUALITY OF SERVICE ROUTING FOR NEXT-GENERATION HIGH-SPEED NETWORKS: PROBLEMS AND SOLUTIONS", IEEE NETWORK, IEEE SERVICE CENTER, NEW YORK, NY, US, Bd. 12, Nr. 6, 1. November 1998 (1998-11-01), Seiten 64-79, XP000873129, ISSN: 0890-8044, DOI: 10.1109/65.752646

## Beschreibung

Die Erfindung bezieht sich auf Verfahren, Vorrichtungen und ein System zum sicherheitsgeschützten Bereitstellen von Datensätzen, wobei die Datensätze beispielsweise Sensordaten umfassen.

Eine immer stärkere Vernetzung von Smart-Geräten (z. B. Mobiltelefonen, Smartwatches) oder Fertigungsanlagen führt dazu, dass mehr und mehr Sensordaten von diesen Smart-Geräten und Fertigungsanlagen erfasst werden. Insbesondere soll mit diesen Daten beispielsweise eine Fertigung oder auch der Transport von Objekten (z. B. Werkstücken, Nahrungsmittel usw.) überwacht werden. Das Dokument EP2887333 stellt relevanten Stand der Technik dar.

Die Erfindung wird durch die unabhängigen Ansprüche definiert. Nachfolgend werden Aspekte der Erfindung erläutert.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung ein Gerät zum Berechnen einer kryptographischen Prüfsumme für eine Datenstruktur aufweisend:
- beispielsweise ein Erfassungsmodul (110) zum Erfassen individueller Merkmale (M) eines Objektes (O) mittels eines Erfassungsgerätes (A);
- beispielsweise ein Berechnungsmodul (120) zum Berechnen einer objektindividuellen Charakteristik anhand der individuellen Merkmale;
- beispielsweise ein Kryptographiemodul (130) zum Bereitstellen eines ersten kryptographischen Schlüssels anhand der individuellen Merkmale und/oder der objektindividuellen Charakteristik;
- beispielsweise ein Schutzmodul (130) zum kryptographischen Schützen einer Datenstruktur mittels einer kryptographischen Prüfsumme, wobei das Schutzmodul die kryptographische Prüfsumme mittels des ersten kryptographischen Schlüssels berechnet.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" oder "kryptographisch geschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden. Entsprecht ist beispielsweise eine Nachricht eine Transaktion, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion (des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract oder auch Chain-Code genannt) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" (oder auch Chain-Code genannt) kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" bzw. ein "Smart-Contract" kann im Zusammenhang mit der Erfindung insbesondere auch ein Ausführen eines Programmcodes bzw. eines Smart-Contracts in einem Prozess durch das verteilte Datenbanksystem bzw. deren Infrastruktur verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud, ein verteiltes Speichersystem oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereumbasierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass Kanten (vorzugsweise alle Kanten) die gleiche Richtung (vorzugsweise immer die gleiche Richtung) haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein. Alternativ oder zusätzlich kann die Erfindung beispielsweise auch mittels einer Peer-2-Peer Applikation anstelle des verteilten Datenbanksystems realisiert werden.

Entsprechend kann beispielsweise ein Peer-2-Peer Kommunikationsprotokoll anstelle des verteilten Datenbanksystems genutzt werden. Dabei sind z. B. die genannten Nachrichten/Transaktionen des verteilten Datenbanksystems entsprechende Nachrichten des Peer-2-Peer Kommunikationsprotokolls bzw. die jeweiligen Daten werden in entsprechenden Nachrichten gespeichert. Dabei ist beispielsweise unter einem Speichern der Transaktionen in dem verteilten Datenbanksystem ein Übergeben einer entsprechenden Nachricht an die Peer-2-Peer Kommunikationsinfrastruktur, die das Peer-2-Peer Kommunikationsprotokoll implementiert, zu verstehen. Auch kann beispielsweise hierfür bzw. anstelle des verteilten Datenbanksystems eine Peer-2-Peer Schnittstelle oder eine Peer-2-Peer Applikation genutzt werden, um die entsprechenden Transaktionen bzw. Nachrichten zu speichern und/oder zu übermitteln.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse), elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst) oder eine Kombination der genannten Möglichkeiten. Das Sicherheitsmodul kann dabei beispielsweise kryptographische Schlüssel oder ein Geheimnis (z. B. eine Zeichenfolge) umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server verstanden werden, die jeweils außerhalb der Blockkette angeordnet sind und kein Teil der Infrastruktur des verteilten Datenbanksystems sind bzw. eine separate getrennte Infrastruktur bilden. Bei einem Gerät handelt es sich beispielsweise um ein Fertigungsgerät und/oder ein elektromechanisches Gerät und/oder ein elektronisches Gerät und/oder ein Gerät eines Automatisierungsnetzwerkes (z. B. für industrielle technische Anlagen, Fertigungsanlagen, Energie- bzw. Ressourcenverteilungsanlagen), diese Geräte sind insbesondere nicht in der Lage direkt mit dem verteilten Datenbanksystem (direkt) zu kommunizieren. Entsprechend kann beispielsweise ein Knoten ein Gerät, ein Rechner, ein virtuelles Gerät oder ein virtualisierter Rechner sein.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden. Beispielsweise können über diesen Kanal Transaktionen/Nachrichten schneller verschickt werden und eine Bestätigung über diesen Datenaustausch im verteilten Datenbanksystem gespeichert werden. Damit können beispielsweise wichtige und/oder zeitkritische Transaktionen bzw. Nachrichten (z. B. Steuerbefehle bzw. Steuertransaktionen) mit höherer Geschwindigkeit an ein entsprechendes Ziel (z. B. ein Gerät) übertragen werden und dabei z. B. die langsamere Datenübertragung des verteilten Datenbanksystems (z. B. bei der Replikation der Datenblöcke/Transaktionen) vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das (erste) und einem Empfänger/Ziel (z. B. das Gerät, das die Steuerbefehle ausführen, verarbeiten oder auswerten soll) ausgetauscht ohne, dass weitere Knoten und/oder Geräte des verteilten Datenbanksystems in diesem Datenaustausch involviert sind. Hingegen können bei einem separaten Kommunikationskanal Knoten und/oder Geräte des verteilten Datenbanksystems beispielsweise in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion oder Bestätigungstransaktion) in dem verteilten Datenbanksystem gespeichert (z. B. in Datenblöcken des verteilten Datenbanksystems). Das Ergebnis der Datenübertragung kann beispielsweise eine Bestätigung der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung des Empfangs der Nachricht/Transaktion sein und/oder, dass die Nachricht/Transaktion und z. B. deren Steuerbefehle vom Ziel/Empfänger verarbeitet werden können (z. B. eine Bestätigung der Ausführbarkeit durch das Ziel). Dies kann beispielsweise wiederum in einer Transaktion (z. B. in einer Ausführbarkeitsbestätigungstransaktion) gespeichert werden. Alternativ oder zusätzlich wird die Ausführbarkeitsbestätigungstransaktion in dem verteilten Datenbanksystem gespeichert. Die Ausführbarkeitsbestätigungstransaktion umfasst dabei beispielsweise einen eindeutigen Identifizierer für das Gerät, das in der Lage ist die Steuerbefehle auszuführen und/oder kann beispielsweise angeben, wann die Steuerbefehle der Nachricht/Transaktion spätestens ausgeführt werden. Alternativ oder zusätzlich umfasst die Ausführbarkeitsbestätigungstransaktion beispielsweise Daten über die Ausführung z. B. wie gut bzw. zu welchem Grad die Steuerbefehle abgearbeitet werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen, um z. B. eine Bearbeitung eines Werksstückes zu dokumentieren).

Alternativ oder zusätzlich umfasst die Ausführbarkeitsbestätigungstransaktion beispielsweise gerätespezifische Daten (z. B. Typ des Gerätes; aktueller Gerätezustand wie z. B. Betriebsbereit, Wartung notwendig, Fehlerzustand des entsprechenden Gerätes; Seriennummer des Gerätes; Standort des Gerätes; eine Prüfsumme/Hash der ausgeführten Steuerbefehle, die beispielsweise mit Hilfe der genannten Erfindung berechnet wurde; verwendete Werkzeuge; verwendete Materialien oder eine Kombination der genannten Daten) des entsprechenden Gerätes (z. B. des Ziels/Empfängers), die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalt eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von einer einzigen Nachricht beschränkt.

Der separate und/oder direkte Kommunikationskanal ist dahingehend vorteilhaft um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher oder kritischer Priorität) genutzt wird. Beispielsweise kann anhand der Ausführungsanforderungen (z. B. es sind zeitkritische Steuerbefehle Priorität Steuerbefehle für eine Echtzeitanwendung) bestimmt werden, ob es sich um entsprechende Steuerbefehle handelt, die über einen entsprechenden separaten Kommunikationskanal und/oder direkten Kommunikationskanal übertragen werden sollen. Alternativ oder zusätzlich kann das Bestimmungsmodul beispielsweise beim Bestimmen der Nachrichtensteuerungsdatensatz entsprechende Anweisungen für eine Datenübertragung der Nachricht bestimmen.

Unter einem "Objekt" können im Zusammenhang mit der Erfindung beispielsweise ein physikalisches Objekt, physische Güter, ein Werkstück (z. B. ein Motorenteil oder ein Triebwerksteil oder elektronisches Bauteil oder eine Platine mit elektronischen Bauteilen), ein Zwischenprodukt bei der Fertigung, Rohstoffe (z. B. Diamanten, Erdöl), Nahrungsmittel (z. B. Milch oder Bananen) oder Geräte (z. B. elektrische Geräte, elektromechanische Geräte, elektronische Geräte oder mechatronische Geräte) verstanden werden.

Unter "individuellen Merkmalen" (oder z. B. nur als Merkmale bezeichnet) können im Zusammenhang mit der Erfindung beispielsweise Merkmale (z. B. in Form von Daten) verstanden werden, die durch einen Sensor von oder über das Objekt erfasst werden können und beispielsweise einer physikalischen Größe entsprechen können (z. B. Wellenlänge des Lichtes). Die individuellen Merkmale sind dabei beispielsweise objektindividuelle Merkmale, d. h. z. B. dass diese Merkmale bzw. Daten einer einmaligen Kombination aus einen Folge von Einsen und Nullen (digitaler Fingerabdruck oder eine Art Unique Identifier) in Form von binärcodierten Daten entspricht, die z. B. einem entsprechenden Objekt bzw. dem Objekt fest zugeordnet werden können. Bei den individuellen Merkmalen kann es sich beispielsweise um Oberflächenmerkmale (z. B. Kratzer, Oberflächenunebenheiten) des Objektes handeln. Alternativ oder zusätzlich kann es sich bei den individuellen Merkmalen z. B. um spektroskopische Daten über das Objekt handeln (z. B. gemessene Spektren, hyperspektrale Bilder). Beispielsweise kann es sich bei dem Objekt um Edelsteine, Rohöl oder Lebensmittel handeln, von denen z. B. mittels eines Erfassungsgerätes in Form eines Spektroskopes ein Spektrum für das Objekt oder eine vorgegebene Position (z. B. eine vorgegebene Fläche und/oder Position) des Objektes erfasst wird. Insofern kann es sich bei den individuellen Merkmalen beispielsweise in spektroskopische individuelle Merkmale handeln. Bei den individuellen Merkmalen kann es sich beispielsweise auch um Merkmale handeln, die z. B. von dem Objekt nicht entfernbar sind, ohne das Objekt dabei zu beschädigen oder zu verändern. Entsprechende Merkmale können beispielsweise als intrinsische individuelle Merkmale des Objektes bezeichnet werden.

Bei den individuellen Merkmalen kann es sich beispielsweise auch um individuelle Merkmale eines Rauschsignals handeln, das z. B. durch das Erfassungsgerät (z. B. eine Oszilloskop) erfasst wird. Handelt es sich bei dem Objekt beispielsweise um ein elektronisches Bauteil, so kann beispielsweise über eine Schnittstelle des Objektes ein objektindividuelles Rauschsignal oder ein objektindividuelles Signal (z. B. ein Signalgeber, der ein unveränderbares spezifisches Signal erzeugt, das beispielsweise einmalig konfigurierbar ist) erfasst werden. Bei diesem Rauschsignal können beispielsweise Amplitude des Raussignals für bestimmte Widerstände und/oder Dämpfungen erfasst und/oder berücksichtigt werden. Auch kann beispielsweise ein vorgegebenes Testsignal durch das Objekt bereitgestellt werden und hierbei ggf. Signalverzerrungen für die individuellen Merkmale berücksichtigt werden. Alternativ oder zusätzlich kann beispielsweise das Erfassungsgerät ein Testsignal senden, das z. B. durch vorgegebene Schaltkreise des Objektes übertragen/gesendet wird. Beispielsweise erzeugt das Objekt bzw. die entsprechenden Schaltkreise des Objektes eine Antwort, die z. B. das Testsignal umfasst, wobei die Antwort an das Erfassungsgerät übermittelt wird. Es wird dann beispielsweise der individuelle Einfluss der Schaltkreise auf das Testsignal durch das Erfassungsgerät als die individuellen Merkmale erfasst. Dieser individuelle Einfluss kann beispielsweise eine Verzerrung des Testsignals sein. Entsprechend kann es sich bei den individuellen Merkmalen beispielsweise um individuelle elektronische Merkmale handeln. Auch kann es sich beispielsweise bei den individuellen Merkmalen um akustische Merkmale des Objektes handeln (z. B. Motorengeräusche, Betriebsgeräusche). Damit beispielsweise das Erfassungsgerät die individuellen Merkmale möglichst einfach erfassen kann, wird die Art und Weise und der Ort (z. B. kann als Konfiguration bezeichnet werden) am Objekt beispielsweise durch einen Objektdatensatz vorgegeben. Dieser Objektdatensatz kann beispielsweise durch eine Datenbank (z. B. einem verteilten Datenbanksystem) bereitgestellt werden oder dieser Objektdatensatz ist dem Objekt mittels eines dem Objekt beigelegten Datenspeicher für das Erfassungsmodul oder für das Erfassungsgerät abrufbar. Das Objekt kann beispielsweise auch den Datenspeicher umfassen. Der Objektdatensatz kann dabei beispielsweise Informationen umfassen, welche Art von Messung (z. B. optisch, spektral, akustisch, elektrisch, optoakustisch, multispektral optoakustisch), mit welcher Art von Sensor (z. B. Mikrofon, Ultraschallsensor, Infraschallsensor, spektrale Messsysteme, optoakustische Messsysteme, optoakustische Messsysteme), an welchem Ort, über welchen Zeitraum und mit welchen Messparametern (z. B. Dämpfung; Signalfilter wie Hochpass, Tiefpass, Bandpass, Frequenzen, Wellenlängen) durchzuführen sind, um die individuellen Merkmale zu erfassen.

Alternativ kann beispielsweise für gleichartige Objekte (z. B. Werkstücke des gleichen Typs) die entsprechenden Informationen, die für eine Erfassung der individuellen Merkmale notwendig sind, fest vorgegeben werden. Beispielsweise wird bei einem Objekt in Form eines Werkstückes die Unterseite des Objektes erfasst oder es sind beispielsweise Markierungen am Objekt angebracht, damit das Objekt die entsprechenden Positionen am Objekt findet und die individuellen Merkmale erfassen kann. Diese fest vorgegebenen Informationen können beispielsweise für entsprechend gleichartige Objekte in einem Datenbanksystem (z. B. dem verteilten Datenbanksystem) gespeichert sein oder in entsprechenden Geräten fest vorkonfiguriert sein.

Unter einer "objektindividuellen Charakteristik" (oder z. B. nur als Charakteristik bezeichnet) können im Zusammenhang mit der Erfindung beispielsweise verarbeitete (z. B. durch eine Datenverarbeitung) individuelle Merkmale verstanden werden, die dabei insbesondere derart verarbeitet werden, dass die individuelle Charakteristik reproduzierbar für die gleichen individuellen Merkmale erzeugbar ist. Insbesondere können hierbei Toleranzwerte berücksichtigt werden, um z. B. Messtoleranzen oder Messungenauigkeiten des Erfassungsgerätes auszugleichen. Bei der objektindividuellen Charakteristik handelt es sich beispielsweise um einen digitalen Fingerabdruck für das Objekt. Der digitale Fingerabdruck wird beispielsweise mittels eines Algorithmus für digitale Fingerabdrücke (z. B. Rabin's fingerprinting algorithm) berechnet. Handelt es sich bei den individuellen Merkmalen beispielsweise um ein Signal oder Rauschsignal, so können das Signal/Rauschverhältnis, Phase des Signals, Frequenzen, Wellenlängeninformationen, Frequenzamplituden verwendet werden. Auch können beispielsweise die individuellen Merkmale z. B. hinsichtlich Wellenlängen und Amplituden bei Spektren ausgewertet werden. Bei hyperspektralen Bildern kann beispielsweise für die jeweiligen Wellenlängen der Bilder die Intensität der Wellenlänge an einer oder mehreren Bildpositionen bzw. Positionen am Objekt ausgewertet werden (bzw. in den entsprechenden erfassten Bildern).

Bevor beispielsweise die entsprechende Charakteristik für die entsprechenden individuellen Merkmale berechnet werden, können z. B. die individuellen Merkmale vorverarbeitet werden, um die Messungenauigkeiten zu kompensieren. Beispielsweise liegen Messwerte der individuellen Merkmale in einem möglichen Wertebereich (z. B. 1 bis 100). Dieser Wertebereich wird beispielsweise in vorgegebene Intervalle eingeteilt, z. B. 5 Werteintervalle (1-20, 21-40, 41-60, 61-80, 81 - 100). Den einzelnen Werteintervallen werden dann intervallspezifische Werte zugewiesen (z. B. 1-20: A, 21-40: B, 41-60: C, 61-80: D, 81 - 100: E). Wird beispielweise ein Messwert der individuellen Merkmale ausgewertet oder vorverarbeitet, so wird z. B. überprüft in welchem Werteintervall der konkrete Messwert liegt und der intervallspezifische Werte für die Berechnung des digitalen Fingerabdruckes verwendet. Für die Werte 1 und 100 wäre beispielsweise "AE" das Ergebnis. Auch können beispielsweise andere Verfahren verwendet werden. Dies sind beispielsweise Mittelwertverfahren oder gleitende Mittelwertverfahren. Die entsprechenden ggf. vorverarbeiteten individuellen Merkmale werden dann z. B. als Eingabeparameter für einen Algorithmus zum berechnen des digitalen Fingerabdruckes verwendet. Alternativ oder zusätzlich kann beispielsweise eine der erwähnten Varianten der Vorverarbeitung/Verarbeitung auf die Daten (individuelle Merkmale und/oder objektindividuelle Merkmale) angewendet werden, die zur Ermittlung oder Bereitstellung oder Berechnung des ersten kryptographischen Schlüssels dienen. Alternativ kann beispielsweise die erläuterte Vorverarbeitung/Verarbeitung für die entsprechenden Daten (z. B. die individuelle Merkmale und/oder objektindividuelle Merkmale und/oder objektindividuellen Charakteristik) verwendet werden, bevor diese auch für andere Zwecke verwendet werden. Beispielsweise können anhand dieser derart verarbeiteten Daten die kryptographische Prüfsumme berechnet werden, indem diese Daten z. B. als Geheimnis bei der Berechnung der kryptographischen Prüfsumme verwendet werden (z. B. ist dies für das Gerät oder Überprüfungsgerät einsetzbar).

Unter "Nachrichten" können im Zusammenhang mit der Erfindung beispielsweise Nachrichten eines Kommunikationsprotokolls und/oder Transaktionen eines Datenbanksystems (z. B. eines verteilten Datenbanksystems) verstanden werden. Eine Nachricht kann beispielsweise der Datenstruktur entsprechen oder eine Nachricht kann die Datenstruktur umfassen. Die entsprechende Nachricht kann beispielsweise auch die entsprechende kryptographische Prüfsumme umfassen.

Unter einer "Datenstruktur" kann im Zusammenhang mit der Erfindung beispielsweise eine Nachricht oder eine Transaktion verstanden werden. Alternativ umfasst beispielsweise eine Nachricht oder eine Transaktion eine entsprechende Datenstruktur. Beispielsweise umfassen ggf. die Datenstruktur, die Nachricht oder die Transaktion eine entsprechende kryptographische Prüfsumme für die Datenstruktur.

Unter einem "kryptographischer Schlüssel", beispielsweise der erste kryptographische Schlüssel und/oder der zweite kryptographische Schlüssel und/oder der dritte kryptographische Schlüssel, kann im Zusammenhang mit der Erfindung beispielsweise ein symmetrischer kryptographischer Schlüssel oder ein privater Schlüssel eines asymmetrischen kryptographischen Schlüsselpaar oder ein öffentlicher Schlüssel eines asymmetrisches kryptographisches Schlüsselpaares verstanden werden.

Unter "Ziel" kann im Zusammenhang mit der Erfindung beispielsweise ein Gerät oder ein Empfänger, an den mittels eines Kommunikationsprotokolls eine Nachricht übertragen werden soll.

Unter "Priorität einer Nachricht" kann im Zusammenhang mit der Erfindung beispielsweise die Art und Weise und/oder in welcher Reihenfolge eine entsprechende Nachricht von einem Knoten/Gerät verarbeitet und/oder weitergesendet wird. Eine hohe Priorität bedeutet dabei beispielsweise, dass eine entsprechende Nachricht möglichst schnell und/oder effizient im Vergleich zu Nachrichten mit geringerer Priorität verarbeitet werden sollen. Mit anderen Worten wird eine Nachricht mit einer hohen Priorität gegenüber einer Nachricht mit einer niedrigeren Priorität bevorzugt.

Beispielsweise kann die von der Erfindung genutzte Datenstruktur noch weitere Daten umfassen, wie beispielsweise Steuerbefehle, um z. B. einen Weitertransport oder eine Weiterverarbeitung des Objektes zu steuern, wenn z. B. mit der Erfindung festgestellt wurde, dass das Objekt authentisch ist bzw. dem Objekt entspricht, für das z. B. bereits eine entsprechende Datenstruktur (z. B. mit einer Prüfsumme) z. B. in einem verteilten Datenbanksystem gespeichert wurde.

Mit der Erfindung ist es insbesondere möglich eine dezentrale (blockkettenbasierte) Infrastruktur zu realisieren, die reale bzw. physische Güter (z. B. Objekte) durch eine digitale Infrastruktur verwaltet und deren Verarbeitung (z. B. Herstellung, Transport und Bestätigung deren Authentizität) gesteuert wird. Häufig werden beispielsweise für die physischen Objekte digitale Zwillinge erzeugt, um z. B. die Weiterverarbeitung eines Objektes (z. B. eines Werkstücks) zu steuern und/oder deren Transport und Arbeitsschritte zu dokumentieren. Beispielsweise können Daten über den digitalen Zwilling in der Datenstruktur gespeichert werden. Wird beispielsweise ein solches Objekt ausgeliefert, besteht ein Bedarf oder eine Notwendigkeit überprüfen zu können, ob das Objekt tatsächlich das Objekt ist, das dem digitalen Zwilling zugeordnet ist. Um diese Aufgabe zu lösen, werden beispielsweise durch das Erfassungsgerät die individuellen Merkmale des Objektes erfasst. Bei den individuellen Merkmalen kann es sich beispielsweise um Oberflächenstrukturen des Objektes handeln, wenn das Objekt beispielsweise ein Werkstück ist, das mittels Zerspanung gefertigt wurde. Hierbei können beispielsweise an vorgegebenen Positionen des Objektes durch das Erfassungsgerät (z. B. ein Oberflächenerfassungsgerät wie beispielsweise ein 3D-Oberflächenscanner oder eine Oberflächenkamera) die individuellen Merkmale erfasst werden, wobei es sich beispielsweise in einem solchen Fall bei den individuellen Merkmalen, um individuelle Oberflächenmerkmale des Objektes handelt. Es ist beispielsweise auch denkbar, dass ein digitaler Fingerabdruck in Form der individuellen Merkmale in das Objekt eingearbeitet wurde. Dieser Fingerabdruck bzw. die digitalen Merkmale sind beispielsweise mit dem bloßen Auge und/oder ohne Kenntnisse über die Art und Position nicht feststellbar oder nur mit erheblichem technischen Aufwand feststellbar. Entsprechend können beispielsweise die Informationen, um die individuellen Merkmale zu erfassen in einem geschützten Speicher des Gerätes liegen, sodass kein Zugriff durch Unbefugte auf diese Informationen stattfinden kann. Bei dem eingearbeiteten Fingerabdruck kann es sich beispielsweise um Oberflächenunebenheiten handeln, die während der Fertigung des Objektes erzeugt werden. Alternativ oder zusätzlich kann der Fingerabdruck durch das Aufbringen von Farben oder Partikeln sein, wobei beispielsweise die Farben oder Partikel derart aufgebracht werden, dass ein individuellen Spektrum für das Objekt erzeugt wird. Hierzu können beispielsweise unterschiedliche Farben/Partikel über die Oberfläche des Objektes verteilt werden, sodass das beispielsweise ein geometrisches Spektrum erzeugt wird, damit z. B. an bestimmten Positionen des Objektes ein vorgegebenes Spektrum gemessen werden kann. Das Spektrum bzw. die Farben/Partikel sind beispielsweise derart gewählt, dass diese nicht im durch das menschliche Auge sichtbaren Spektrum liegen. Dies kann beispielsweise ein Spektrum sein, das jenseits der 800 nm (z. B. Wellenlängen > 800 nm wie ein Wellenlängenbereich zwischen 800 nm und 1000 nm) liegt.

Bei den individuellen Merkmalen kann es sich beispielsweise auch um andere Merkmale als Oberflächenmerkmale handeln. Beispielsweise kann es sich bei den individuellen Merkmalen um spektroskopische Daten über das Objekt handeln. Beispielsweise kann es sich bei dem Objekt um Edelsteine, Rohöl oder Lebensmittel handeln, von denen z. B. mittels eines Erfassungsgerätes in Form eines Spektroskopes ein Spektrum für das Objekt oder eine vorgegebene Position (z. B. eine vorgegebene Fläche und/oder Position) des Objektes erfasst wird. Insofern kann es sich bei den individuellen Merkmalen beispielsweise in spektroskopische individuelle Merkmale handeln. Bei den individuellen Merkmalen kann es sich beispielsweise auch um individuelle Merkmale eines Rauschsignals handeln, das z. B. durch das Erfassungsgerät (z. B. eine Oszilloskop) erfasst wird. Handelt es sich bei dem Objekt beispielsweise um ein elektronisches Bauteil, so kann beispielsweise über eine Schnittstelle des Objektes ein objektindividuelles Rauschsignal oder ein objektindividuelles Signal (z. B. ein Signalgeber, der ein unveränderbares spezifisches Signal erzeugt, das beispielsweise einmalig konfigurierbar ist) erfasst werden. Bei diesem Rauschsignal können beispielsweise Amplitude des Raussignals für bestimmte Widerstände und/oder Dämpfungen erfasst und/oder berücksichtigt werden. Auch kann beispielsweise ein vorgegebenes Testsignal durch das Objekt bereitgestellt werden und hierbei ggf. Signalverzerrungen für die individuellen Merkmale berücksichtigt werden. Alternativ oder zusätzlich kann beispielsweise das Erfassungsgerät ein Testsignal senden, das z. B. durch vorgegebene Schaltkreise des Objektes übertragen/gesendet wird. Beispielsweise erzeugt das Objekt bzw. die entsprechenden Schaltkreise des Objektes eine Antwort, die z. B. das Testsignal umfasst, wobei die Antwort an das Erfassungsgerät übermittelt wird. Es wird dann beispielsweise der individuelle Einfluss der Schaltkreise auf das Testsignal durch das Erfassungsgerät als die individuellen Merkmale erfasst. Dieser individuelle Einfluss kann beispielsweise eine Verzerrung des Testsignals sein. Entsprechend kann es sich bei den individuellen Merkmalen beispielsweise um individuelle elektronische Merkmale handeln.

Abhängig von dem Objekt und/oder einer entsprechenden Konfiguration/Festlegung kann es sich somit bei den individuellen Merkmalen beispielsweise um individuelle Oberflächenmerkmale und/oder individuelle spektroskopische Merkmale und/oder individuelle elektronische Merkmale handeln. Bei den individuellen Merkmalen kann es sich beispielsweise auch um akustische Merkmale, optoakustische Merkmale handeln oder multisprektrale optoakustische Merkmale handeln Die entsprechenden individuellen Merkmale lassen sich beispielsweise reproduzierbar für das Objekt erfassen.

Beim den individuellen Merkmalen kann es sich beispielsweise auch um eine Kombination der genannten Beispiele für individuellen Merkmale handeln.

Unter Verwendung der individuellen Merkmale kann dann beispielsweise die objektindividuelle Charakteristik berechnet werden. Hierbei können beispielsweise Toleranzwerte für die individuellen Merkmale berücksichtigt werden, um beispielsweise eine reproduzierbare objektindividuelle Charakteristik für das Objekt zu erzeugen. Die objektindividuelle Charakteristik ist dahingehend vorteilhaft, um beispielsweise Messungenauigkeiten beim erfassen der individuellen Merkmale zu kompensieren.

Der erste kryptographische Schlüssel lässt sich beispielsweise anhand der individuellen Merkmale und/oder der objektindividuellen Charakteristik berechnen, indem die individuellen Merkmale und/oder die objektindividuelle Charakteristik als Eingabeparameter zur Ableitung eines kryptographischen Schlüssels (z. B. des ersten kryptographischen Schlüssels) dienen. Alternativ oder zusätzlich können die individuellen Merkmale und/oder die objektindividuelle Charakteristik mit einem vorgegebenen Referenzwert verglichen werden und der erste kryptographische Schlüssel nach einer ausreichenden Übereinstimmung mit dem vorgegebenen Referenzwert durch das Kryptographiemodul freigegeben werden. Hierbei ist der erste kryptographische Schlüssel vorzugsweise so lange durch das Kryptographiemodul zugriffsgeschützt (z. B. durch einen Schlüsselspeicher des Kryptographiemoduls oder durch eine kryptographische Verschlüsselung) bis individuelle Merkmale und/oder eine objektindividuelle Charakteristik durch das Erfassungsgerät erfasst bzw. das Berechnungsmodul berechnet wurden, die den vorgegeben Referenzwert einhalten. Der entsprechende Referenzwert ist beispielsweise ebenfalls zugriffsgeschützt.

Mit dem ersten kryptographischen Schlüssel können beispielsweise dann die Datenstruktur digital signiert werden oder in einer Implementierungsvariante kann die digitale Signatur einer Datenstruktur mittels des ersten kryptographischen Schlüssels überprüft werden.

Es ist beispielsweise auch möglich, dass eine Entität (z. B. ein Verarbeitungsgerät/Knoten, das die Datenstruktur für das Objekt erstellt und in dem verteilten Datenbanksystem speichert, oder der Betreiber des Verarbeitungsgerätes/Knotens) die Datenstruktur zusätzlich mit einer weiteren kryptographischen Prüfsumme schützt, wobei die weitere kryptographische Prüfsumme beispielsweise die Transaktionsprüfsumme ist und die kryptographische Prüfsumme z. B. verwendet wird, um festzustellen, ob das Objekt tatsächlich das der Datenstruktur zugeordnete Objekt ist. Die weitere kryptographische Prüfsumme ist beispielsweise durch kryptographische Schlüssel erzeugt worden, die der Entität zugeordnet werden können, indem beispielsweise ein öffentlicher Schlüssel von der Entität bereitgestellt wird, um die weitere kryptographische Prüfsumme überprüfen zu können.

Die Erfindung ist dahingehend vorteilhaft, dass beispielsweise eine Datenstruktur nur digital signiert werden kann, wenn das entsprechende Objekt physisch vorhanden ist. Damit beispielsweise aus dem Gerät zur digitalen Signierung der erste kryptographische Schlüssel durch Unbefugte nicht extrahiert werden kann (z. B. wenn das Objekt vorhanden ist und eine digitale Signierung erfolgt), kann das Gerät beispielsweise entsprechende Sicherungsmaßnahmen umfassen. Dies können beispielsweise ein stabiles Gehäuse sein, das einen Zugriff auf die Bauteile und Speicher des Gerätes unterbindet. Alternativ oder zusätzlich kann das Gerät beispielsweise mittels einer Schutzfolie (z. B. eine Bohrschutzfolie) geschützt sein, die z. B. bei einer Manipulation des Gerätes (z. B. bei einem Aufbrechen/Aufbohren des Gehäuses) ggf. sensible Daten wie den ersten kryptographischen Schlüssel oder Referenzwerte löscht.

Beispielsweise kann die Datenstruktur eine Nachricht sein oder eine Nachricht kann die Datenstruktur umfassen, wobei die Nachricht beispielsweise durch ein verteiltes Datenbanksystem gespeichert werden soll, wobei das verteilte Datenbanksystem beispielsweise eine Blockkette ist und die Datenstruktur eine Transaktion des verteilten Datenbanksystems und die kryptographische Prüfsumme beispielsweise eine Transaktionsprüfsumme ist. Beispielsweise wird der Datenstruktur die kryptographische Prüfsumme angehängt, sodass die Integrität und/oder Herkunft und/oder Authentizität der Datenstruktur und deren Zugehörigkeit zum Objekt überprüft werden kann.

Bei einer ersten Ausführungsform des Gerätes wird die objektindividuelle Charakteristik unter Berücksichtigung vorgegebener Toleranzwerte der individuellen Merkmale berechnet.

Das Gerät ist dahingehend vorteilhaft, um beispielsweise Messungenauigkeiten bei einer Berechnung der Charakteristik zu kompensieren, um für das korrekte Objekt ggf. reproduzierbar die objektindividuelle Charakteristik zu berechnen. Beispielsweise können die Toleranzwerte derart gewählt werden, dass bei spektroskopischen individuellen Merkmale eines Objektes z. B. in Form von Lebensmitteln, kein erster kryptographischer Schlüssel bereitgesellt wird (oder kein gültiger erster kryptographischer Schlüssel bereitgestellt werden kann), wenn das Objekt bzw. die Lebensmittel nicht mehr frisch genug sind. Handelt es sich beispielsweise bei dem Objekt um Bananen, so kann der Toleranzwert für das Spektrum der Oberflächen der Bananen derart gewählt werden, dass bei einem großflächigen Braunwerden der Bananen (z. B. ist im Spektrum ein deutlich verringerte Grünanteil und/oder Gelbanteil vorhanden, so dass z. B. ein entsprechender Referenzwert unterschritten wird), für diese Bananen kein erster kryptographischer Schlüssel bereitgesellt wird (oder kein gültiger erster kryptographischer Schlüssel bereitgestellt werden kann) erzeugt wird. Entsprechend können die Bananen bzw. eine Bananenlieferung mit diesen Bananen an einem Transportpunkt oder bei einem Zwischenhändler nicht mehr als "Frisch" in einer Lieferkette mittels einer Nachricht mit der Datenstruktur oder der Datenstruktur in dem verteilten Datenbanksystem bestätigt/gespeichert werden. Auf die gleiche Weise können beispielsweise andere Objekte im Form von verderblichen Waren mittels Nachrichten/Datenstrukturen in einem verteilten Datenbanksystem überwacht werden. Die entsprechenden Toleranzwerte werden dann entsprechend gewählt, dass ggf. kein erster kryptographischer Schlüssel bereitgestellt wird, wenn die verderblichen Waren z. B. zu stark degeneriert sind (z. B. die Haltbarkeit von Lebensmittelabgelaufen sind oder die Lebensmittel verdorben sind). Alternativ kann beispielsweise beim Überschreiten der Toleranzwerte ein alternativer kryptographischer Schlüssel bereitgestellt werden, anhand dessen nachvollzogen werden kann, an welcher Stelle bei der Dokumentation des Transportes des Objektes die Toleranzwerte überschritten wurden. Mit anderen Worten kann beispielsweise mittels der Toleranzwerte ein Schwellenwert festgelegt werden, bei dessen Überschreitung insbesondere kein entsprechender gültiger erster kryptographischer Schlüssel bereitgestellt wird bzw. keine gültige kryptographische Prüfsumme erstellt wird. Insbesondere kann in einem solchen Fall z. B. ein Toleranzwert einem Schwellenwert entsprechen.

Bei weiteren Ausführungsformen des Gerätes wird beispielsweise anhand der objektindividuellen Charakteristik und/oder der individuellen Merkmale und/oder einer Zeichenfolge der erste kryptographische Schlüssel berechnet. Alternativ kann beispielsweise anstelle des ersten kryptographischen Schlüssels beispielsweise die kryptographische Prüfsumme berechnet werden.

Das Gerät ist dahingehend vorteilhaft, um beispielsweise in Kombination mit der Zeichenfolge (die auch Zeichenkette genannt werden kann) den ersten kryptographischen Schlüssel noch sicherer zu generieren. Beispielsweise wird die objektindividuelle Charakteristik in Kombination mit der Zeichenfolge verwendet, um den ersten kryptographischen Schlüssel bereitzustellen (z. B. um diesen mittels einer Schlüsselableitungsfunktion zu berechnen). Die Zeichenfolge kann dabei geheim sein, und nur innerhalb des Gerätes und/oder des Kryptographiemoduls lesbar und/oder zugreifbar sein, so dass vorzugsweise die Zeichenfolge geräteextern nicht verfügbar ist. Alternativ oder zusätzlich kann die Zeichenfolge derart gewählt werden, dass diese beispielsweise durch einen weiteren kryptographischen Schlüssel vorgegeben wird bzw. der weitere kryptographische Schlüssel ist. Hierbei kann beispielsweise der weitere kryptographische Schlüssel durch einen Betreiber oder eine Maschine vorgegeben sein, die das Objekt verarbeitet bzw. bearbeitet. Dies kann beispielsweise ein öffentlicher Schlüssel sein oder auch ein privater Schlüssel, wobei die Wahl des Schlüssels z. B. vom Vertrauensverhältnis der von den Beteiligten bei der Bearbeitung/Verwaltung des Objektes abhängt. Auch kann die Zeichenfolge funktionsabhängig gewählt werden, um funktionsabhängig einen kryptographischen Schlüssel zu erzeugen (Siehe z. B. nachfolge ausführungsform). Beispielsweise kann auf diese Weise ein kryptographischer Schlüssel erzeugt werden, der dazu verwendet werden kann, um den ersten kryptographischen Schlüssel beim Bereitstellen zu entschlüsseln.

Bei weiteren Ausführungsformen des Gerätes wird beispielsweise anhand der Charakteristik und/oder der individuellen Merkmale und/oder einer Zeichenfolge ein zweiter kryptographischer Schlüssel berechnet, der beispielsweise den ersten kryptographischen Schlüssel entschlüsselt.

Dies ist beispielsweise vorteilhaft, um das Bereitstellen des ersten kryptographischen Schlüssels abzusichern. Der erste kryptographische Schlüssel ist beispielsweise zunächst verschlüsselt und wird erst durch den zweiten kryptographischen Schlüssel entschlüsselt und somit insbesondere nutzbar gemacht.

Bei weiteren Ausführungsformen des Gerätes werden beispielsweise die Charakteristik und/oder die individuellen Merkmale mit einem entsprechenden Referenzwert verglichen und beispielsweise bei einer ausreichend genauen Übereinstimmung der Referenzwerte mit der Charakteristik und/oder der individuellen Merkmale wird der erste kryptographische Schlüssel durch das Kryptographiemodul freigegeben.

Bei weiteren Ausführungsformen des Gerätes umfasst die Datenstruktur einen Objektdatensatz, wobei der Objektdatensatz angibt an welchen geometrischen Stellen und/oder Schnittstellen das Erfassungsgerät die individuellen Merkmale erfassen kann.

Das Gerät ist dahingehend vorteilhaft, um beispielsweise bestimmte ausgewählte Bereiche des Objektes oder auch die Schnittstellen festzulegen, über die die individuellen Merkmale durch das Erfassungsgerät erfasst werden können. Bei den Schnittstellen kann es sich beispielsweise um Schnittstellen des Objektes handeln, wenn es sich beispielsweise bei dem Objekt um ein elektronisches Bauteil handelt.

Bei weiteren Ausführungsformen des Gerätes umfasst der Objektdatensatz beispielsweise die individuellen Merkmale und/oder die objektindividuelle Charakteristik in verschlüsselter Form, wobei beispielsweise die verschlüsselten individuellen Merkmale und/oder die objektindividuelle Charakteristik mittels des ersten kryptographischen Schlüssels oder eines dritten kryptographischen Schlüssels entschlüsselt werden können.

Das Gerät ist dahingehend vorteilhaft, um beispielsweise die Charakteristik durch einen Empfänger (z. B. in Sinne einer Warenlieferung) überprüfbar zu machen, um z. B. festzustellen wie stark die individuellen Merkmale und/oder die objektindividuelle Charakteristik während der Verarbeitung des Objektes variiert haben. Dies ist beispielsweise relevant, wenn das Objekt über einen langen Transportweg transportiert wurde oder bei der Herstellung des Objektes mehrere Herstellungsschritte durchgeführt wurden. In diesen genannten Fällen und anderen Fällen wird für das Objekt eine Datenstruktur erstellt und beispielsweise in einem verteilten Datenbanksystem gespeichert (wie z. B. oben bereits erläutert). Die Datenstruktur kann dabei beispielsweise zusätzlich Informationen über den Fertigungsschritt, Fertigungsbedingungen (Temperaturen bei der Fertigung), verwendete Werkzeuge und verwendete Materialien umfassen. Bei einem Transport kann die Datenstruktur beispielsweise Informationen über die Transportbedingungen (Temperatur für Kühlketten, Positionsinformationen usw.) umfassen. Diese zusätzlichen Informationen können beispielsweise als weitere objektbezogene Daten bezeichnet werden. Beispielsweise kann es sich bei dem Objekt im Falle eines Transportes um einen Transportbehälter handeln, der entsprechende Sensoren und/oder das Gerät umfasst. Bei dem Transportbehälter kann es sich beispielsweise um Transportbehälter für Milch, Edelsteine oder andere Lebensmittel/Materialien handeln. Der Transportbehälter könnte beispielsweise ein erfindungsgemäßes Gerät und ein entsprechendes Erfassungsgerät umfassen.

Bei weiteren Ausführungsformen des Gerätes umfasst der Objektdatensatz beispielsweise weitere objektbezogene Daten wie beispielsweise Messwerte des Objektes, Messwerte über das Objekt, Herstellungsangaben des Objektes, Aufenthaltsorte des Objektes, wobei die weiteren Objektdaten beispielsweise von Sensoren des Gerätes für das Objekt oder durch Sensoren des Objektes erfasst werden, wobei die Sensoren beispielsweise ein GPS-Modul ist und/oder Temperatursensoren und/oder optische Sensoren und/oder akustische Sensoren und/oder optoakustische Sensoren sind, die beispielsweise entsprechende Eigenschaften von dem Objekt erfassen.

Beispielsweise können die Sensorwerte während der Fertigung oder während des Transportes des Objektes erfasst werden und z. B. in dem verteilten Datenbanksystem gespeichert werden (z. B. mittels der Datenstruktur vorzugsweise in Verbindung mit der kryptographischen Prüfsumme).

Bei weiteren Ausführungsformen des Gerätes wird der erste kryptographische Schlüssel und/oder der zweite kryptographische Schlüssel und/oder der dritte kryptographische Schlüssel zusätzlich unter Berücksichtigung mittels einer geheimen Zeichenkette berechnet, und/oder der erste kryptographische Schlüssel und/oder der zweite kryptographische Schlüssel und/oder der dritte kryptographische Schlüssel ein privater Schlüssel eines asymmetrischen Schlüsselpaares ist oder ein symmetrischer Schlüssel ist.

Bei weiteren Ausführungsformen des Gerätes ist die Datenstruktur eine Transaktion eines verteilten Datenbanksystems und die kryptographische Prüfsumme ist die Transaktionsprüfsumme, wobei das verteilte Datenbanksystem beispielsweise eine Blockkette ist, wobei das Gerät beispielsweise als Knoten oder Orakel des verteilten Datenbanksystems ausgebildet ist, wobei die kryptographische Prüfsumme beispielsweise eine digitale Signatur ist.

Gemäß einem weiteren Aspekt betrifft die Erfindung ein Überprüfungsgerät zum Überprüfen einer kryptographischen Prüfsumme einer Datenstruktur umfassend:
- ein Empfangsmodul zum Empfangen einer Datenstruktur, wobei die Datenstruktur mittels einer kryptographischen Prüfsumme geschützt ist;
- ein Erfassungsmodul (110) zum Erfassen individueller Merkmale (M) eines Objektes (O) mittels eines Erfassungsgerätes (A);
- ein Berechnungsmodul (120) zum Berechnen einer objektindividuellen Charakteristik (I) anhand der individuellen Merkmale;
- ein Kryptographiemodul (130) zum Bereitstellen eines kryptographischen Schlüssels anhand der individuellen Merkmale und/oder der objektindividuellen Charakteristik;
- ein Überprüfungsmodul (130) zum Überprüfen der kryptographischen Prüfsumme mittels des kryptographischen Schlüssels, wobei beispielsweise abhängig vom Ergebnis des Überprüfens Steuerdaten bereitgestellt werden.

Die Ausführungsformen des Gerätes können beispielsweise ebenfalls auf das Überprüfungsgerät übertragen werden.

Beispielsweise kann auch zum Überprüfungen der Datenstruktur eine andere Datenstruktur, die mit einer kryptographischen Prüfsumme geschützt wurde z. B. aus einem verteilten Datenbanksystem ausgelesen werden. Diese andere Datenstruktur wurde z. B. mit einem kryptographischen Schlüssel geschützt, der anhand der individuellen Merkmale und/oder der objektindividuellen Charakteristik erzeugt wurde - und somit insbesondere den gleichen kryptographischen Schlüssel erzeugt. Ist beispielsweise der Datenstrukturinhalt der Datenstruktur und der anderen Datenstruktur identisch, so stimmen vorzugsweise die jeweiligen kryptographischen Prüfsummen der Datenstrukturen überein. Für diese Überprüfung kann beispielsweise der entsprechende Datenstrukturinhalt der anderen Datenstruktur ausgelesen werden, um den entsprechenden Datenstrukturinhalt bereitzustellen.

Mit der Erfindung ist es insbesondere möglich eine dezentrale (blockkettenbasierte) Infrastruktur zu realisieren, die reale bzw. physische Güter (z. B. Objekte) durch eine digitale Infrastruktur verwaltet und deren Verarbeitung (z. B. Herstellung, Transport und Bestätigung deren Authentizität) gesteuert wird. Häufig werden beispielsweise für die physischen Objekte digitale Zwillinge erzeugt, um z. B. die Weiterverarbeitung eines Objektes (z. B. eines Werkstücks) zu steuern und/oder deren Transport und Arbeitsschritte zu dokumentieren. Beispielsweise sind Daten über den digitalen Zwilling in der Datenstruktur gespeichert. Wird beispielsweise ein solches Objekt ausgeliefert, besteht ein Bedarf oder eine Notwendigkeit überprüfen zu können, ob das Objekt tatsächlich das Objekt ist, das dem digitalen Zwilling zugeordnet ist. Um diese Aufgabe zu lösen, werden beispielsweise durch das Erfassungsgerät die individuellen Merkmale des Objektes erfasst. Bei den individuellen Merkmalen kann es sich beispielsweise um Oberflächenstrukturen des Objektes handeln, wenn das Objekt beispielsweise ein Werkstück ist, das mittels Zerspanung gefertigt wurde. Hierbei können beispielsweise an vorgegebenen Positionen des Objektes durch das Erfassungsgerät (z. B. ein Oberflächenerfassungsgerät wie beispielsweise ein 3D-Oberflächenscanner oder eine Oberflächenkamera) die individuellen Merkmale erfasst werden, wobei es sich beispielsweise in einem solchen Fall bei den individuellen Merkmalen, um individuelle Oberflächenmerkmale des Objektes handelt. Es ist beispielsweise auch denkbar, dass ein digitaler Fingerabdruck in Form der individuellen Merkmale in das Objekt eingearbeitet wurde. Dieser Fingerabdruck bzw. die digitalen Merkmale sind beispielsweise mit dem bloßen Auge und/oder ohne Kenntnisse über die Art und Position nicht feststellbar oder nur mit erheblichem technischen Aufwand feststellbar. Entsprechend können beispielsweise die Informationen, um die individuellen Merkmale zu erfassen in einem geschützten Speicher des Überprüfungsgerätes liegen, sodass kein Zugriff durch Unbefugte auf diese Informationen stattfinden kann. Bei dem eingearbeiteten Fingerabdruck kann es sich beispielsweise um Oberflächenunebenheiten handeln, die während der Fertigung des Objektes erzeugt werden. Alternativ oder zusätzlich kann der Fingerabdruck durch das Aufbringen von Farben oder Partikeln sein, wobei beispielsweise die Farben oder Partikel derart aufgebracht werden, dass ein individuellen Spektrum für das Objekt erzeugt wird. Hierzu können beispielsweise unterschiedliche Farben/Partikel über die Oberfläche des Objektes verteilt werden, sodass das beispielsweise ein geometrisches Spektrum erzeugt wird, damit z. B. an bestimmten Positionen des Objektes ein vorgegebenes Spektrum gemessen werden kann. Das Spektrum bzw. die Farben/Partikel sind beispielsweise derart gewählt, dass diese nicht im durch das menschliche Auge sichtbaren Spektrum liegen. Dies kann beispielsweise ein Spektrum sein, das jenseits der 800 nm liegt. Es ist beispielsweise möglich, dass die individuellen Merkmale, die in Form des Fingerabdrucks in das Objekt eingearbeitet werden einen öffentlichen Schlüssel oder die Daten bereitstellen, um einen öffentlichen Schlüssel zu berechnen. Bei dem öffentlichen Schlüssel handelt es sich beispielsweise um den ersten kryptographischen Schlüssel. Es ist beispielsweise auch denkbar, dass elektronische Schaltungen derart miteinander verschaltet werden, dass ein konfigurierbarer Fingerabdruck bzw. individuelle Merkmale für das Objekt erzeugt werden, wenn es sich beispielsweise bei dem Objekt um eine elektronisches Bauteil handelt oder das Objekt ein elektronisches Bauteil umfasst.

Bei den individuellen Merkmalen kann es sich beispielsweise auch um andere Merkmale als Oberflächenmerkmale handeln. Beispielsweise kann es sich bei den individuellen Merkmalen um spektroskopische Daten über das Objekt handeln. Beispielsweise kann es sich bei dem Objekt um Edelsteine, Rohöl oder Lebensmittel handeln, von denen z. B. mittels eines Erfassungsgerätes in Form eines Spektroskopes ein Spektrum für das Objekt oder eine vorgegebene Position (z. B. eine vorgegebene Fläche und/oder Position) des Objektes erfasst wird. Insofern kann es sich bei den individuellen Merkmalen beispielsweise in spektroskopische individuelle Merkmale handeln. Bei den individuellen Merkmalen kann es sich beispielsweise auch um individuelle Merkmale eines Rauschsignals handeln, das z. B. durch das Erfassungsgerät (z. B. eine Oszilloskop) erfasst wird. Handelt es sich bei dem Objekt beispielsweise um ein elektronisches Bauteil, so kann beispielsweise über eine Schnittstelle des Objektes ein objektindividuelles Rauschsignal erfasst werden. Bei diesem Rauschsignal können beispielsweise Amplitude des Raussignals für bestimmte Widerstände und/oder Dämpfungen erfasst und/oder berücksichtigt werden. Auch kann beispielsweise ein vorgegebenes Testsignal durch das Objekt bereitgestellt werden und hierbei ggf. Signalverzerrungen für die individuellen Merkmale berücksichtigt werden. Alternativ oder zusätzlich kann beispielsweise das Erfassungsgerät ein Testsignal senden, das z. B. durch vorgegebene Schaltkreise des Objektes übertragen/gesendet wird. Beispielsweise erzeugt das Objekt bzw. die entsprechenden Schaltkreise des Objektes eine Antwort, die z. B. das Testsignal umfasst, wobei die Antwort an das Erfassungsgerät übermittelt wird. Es wird dann beispielsweise der individuelle Einfluss der Schaltkreise auf das Testsignal durch das Erfassungsgerät als die individuellen Merkmale erfasst. Dieser individuelle Einfluss kann beispielsweise eine Verzerrung des Testsignals sein. Entsprechend kann es sich bei den individuellen Merkmalen beispielsweise um individuelle elektronische Merkmale handeln.

Abhängig von dem Objekt und/oder einer entsprechenden Konfiguration/Festlegung kann es sich somit bei den individuellen Merkmalen beispielsweise um individuelle Oberflächenmerkmale und/oder individuelle spektroskopische Merkmale und/oder individuelle elektronische Merkmale handeln. Bei den individuellen Merkmalen kann es sich beispielsweise auch um akustische Merkmale, optoakustische Merkmale handeln oder multisprektrale optoakustische Merkmale handeln Die entsprechenden individuellen Merkmale lassen sich beispielsweise reproduzierbar für das Objekt erfassen.

Unter Verwendung der individuellen Merkmale kann dann beispielsweise die objektindividuelle Charakteristik berechnet werden. Hierbei können beispielsweise Toleranzwerte für die individuellen Merkmale berücksichtigt werden, um beispielsweise eine reproduzierbare objektindividuelle Charakteristik für das Objekt zu erzeugen. Die objektindividuelle Charakteristik ist dahingehend vorteilhaft, um beispielsweise Messungenauigkeiten beim Erfassen der individuellen Merkmale zu kompensieren.

Der erste kryptographische Schlüssel lässt sich beispielsweise anhand der individuellen Merkmale und/oder der objektindividuellen Charakteristik berechnen, indem die individuellen Merkmale und/oder die objektindividuelle Charakteristik als Eingabeparameter zur Ableitung eines kryptographischen Schlüssels (z. B. des ersten kryptographischen Schlüssels) dienen. Alternativ oder zusätzlich können die individuellen Merkmale und/oder die objektindividuelle Charakteristik mit einem vorgegebenen Referenzwert verglichen werden und der erste kryptographische Schlüssel nach einer ausreichenden Übereinstimmung mit dem vorgegebenen Referenzwert durch das Kryptographiemodul freigegeben werden. Hierbei ist der erste kryptographische Schlüssel vorzugsweise so lange durch das Kryptographiemodul zugriffsgeschützt (z. B. durch einen Schlüsselspeicher des Kryptographiemoduls oder durch eine kryptographische Verschlüsselung) bis individuelle Merkmale und/oder eine objektindividuelle Charakteristik durch das Erfassungsgerät erfasst bzw. das Berechnungsmodul berechnet wurden, die den vorgegeben Referenzwert einhalten. Der entsprechende Referenzwert ist beispielsweise ebenfalls zugriffsgeschützt.

Mit dem ersten kryptographischen Schlüssel kann beispielsweise die kryptographische Prüfsumme (z. B. eine digitale Signatur) einer Datenstruktur werden und dieser Schlüssel bzw. die Erzeugung/Bereitstellung des Schlüssels an das Objekt gebunden ist, kann damit implizit auch bestätigt werden, dass es sich um das Objekt handelt, das die Datenstruktur mit der Prüfsumme geschützt hat. Hierzu wird beispielsweise die kryptographische Prüfsumme mittels eines kryptographischen Schlüssels (z. B. der erste kryptographische Schlüssel des vorher beschriebenen Gerätes oder Überprüfungsgerätes mit den jeweiligen Ausführungsbeispielen) für die Datenstruktur berechnet. Abhängig von der Implementierung wird beispielsweise ein öffentlicher Schlüssel dem Überprüfungsgerät übermittelt und dieser Schlüssel dann im Überprüfungsgerät zugriffsgeschützt gespeichert. Der öffentliche Schlüssel ist beispielsweise zugehörig zu einem privaten Schlüssel, mit dem die kryptographische Prüfsumme berechnet wurde. In einer solchen Variante, kann beispielsweise der öffentliche Schlüssel durch den Vergleich mit den Referenzwerten freigegeben werden oder durch ein Aufbringen des Fingerabdrucks auf das Objekt, objektgebunden bereitgestellt werden. Es ist beispielsweise auch denkbar, dass es sich für die Erzeugung und Überprüfung der kryptographischen Prüfsumme der Datenstruktur um kryptographische Schlüssel handelt, die mittels eines symmetrischen kryptographischen Verfahrens erzeugt wurden.

Es ist beispielsweise auch möglich, dass eine Entität (z. B. ein Verarbeitungsgerät/Knoten, das die Datenstruktur für das Objekt erstellt und in dem verteilten Datenbanksystem speichert, oder der Betreiber des Verarbeitungsgerätes/Knotens) die Datenstruktur zusätzlich mit einer weiteren kryptographischen Prüfsumme schützt, wobei die weitere kryptographische Prüfsumme beispielsweise die Transaktionsprüfsumme ist und die kryptographische Prüfsumme z. B. verwendet wird, um festzustellen, ob das Objekt tatsächlich das der Datenstruktur zugeordnete Objekt ist. Die weitere kryptographische Prüfsumme ist beispielsweise durch kryptographische Schlüssel erzeugt worden, die der Entität zugeordnet werden können, indem beispielsweise ein öffentlicher Schlüssel von der Entität bereitgestellt wird, um die weitere kryptographische Prüfsumme überprüfen zu können.

Die Erfindung ist dahingehend vorteilhaft, dass beispielsweise eine digitale Signatur der Datenstruktur überprüft werden kann, wenn das entsprechende Objekt physisch vorhanden ist. Insbesondere wird hierdurch eine stärkere Zuordnung eines Objektes zu der dem jeweiligen Objekt zugehörigen Datenstrukturen erreicht. Damit beispielsweise aus dem Überprüfungsgerät zur digitalen Signierung der erste kryptographische Schlüssel durch Unbefugte nicht extrahiert werden kann, kann das Überprüfungsgerät beispielsweise entsprechende Sicherungsmaßnahmen umfassen. Dies können beispielsweise ein stabiles Gehäuse sein, das einen Zugriff auf die Bauteile und Speicher des Überprüfungsgerätes unterbindet. Alternativ oder zusätzlich kann das Überprüfungsgerät beispielsweise mittels einer Schutzfolie (z. B. eine Bohrschutzfolie) geschützt sein, die z. B. bei einer Manipulation des Überprüfungsgerätes (z. B. bei einem Aufbrechen/Aufbohren des Gehäuses) ggf. sensible Daten wie den ersten kryptographischen Schlüssel oder Referenzwerte löscht. Mittels des Prüfergebnisses der Prüfung der kryptographischen Prüfsumme bzw. der Steuerdaten kann dann beispielsweise bestätigt werden, dass die Datenstruktur zu dem entsprechenden Objekt zugehörig ist bzw. die Daten der Datenstruktur, die das Objekt betreffen.

Beispielsweise kann die Datenstruktur eine Nachricht sein oder eine Nachricht kann die Datenstruktur umfassen, wobei die Nachricht beispielsweise durch ein verteiltes Datenbanksystem gespeichert werden soll, wobei das verteilte Datenbanksystem beispielsweise eine Blockkette ist und die Datenstruktur eine Transaktion des verteilten Datenbanksystems und die kryptographische Prüfsumme beispielsweise eine Transaktionsprüfsumme ist. Beispielsweise wird der Datenstruktur die kryptographische Prüfsumme angehängt, sodass die Integrität und/oder Herkunft und/oder Authentizität der Datenstruktur und deren Zugehörigkeit zum Objekt überprüft werden kann.

Bei einer ersten Ausführungsform des Überprüfungsgerätes wird die objektindividuelle Charakteristik unter Berücksichtigung vorgegebener Toleranzwerte der individuellen Merkmale berechnet.

Das Überprüfungsgerät ist dahingehend vorteilhaft, um beispielsweise Messungenauigkeiten bei einer Berechnung der Charakteristik zu kompensieren, um für das korrekte Objekt ggf. reproduzierbar die objektindividuelle Charakteristik zu berechnen. Beispielsweise können die Toleranzwerte derart gewählt werden, dass bei spektroskopischen individuellen Merkmale eines Objektes z. B. in Form von Lebensmitteln, kein erster kryptographischer Schlüssel bereitgesellt wird (oder kein gültiger erster kryptographischer Schlüssel bereitgestellt werden kann), wenn das Objekt bzw. die Lebensmittel nicht mehr frisch genug sind. Handelt es sich beispielsweise bei dem Objekt um Bananen, so kann der Toleranzwert für das Spektrum der Oberflächen der Bananen derart gewählt werden, dass bei einem großflächigen Braunwerden der Bananen, für diese Bananen kein erster kryptographischer Schlüssel bereitgesellt wird (oder kein gültiger erster kryptographischer Schlüssel bereitgestellt werden kann) erzeugt wird. Entsprechend können die Bananen bzw. eine Bananenlieferung mit diesen Bananen an einem Transportpunkt oder bei einem Zwischenhändler nicht mehr als "Frisch" in einer Lieferkette mittels einer Nachricht mit der Datenstruktur oder der Datenstruktur in dem verteilten Datenbanksystem bestätigt werden, da sich kein gültiger Schlüssel mehr für die Prüfung der kryptographischen Prüfsumme erzeugen bzw. bereitstellen lässt. Auf die gleiche Weise können beispielsweise andere Objekte im Form von verderblichen Waren mittels Nachrichten/Datenstrukturen in einem verteilten Datenbanksystem überwacht werden. Die entsprechenden Toleranzwerte werden dann entsprechend gewählt, dass ggf. kein erster kryptographischer Schlüssel bereitgestellt wird, wenn die verderblichen Waren z. B. zu stark degeneriert sind (z. B. die Haltbarkeit von Lebensmittelabgelaufen sind oder die Lebensmittel verdorben sind). Mit anderen Worten kann beispielsweise mittels der Toleranzwerte ein Schwellenwert festgelegt werden, bei dessen Überschreitung insbesondere kein entsprechender gültiger erster kryptographischer Schlüssel bereitgestellt wird bzw. keine gültige kryptographische Prüfsumme erstellt wird. Insbesondere kann in einem solchen Fall z. B. ein Toleranzwert einem Schwellenwert entsprechen.

Bei weiteren Ausführungsformen des Überprüfungsgerätes wird beispielsweise anhand der objektindividuellen Charakteristik und/oder der individuellen Merkmale und/oder einer Zeichenfolge der erste kryptographische Schlüssel berechnet. Alternativ kann beispielsweise anstelle des ersten kryptographischen Schlüssels beispielsweise die kryptographische Prüfsumme berechnet werden.

Das Überprüfungsgerät ist dahingehend vorteilhaft, um beispielsweise in Kombination mit der Zeichenfolge (die auch Zeichenkette genannt werden kann) den ersten kryptographischen Schlüssel noch sicherer zu generieren. Beispielsweise wird die objektindividuelle Charakteristik in Kombination mit der Zeichenfolge verwendet, um den ersten kryptographischen Schlüssel bereitzustellen (z. B. um diesen mittels einer Schlüsselableitungsfunktion zu berechnen). Die Zeichenfolge kann dabei geheim sein, und nur innerhalb des Überprüfungsgerätes und/oder des Kryptographiemoduls lesbar und/oder zugreifbar sein, so dass vorzugsweise die Zeichenfolge geräteextern nicht verfügbar ist. Alternativ oder zusätzlich kann die Zeichenfolge derart gewählt werden, dass diese beispielsweise durch einen weiteren kryptographischen Schlüssel vorgegeben wird bzw. der weitere kryptographische Schlüssel ist. Hierbei kann beispielsweise der weitere kryptographische Schlüssel durch einen Betreiber oder eine Maschine vorgegeben sein, die das Objekt verarbeitet bzw. bearbeitet. Dies kann beispielsweise ein öffentlicher Schlüssel sein oder auch ein privater Schlüssel, wobei die Wahl des Schlüssels z. B. vom Vertrauensverhältnis von den Beteiligten bei der Bearbeitung/Verwaltung des Objektes abhängt. Auch kann die Zeichenfolge z. B. funktionsabhängig gewählt werden, um funktionsabhängig einen kryptographischen Schlüssel zu erzeugen (Siehe z. B. nachfolge Ausführungsform). Beispielsweise kann auf diese Weise ein kryptographischer Schlüssel erzeugt werden, der dazu verwendet werden kann, um den ersten kryptographischen Schlüssel beim Bereitstellen zu entschlüsseln.

Bei weiteren Ausführungsformen des Überprüfungsgerätes wird beispielsweise anhand der Charakteristik und/oder der individuellen Merkmale und/oder einer Zeichenfolge ein zweiter kryptographischer Schlüssel berechnet, der beispielsweise den ersten kryptographischen Schlüssel entschlüsselt.

Bei weiteren Ausführungsformen des Überprüfungsgerätes werden beispielsweise die Charakteristik und/oder die individuellen Merkmale mit einem entsprechenden Referenzwert verglichen und beispielsweise bei einer ausreichend genauen Übereinstimmung der Referenzwerte mit der Charakteristik und/oder der individuellen Merkmale wird der erste kryptographische Schlüssel durch das Kryptographiemodul freigegeben.

Bei weiteren Ausführungsformen des Überprüfungsgerätes umfasst die Datenstruktur einen Objektdatensatz, wobei der Objektdatensatz angibt an welchen geometrischen Stellen und/oder Schnittstellen das Erfassungsgerät die individuellen Merkmale erfassen kann.

Das Überprüfungsgerät ist dahingehend vorteilhaft, um beispielsweise bestimmte ausgewählte Bereiche des Objektes oder auch die Schnittstellen festzulegen, über die die individuellen Merkmale durch das Erfassungsgerät erfasst werden können. Bei den Schnittstellen kann es sich beispielsweise um Schnittstellen des Objektes handeln, wenn es sich beispielsweise bei dem Objekt um ein elektronisches Bauteil handelt.

Bei weiteren Ausführungsformen des Überprüfungsgerätes umfasst der Objektdatensatz beispielsweise die individuellen Merkmale und/oder die objektindividuelle Charakteristik in verschlüsselter Form, wobei beispielsweise die verschlüsselten individuellen Merkmale und/oder die objektindividuelle Charakteristik mittels des ersten kryptographischen Schlüssels oder eines dritten kryptographischen Schlüssels entschlüsselt werden können.

Das Überprüfungsgerät ist dahingehend vorteilhaft, um beispielsweise die Charakteristik durch einen Empfänger (z. B. in Sinne einer Warenlieferung) überprüfbar zu machen, z. B. festzustellen wie stark die individuellen Merkmale und/oder die objektindividuelle Charakteristik während der Verarbeitung des Objektes variiert haben. Dies ist beispielsweise relevant, wenn das Objekt über einen langen Transportweg transportiert wurde oder bei der Herstellung des Objektes mehrere Herstellungsschritte durchgeführt wurden. In diesen genannten Fällen und anderen Fällen wird für das Objekt eine Datenstruktur erstellt und beispielsweise in einem verteilten Datenbanksystem gespeichert (wie z. B. oben bereits erläutert). Die Datenstruktur kann dabei beispielsweise zusätzlich Informationen über den Fertigungsschritt, Fertigungsbedingungen (Temperaturen bei der Fertigung), verwendete Werkzeuge und verwendete Materialien umfassen. Bei einem Transport kann die Datenstruktur beispielsweise Informationen über die Transportbedingungen (Temperatur für Kühlketten, Positionsinformationen usw.) umfassen. Diese zusätzlichen Informationen können beispielsweise als weitere objektbezogene Daten bezeichnet werden. Beispielsweise kann es sich bei dem Objekt im Falle eines Transportes um einen Transportbehälter handeln, der entsprechende Sensoren und/oder das Überprüfungsgerätes umfasst. Bei dem Transportbehälter kann es sich beispielsweise um Transportbehälter für Milch, Edelsteine oder andere Lebensmittel/Materialien handeln. Der Transportbehälter könnte beispielsweise ein erfindungsgemäßes Gerät und/oder ein erfindungsgemäßes Überprüfungsgerät und/oder ein entsprechendes Erfassungsgerät umfassen.

Bei weiteren Ausführungsformen des Überprüfungsgerätes umfasst der Objektdatensatz beispielsweise weitere objektbezogene Daten wie beispielsweise Messwerte des Objektes, Messwerte über das Objekt, Herstellungsangaben des Objektes, Aufenthaltsorte des Objektes, wobei die weiteren Objektdaten beispielsweise von Sensoren des Überprüfungsgerätes für das Objekt oder durch Sensoren des Objektes erfasst werden, wobei die Sensoren beispielsweise ein GPS-Modul ist und/oder Temperatursensoren und/oder optische Sensoren und/oder akustische Sensoren und/oder optoakustische Sensoren sind, die beispielsweise entsprechende Eigenschaften von dem Objekt erfassen.

Bei weiteren Ausführungsformen des Überprüfungsgerätes wird der erste kryptographische Schlüssel und/oder der zweite kryptographische Schlüssel und/oder der dritte kryptographische Schlüssel zusätzlich unter Berücksichtigung mittels einer geheimen Zeichenkette berechnet, und/oder der erste kryptographische Schlüssel und/oder der zweite kryptographische Schlüssel und/oder der dritte kryptographische Schlüssel ein privater Schlüssel eines asymmetrischen Schlüsselpaares ist oder ein symmetrischer Schlüssel ist.

Bei weiteren Ausführungsformen des Überprüfungsgerätes ist die Datenstruktur eine Transaktion eines verteilten Datenbanksystems und die kryptographische Prüfsumme ist die Transaktionsprüfsumme, wobei das verteilte Datenbanksystem beispielsweise eine Blockkette ist, wobei das Überprüfungsgerät beispielsweise als Knoten oder Orakel des verteilten Datenbanksystems ausgebildet ist, wobei die kryptographische Prüfsumme beispielsweise eine digitale Signatur ist.

Gemäß einem weiteren Aspekt betrifft die Erfindung ein Schreibsteuerungsmodul aufweisend:
- eine Kommunikationsschnittstelle zum Übertragen von Nachrichten, wobei die Nachrichten beispielsweise an ein verteiltes Datenbanksystem übertragen werden;
- ein Überprüfungsmodul, wobei
   - das Überprüfungsmodul eine Datenschreibkonfiguration lädt, die angibt unter welchen Bedingungen die Nachrichten in das verteilte Datenbanksystem geschrieben werden,
   - das Überprüfungsmodul überprüft, ob die Bedingungen zum Schreiben der Nachrichten in das verteilte Datenbanksystem erfüllt sind;
- ein Übertragungssteuerungsmodul, wobei
   - das Übertragungssteuerungsmodul abhängig von einem Prüfergebnis des Überprüfungsmoduls eine Übertragung einer Nachricht an das verteilte Datenbanksystem mittels der Kommunikationsschnittstelle steuert.

Mit der Erfindung ist es insbesondere möglich eine dezentrale (blockkettenbasierte) Infrastruktur zu realisieren, bei der beispielsweise festgelegt und gesteuert werden kann, unter welchen Bedingungen eine Nachricht in das verteilte Datenbanksystem geschrieben wird. Hierdurch lässt sich beispielsweise vermeiden, dass in ein verteiltes Datenbanksystem geschrieben wird, das sich z. B. gerade in einem Fehlerzustand oder eingeschränkten Betriebszustand befindet. Hierzu wird beispielsweise die Datenschreibkonfiguration ausgewertet, die z. B. vorgeben kann, dass Nachrichten bzw. Transaktionen eines vorgegeben anderen Knotens ebenfalls in dem verteilten Datenbanksystem vorhanden sind, um diese relativ aktuell sind. Dies kann beispielsweise durch die Datenschreibkonfiguration mittels eines Zeitfensters vorgegeben werden, das vorzugsweise eine maximal erlaubtes Alter von den Nachrichten bzw. den Transaktionen der anderen Knoten vorgibt. Die Nachrichten bzw. die Transaktionen der anderen Knoten sind für diese Überprüfung beispielsweise mit einem Zeitstempel und einer Prüfsumme (z. B. eine Transaktionsprüfsumme insbesondere in der Form einer digitalen Signatur) versehen bzw. umfassen eine solche Prüfsumme. Mittels der Prüfsumme lässt sich ggf. mittels eines öffentlichen Schlüssels feststellen, ob die entsprechenden Nachrichten/Transaktionen tatsächlich von den entsprechenden vorgegeben Knoten stammen.

Bei weiteren Ausführungsformen des Schreibsteuerungsmoduls gibt die Datenschreibkonfiguration vor, dass ein oder mehrere vorgegebene Knoten bereits Nachrichten in das verteilte Datenbanksystem geschrieben haben, wobei beispielsweise die Bedingungen der Datenschreibkonfiguration vorgeben, dass Nachrichten der Knoten bereits in dem vorteilten Datenbanksystem vorhanden sind.

Bei weiteren Ausführungsformen des Schreibsteuerungsmoduls werden beim Überprüfen der Bedingungen der Datenschreibkonfiguration die Prüfsummen von Nachrichten einer oder mehrerer Knoten überprüft, wobei beispielsweise die Nachrichten zum Überprüfen im verteilten Datenbanksystem gespeichert sind, wobei beispielsweise die Bedingungen, welche die Nachrichten für das Überprüfen erfüllen sollen durch die Datenschreibkonfiguration festgelegt ist.

Bei weiteren Ausführungsformen des Schreibsteuerungsmoduls wählt das Schreibsteuerungsmodul eine oder mehrere mit einer Prüfsumme geschützte Nachrichten des verteilten Datenbanksystems aus, wobei beispielsweise entsprechende Daten über die entsprechenden Nachrichten durch die Sendevorrichtung gespeichert werden,

Das Schreibsteuerungsmodul ist dahingehend vorteilhaft, um beispielsweise mittels der ausgewählten Nachrichten festzustellen, ob das verteilte Datenbanksystem manipuliert wurde oder die Zieladresse durch eine Manipulation in einer Routingtabelle verändert wurde. Auch kann hierdurch eine Veränderung einer Blockkette z. B. über einen Fork erkannt werden. Hierzu umfassen die Daten beispielsweise die Transaktionen mit den Nachrichten, Blocknummern der Nachrichten und die Prüfsummen des Blockes und/oder der Transaktionen mit den Nachrichten, wobei beispielsweise eine Nachricht auch eine Transaktion sein kann.

Bei weiteren Ausführungsformen des Schreibsteuerungsmoduls überprüft das Schreibsteuerungsmodul beim Überprüfen der Bedingungen der Datenschreibkonfiguration die ausgewählten Nachrichten oder einen Teil der ausgewählten Nachrichten anhand der gespeicherten Nachrichten.

Bei weiteren Ausführungsformen des Schreibsteuerungsmoduls umfassen die Bedingungen der Datenschreibkonfiguration eine, mehrere oder eine Kombination folgende Parameter umfassen:
- ein Zeitfenster das für zu überprüfende und/oder ausgewählte Nachrichten einzuhalten ist,
- die Knoten sind durch die entsprechenden Knoteninformationen vorgegeben,
- die Nachrichten der entsprechenden Knoten müssen einen vorgegebenen Inhalt umfassen,
- die Prüfsummen der zu überprüfende Nachrichten müssen vorgegeben kryptographischen Bedingungen entsprechen.

Gemäß einem weiteren Aspekt betrifft die Erfindung eine Übermittlungsvorrichtung zum Steuern einer Übermittlung einer Nachricht aufweisend:
- ein Nachrichtendatenerfassungsmodul, wobei
   - das Nachrichtendatenerfassungsmodul einen Prioritätsdatensatz mit einer Priorität von einer Nachricht ausliest,
   - das Nachrichtendatenerfassungsmodul ein Ziel der Nachricht ausliest,
   - der Priorität Übermittlungsparameter für die Nachrichtenübermittlung zugeordnet sind;
- ein Bestimmungsmodul, wobei
   - das Bestimmungsmodul anhand des Ziels und der Priorität einen Nachrichtensteuerungsdatensatz zum Steuern der Übertragung der Nachricht erzeugt,
   - der Nachrichtensteuerdatensatz der Nachricht zugeordnet wird,
- ein Übertragungsmodul, wobei
   - das Übertragungsmodul die Nachricht abhängig von Nachrichtensteuerungsdatensatz an einen Knoten eines verteilten Datenbanksystems übermittelt,
   - der Knoten durch den Nachrichtensteuerungsdatensatz vorgegeben ist.

Mit der Erfindung ist es insbesondere möglich eine dezentrale (blockkettenbasierte) Infrastruktur zu realisieren, bei der beispielsweise Nachrichten oder Transaktionen, die eine hohe Priorität haben, innerhalb der dezentralen Infrastruktur beschleunigt an ihr Ziel übertragen werden. Dies ist beispielsweise notwendig, damit bei industriellen Anwendungen Nachrichten bzw. Transaktionen die schnell von einem bestimmten bzw. vorgegebenen Knoten (auch als Ziel bezeichnet) verarbeitet werden sollen auch schnell zu diesem übertragen werden. Wird beispielsweise eine Nachricht zur Notabschaltung einer Fertigungsanlage oder ein Alarm von einem Sensor (z. B. ein Rauchmelder oder ein Hitzesensor in einer Fertigungsmaschine) mittels einer dezentrale Infrastruktur an einen Knoten übertragen, der diese Notabschaltung steuert, so ist es notwendig, dass eine entsprechende Nachricht möglichst schnell mittels der dezentrale Infrastruktur an den zu verarbeitenden Knoten übermittelt wird. Um dies zu erreichen, können z. B. Nachrichten mit einer hohen Priorität durch die dezentrale Infrastruktur bzw. das verteilte Datenbanksystem bei der Replikation der Nachrichten bzw. bei der Übertragung der Nachrichten bevorzugt werden. Hierzu können beispielsweise Routen für die dezentrale Infrastruktur vorgegeben werden oder separate Kommunikationskanäle aufgebaut werden, um z. B. die vorgaben einer schnellen Übertragung an das Ziel zu gewährleisten. Um dies zu erreichen können beispielsweise Schnittstellen zur Dateneingabe für das verteilte Datenbanksystem (z. B. Blockketten-Orakel) mit der erfindungsgemäßen Übermittlungsvorrichtung ausgestatten sein. Über diese Schnittstellen können beispielsweise wie oben erwählt Alarmsensoren kommunikativ angebunden sein, damit ggf. die beschriebene Notabschaltung einer Anlage erfolgen kann.

Bei weiteren Ausführungsformen der Übermittlungsvorrichtung umfasst der Nachrichtensteuerungsdatensatz eine Route über mehrere Knoten des verteilten Datenbanksystems, wobei beispielsweise zur Ermittlung der Route die Übermittlungszeit von Nachrichten zwischen den Knoten durch die Knoten an die Übermittlungsvorrichtung übertragen wird und insbesondere die entsprechenden Übermittlungszeiten beim ermitteln des Nachrichtensteuerungsdatensatzes berücksichtigt werden, wobei beispielsweise die Route abhängig von dem Ergebnis des Prüfens (der Priorität) ermittelt wird.

Bei weiteren Ausführungsformen der Übermittlungsvorrichtung umfasst der Nachrichtensteuerungsdatensatz Konfigurationsdaten, wobei beispielsweise die Konfigurationsdaten abhängig vom Ergebnis des Prüfens ermittelt werden, wobei beispielsweise das Übertragungsmodul derart konfiguriert wird, dass zum Übertragen der Nachricht ein separater und/oder direkter Kommunikationskanal zum Ziel aufgebaut wird.

Die Übermittlungsvorrichtung ist dahingehend vorteilhaft, um beispielsweise eine schnelle Übertragung für die entsprechende Nachricht an das Ziel zu ermöglichen, ohne den Replikationsmechanismus des verteilten Datenbanksystems zu nutzen und z. B. nur den Empfang der Nachricht durch eine Bestätigungstransaktion zu dokumentieren und/oder das Absenden der Nachricht durch eine entsprechende Sendetransaktion zu dokumentieren. Dies ist vorteilhaft, um z. B. die Nachricht möglichst schnell an das Ziel zu übertragen, jedoch mit der Bestätigungstransaktion und/oder der Sendetransaktion dennoch die Übertragung und den Empfang sicher durch das verteilte Datenbanksystem zu dokumentieren. Hierzu umfassen die Sendetransaktion beispielsweise Sende-Datum und/oder Sende-Uhrzeit und/oder Ziel (z. B. die Zieladresse), eine Bestätigung über den Verbindungsaufbau zum Ziel und/oder eine Bestätigung der Übertragung an das Ziel, wobei die Bestätigung der Übertragung z. B. vom Ziel durch eine Prüfsumme wie eine digitale Signatur mittels einer entsprechenden Bestätigungsnachricht an die Übermittlungsvorrichtung bestätigt wurde (auch diese Bestätigungsnachricht kann ggf. in der Sendetransaktion gespeichert sein). Analog kann beispielsweise die Bestätigungstransaktion aufgebaut sein. Diese umfasst z. B. ein Empfangs-Datum und/oder eine Empfangs-Uhrzeit und/oder Sendeadresse (z. B. die Adresse der Übermittlungsvorrichtung), eine Bestätigung über den Verbindungsaufbau vom Sender und/oder eine Bestätigung der Übertragung vom Sender, wobei die Bestätigung der Übertragung (z. B. vom Sender durch eine Prüfsumme, wie eine digitale Signatur) mittels einer entsprechenden Bestätigungsnachricht an die Übermittlungsvorrichtung bestätigt wurde (auch diese Bestätigungsnachricht kann ggf. in der Sendetransaktion gespeichert sein). Die Nachricht selbst kann beispielsweise wieder mittels einer Transaktionsprüfsumme geschützt sein. Der Inhalt der Nachricht kann z. B. ebenfalls in der Bestätigungstransaktion gespeichert sein.

Bei weiteren Ausführungsformen der Übermittlungsvorrichtung wird nach Empfang der Nachricht durch das Ziel eine Bestätigungstransaktion in dem verteilten Datenbanksystem gespeichert.

Die Übermittlungsvorrichtung ist dahingehend vorteilhaft, um beispielsweise zu dokumentieren, wie schnell die Datenübertragung für Nachrichten zu einem Ziel erfolgt. Hierbei können beispielsweise die jeweiligen Übertragungszeiten zwischen den einzelnen Knoten des verteilten Datenbanksystems dokumentiert werden. Mittels der Bestätigungstransaktionen kann dann die Übermittlungsvorrichtung berechnen, welche Route durch die Infrastruktur des verteilten Datenbanksystems angemessen ist für die Priorität.

Bei weiteren Ausführungsformen der Übermittlungsvorrichtung umfasst der Nachrichtensteuerungsdatensatz zusätzlich einen vorkonfigurierten Datensatz, der den Übertragungsweg der Nachricht an das Ziel zumindest zu teil vorgibt.

Die Übermittlungsvorrichtung ist dahingehend vorteilhaft, um beispielsweise eine Route zumindest teilweise vorzugeben. Auch können beispielsweise weitere Parameter hier berücksichtigt werden, die bei einer Übertragung zwischen den Knoten bzw. bei der Route berücksichtigt werden sollen. So kann beispielsweise durch diese Parameter vorgegeben sein, dass Knoten in einer bestimmten/vorgegebenen Region (z. B. vorgegebene Länder wie Nordkorea, Andorra, Eritrea oder Iran) für die Übertragung unzulässig sind und beispielsweise nicht in der Route verwendet werden dürfen. Alternativ kann vorgegeben sein, dass nur Knoten für die Route verwendet werden dürfen, die in einer bestimmten Region (z. B. EU, USA, Kasachstan) liegen. Auch können z. B. Vorgaben festgelegt werden, dass nur die entsprechenden Knoten für die Route verwenden werden dürfen, die über eine bestimmte Hardwareausstattung (z. B. redundante Komponenten, breitbandige Netzwerkanbindung, kryptographische Sicherheitsmechanismen, Zugriffsschutz vor unbefugten) verfügen. Insbesondere kann dadurch erreicht werden, dass bis zur Validierung der Bestätigungstransaktion, die entsprechende Nachricht nicht validiert ist und somit z. B. ein zeitintensives Lösen eines Proof-of-Work (kryptographischen Puzzles) für die Übertragung an das Ziel nicht notwendig ist, was insbesondere für schnell zu übertragende Nachrichten mit hoher Priorität vorteilhaft ist. Das Bestätigen des Datenaustausches mittels der Bestätigungstransaktion und/oder der Sendetransaktion ist wiederum nicht zeitkritisch und diese Transaktionen können auch regulär validiert werden.

Bei weiteren Ausführungsformen der Übermittlungsvorrichtung umfasst beispielsweise die Übermittlungsvorrichtung ein Schreibsteuerungsmodul z. B. nach einem der Anspruche 7 - 11, wobei beispielsweise durch das Schreibsteuerungsmodul der Prioritätsdatensatz mit der Priorität vorgegeben wird und beispielsweise die Nachricht eine Datenstruktur (z. B. mit Sensordaten) umfasst, wobei beispielsweise Prüfsummen Transaktionsprüfsummen sind und/oder beispielsweise das verteilte Datenbanksystem eine Blockkette ist und/oder die Nachricht eine validierte oder unvalidierte Transaktion eines verteilten Datenbanksystems ist.

Gemäß einem weiteren Aspekt betrifft die Erfindung ein System aufweisend
- Erzeugungsmodul zum Erzeugen von Nachrichten für ein Objekt, wobei die Nachricht beispielsweise einen Prioritätsdatensatz mit einer Priorität und eine Datenstruktur umfassen;
- ein Gerät zum Berechnen einer kryptographischen Prüfsumme für die Datenstruktur aufweisend:
   - ein Erfassungsmodul (110) zum Erfassen individueller Merkmale (M) des Objektes (O) mittels eines Erfassungsgerätes (A);
   - ein Berechnungsmodul (120) zum Berechnen einer objektindividuellen Charakteristik (I) anhand der individuellen Merkmale;
   - ein Kryptographiemodul (130) zum Bereitstellen eines kryptographischen Schlüssels anhand der individuellen Merkmale und/oder der objektindividuellen Charakteristik;
   - ein Schutzmodul (130) zum kryptographischen Schützen der Datenstruktur mittels einer kryptographischen Prüfsumme, wobei das Schutzmodul die kryptographische Prüfsumme mittels des kryptographischen Schlüssels berechnet;
- ein Schreibsteuerungsmodul aufweisend:
   - eine Kommunikationsschnittstelle zum Übertragen von Nachrichten, wobei die Nachrichten beispielsweise an ein verteiltes Datenbanksystem übertragen werden;
   - ein Überprüfungsmodul, wobei
      - das Überprüfungsmodul eine Datenschreibkonfiguration lädt, die angibt unter welchen Bedingungen die Nachrichten in das verteilte Datenbanksystem geschrieben werden,
      - das Überprüfungsmodul überprüft, ob die Bedingungen zum Schreiben der Nachrichten das verteilte Datenbanksystem erfüllt sind;
   - ein Übertragungssteuerungsmodul, wobei
      - das Übertragungssteuerungsmodul abhängig von einem Prüfergebnis des Überprüfungsmoduls eine Übertragung einer Nachricht an das verteilte Datenbanksystem mittels der Kommunikationsschnittstelle steuert,
- eine Übermittlungsvorrichtung zum Steuern einer Übermittlung der Nachricht über mehrere Knoten aufweisend:
   - ein Nachrichtendatenerfassungsmodul, wobei
      - das Nachrichtendatenerfassungsmodul einen Prioritätsdatensatz mit einer Priorität von einer Nachricht ausliest,
      - das Nachrichtendatenerfassungsmodul ein Ziel der Nachricht ausliest,
      - der Priorität Übermittlungsparameter für die Nachrichtenübermittlung zugeordnet sind;
   - ein Bestimmungsmodul, wobei
      - das Bestimmungsmodul anhand des Ziels und der Priorität einen Nachrichtensteuerungsdatensatz zum Steuern der Übertragung der Nachricht erzeugt,
      - der Nachrichtensteuerdatensatz der Nachricht zugeordnet wird,
   - ein Übertragungsmodul, wobei
      - das Übertragungsmodul die Nachricht abhängig von Nachrichtensteuerungsdatensatz an einen Knoten eines verteilten Datenbanksystems übermittelt,
      - der Knoten durch den Nachrichtensteuerungsdatensatz vorgegeben ist,
- beispielsweise die Kommunikationsschnittstelle mittels Übermittlungsvorrichtung Nachricht übermittelt.

Gemäß einem weiteren Aspekt betrifft die Erfindung ein Verfahren zum rechnergestützten Berechnen einer kryptographischen Prüfsumme mit folgenden Verfahrensschritten:
- Erfassen individueller Merkmale (M) eines Objektes (O) mittels eines Erfassungsgerätes (A);
- Berechnen einer objektindividuellen Charakteristik anhand der individuellen Merkmale;
- Bereitstellen eines ersten kryptographischen Schlüssels anhand der individuellen Merkmale und/oder der objektindividuellen Charakteristik;
- kryptographisches Schützen einer Datenstruktur mittels einer kryptographischen Prüfsumme, wobei die kryptographische Prüfsumme mittels des ersten kryptographischen Schlüssels berechnet wird.

Bei weiteren Ausführungsformen des Verfahrens umfasst das Verfahren weitere Verfahrensschritte, um die funktionalen Merkmale oder um weitere Merkmale des Gerätes bzw. dessen Ausführungsformen zu realisieren.

Gemäß einem weiteren Aspekt betrifft die Erfindung ein Verfahren zum rechnergestützten Überprüfen einer kryptographischen Prüfsumme mit folgenden Verfahrensschritten:
- Empfangen einer Datenstruktur, wobei die Datenstruktur mittels einer kryptographischen Prüfsumme geschützt ist;
- Erfassen individueller Merkmale (M) eines Objektes (O) mittels eines Erfassungsgerätes (A);
- Berechnen einer objektindividuellen Charakteristik anhand der individuellen Merkmale;
- Bereitstellen eines ersten kryptographischen Schlüssels anhand der individuellen Merkmale und/oder der objektindividuellen Charakteristik;
- Überprüfen der kryptographischen Prüfsumme mittels des ersten kryptographischen Schlüssels.

Bei weiteren Ausführungsformen des Verfahrens umfasst das Verfahren weitere Verfahrensschritte, um die funktionalen Merkmale oder um weitere Merkmale des Überprüfungsgerätes bzw. dessen Ausführungsformen zu realisieren.

Gemäß einem weiteren Aspekt betrifft die Erfindung ein Verfahren zum rechnergestützten Steuern einer Datenübertragung mit folgenden Verfahrensschritten:
- Übertragen von Nachrichten, wobei die Nachrichten beispielsweise an ein verteiltes Datenbanksystem übertragen werden;
- Überprüfen einer Datenschreibkonfiguration, wobei
   - die Datenschreibkonfiguration angibt unter welchen Bedingungen die Nachrichten in das verteilte Datenbanksystem geschrieben werden,
   - überprüft wird, ob die Bedingungen zum Schreiben der Nachrichten das verteilte Datenbanksystem erfüllt sind;
- Übertragen der Nachrichten an ein verteiltes Datenbanksystem mittels einer Kommunikationsschnittstelle, wobei
   - das Übertragen abhängig von einem Prüfergebnis des Überprüfens der Datenschreibkonfiguration gesteuert wird.

Bei weiteren Ausführungsformen des Verfahrens umfasst das Verfahren weitere Verfahrensschritte, um die funktionalen Merkmale oder um weitere Merkmale des Schreibsteuerungsmoduls bzw. dessen Ausführungsformen zu realisieren.

Gemäß einem weiteren Aspekt betrifft die Erfindung ein Verfahren zum rechnergestützten Steuern einer Übermittlung von Nachrichten über mehrere Knoten mit folgenden Verfahrensschritten:
- Auslesen einer Nachricht eines Prioritätsdatensatzes mit einer Priorität von einer Nachricht, wobei
   - ein Ziel der Nachricht ausgelesen wird,
   - der Priorität Übermittlungsparameter für die Nachrichtenübermittlung zugeordnet sind;
- Bestimmen eines Nachrichtensteuerungsdatensatz zum Steuern der Übertragung der Nachricht anhand der Priorität und des Ziels, wobei
   - der Nachrichtensteuerdatensatz der Nachricht zugeordnet wird,
- Übermittelt der Nachricht abhängig von Nachrichtensteuerungsdatensatz an einen Knoten eines verteilten Datenbanksystems, wobei
   - der Knoten beispielsweise durch den Nachrichtensteuerungsdatensatz vorgegeben ist.

Bei weiteren Ausführungsformen des Verfahrens umfasst das Verfahren weitere Verfahrensschritte, um die funktionalen Merkmale oder um weitere Merkmale der Übermittlungsvorrichtung bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Gerät und/oder das Schreibsteuerungsmodul und/oder das Überprüfungsgerät und/oder die Übermittlungsvorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Gerät und/oder das Schreibsteuerungsmodul und/oder das Überprüfungsgerät und/oder die Übermittlungsvorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;
- Fig. 6: ein weiteres Ausführungsbeispiel der Erfindung; und
- Fig. 7: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

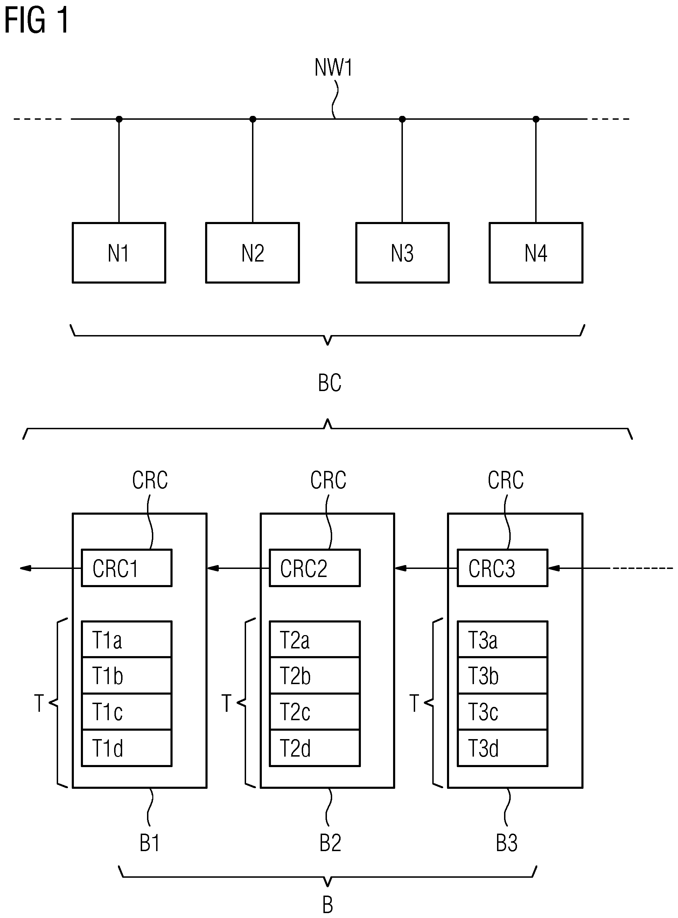

Die Fig. 1 bis Fig. 7 zeigen jeweils Ausführungsbeispiele der unterschiedlichen Aspekte der Erfindung.

Fig. 1 zeigt dabei ein System, das verwendet wird um beispielsweise Sensordaten in einem verteilten Datenbanksystem zu speichern.

Das System kann dabei beispielsweise folgende Merkmale umfassen:
- Erzeugungsmodul zum Erzeugen von Nachrichten für ein Objekt, wobei die Nachricht beispielsweise einen Prioritätsdatensatz mit einer Priorität und eine Datenstruktur umfassen;
- ein Gerät zum Berechnen einer kryptographischen Prüfsumme für die Datenstruktur aufweisend:
   - ein Erfassungsmodul zum Erfassen individueller Merkmale des Objektes mittels eines Erfassungsgerätes;
   - ein Berechnungsmodul zum Berechnen einer objektindividuellen Charakteristik anhand der individuellen Merkmale;
   - ein Kryptographiemodul zum Bereitstellen eines kryptographischen Schlüssels anhand der individuellen Merkmale und/oder der objektindividuellen Charakteristik;
   - ein Schutzmodul zum kryptographischen Schützen der Datenstruktur mittels einer kryptographischen Prüfsumme, wobei das Schutzmodul die kryptographische Prüfsumme mittels des kryptographischen Schlüssels berechnet;
- ein Schreibsteuerungsmodul aufweisend:
   - eine Kommunikationsschnittstelle zum Übertragen von Nachrichten, wobei die Nachrichten beispielsweise an ein verteiltes Datenbanksystem übertragen werden;
   - ein Überprüfungsmodul, wobei
      - das Überprüfungsmodul eine Datenschreibkonfiguration lädt, die angibt unter welchen Bedingungen die Nachrichten in das verteilte Datenbanksystem geschrieben werden,
      - das Überprüfungsmodul überprüft, ob die Bedingungen zum Schreiben der Nachrichten das verteilte Datenbanksystem erfüllt sind;
   - ein Übertragungssteuerungsmodul, wobei
      - das Übertragungssteuerungsmodul abhängig von einem Prüfergebnis des Überprüfungsmoduls eine Übertragung einer Nachricht an das verteilte Datenbanksystem mittels der Kommunikationsschnittstelle steuert,
- eine Übermittlungsvorrichtung zum Steuern einer Übermittlung der Nachricht über mehrere Knoten aufweisend:
   - ein Nachrichtendatenerfassungsmodul, wobei
      - das Nachrichtendatenerfassungsmodul einen Prioritätsdatensatz mit einer Priorität von einer Nachricht ausliest,
      - das Nachrichtendatenerfassungsmodul ein Ziel der Nachricht ausliest,
      - der Priorität Übermittlungsparameter für die Nachrichtenübermittlung zugeordnet sind;
   - ein Bestimmungsmodul, wobei
      - das Bestimmungsmodul anhand des Ziels und der Priorität einen Nachrichtensteuerungsdatensatz zum Steuern der Übertragung der Nachricht erzeugt,
      - der Nachrichtensteuerdatensatz der Nachricht zugeordnet wird,
   - ein Übertragungsmodul, wobei
      - das Übertragungsmodul die Nachricht abhängig von Nachrichtensteuerungsdatensatz an einen Knoten eines verteilten Datenbanksystems übermittelt,
      - der Knoten durch den Nachrichtensteuerungsdatensatz vorgegeben ist,
      - beispielsweise die Kommunikationsschnittstelle mittels Übermittlungsvorrichtung Nachricht übermittelt.

In Fig. 1 sind ein erster Knoten N1, ein zweiter Knoten N2, ein dritter Knoten N3 und ein vierter Knoten N4 gezeigt, die die Knoten der Blockkette BC des verteilten Datenbanksystems bilden, wobei einer der Knoten, z. B. der erste Knoten N1, das Gerät und/oder das Schreibsteuerungsmodul und/oder die Übermittlungsvorrichtung umfasst. Alternativ können unterschiedliche Knoten N1-N4 die einzelnen Komponenten, also das Gerät und/oder das Schreibsteuerungsmodul und/oder die Übermittlungsvorrichtung, jeweils umfassen. Die Knoten sind dabei z. B. über ein erstes Kommunikationsnetzwerk NW1 miteinander verbunden.

Desweiteren zeigt die Fig. 1 Blöcke B, beispielsweise einen ersten Block B1, einen zweiten Block B2 und einen dritten Block B3, einer Blockkette BC, wobei hier insbesondere ein Ausschnitt der Blockkette BC exemplarisch gezeigt ist.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen Hash-Funktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten (Knoten N1, N2, N3, N4 und weiteren Blöcken) realisiert. Bei den Knoten kann es sich beispielsweise um Blockkettenorakel oder vertrauenswürdige Knoten handeln.

Die Knoten sind über das Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blockkette repliziert.

Das Gerät und/oder das Schreibsteuerungsmodul und/oder die Übermittlungsvorrichtung und/oder das Überprüfungsgerät sind können beispielsweise als Komponenten des verteilten Datenbanksystems oder in Varianten einer Kommunikationsinfrastruktur (z. B. ein Peer-2-Peer System, einer verteilten Kommunikationsinfrastruktur) sein. Das Gerät und/oder das Schreibsteuerungsmodul und/oder die Übermittlungsvorrichtung und/oder das Überprüfungsgerät können beispielsweise mittels des verteilten Datenbanksystems miteinander kommunizieren oder in Varianten mittels einer Kommunikationsinfrastruktur (z. B. ein Peer-2-Peer System, einer verteilten Kommunikationsinfrastruktur) miteinander kommunizieren.

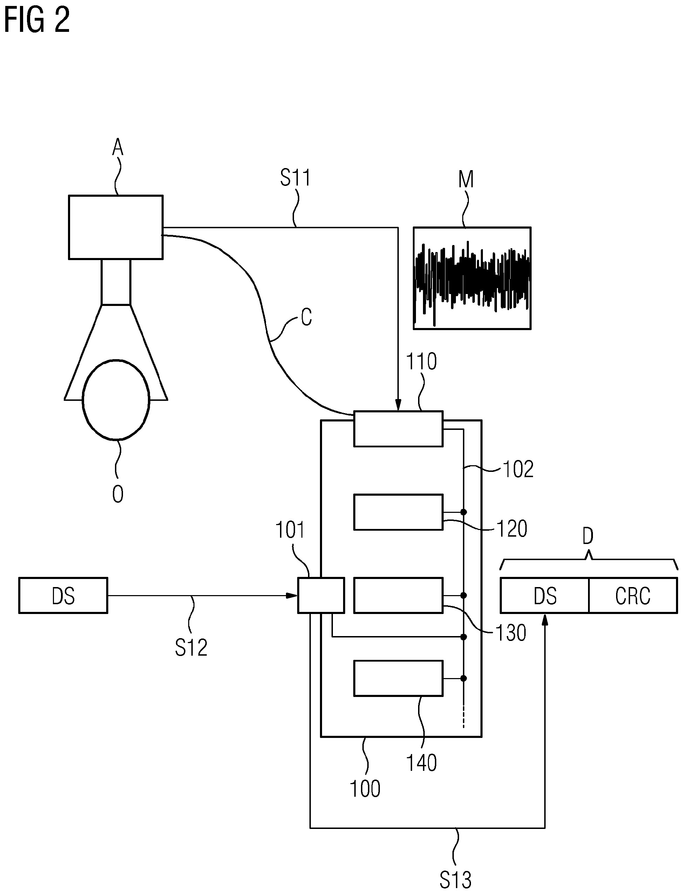

Die Fig. 2 zeigt beispielshaft an einem weiteren Ausführungsbeispiel die Funktionsweise des Gerätes und auch in Varianten des Ausführungsbeispiels die Funktionsweise des Überprüfungsgerätes. Das Gerät und/oder das Überprüfungsgerät können beispielsweise als Vorrichtung bezeichnet werden.

Die Fig. 2 zeigt ein Gerät 100 zum Berechnen einer kryptographischen Prüfsumme CRC für eine Datenstruktur DS, wobei die Datenstruktur DS beispielsweise objektspezifische Daten für ein Objekt O umfasst. Die Datenstruktur DS und die kryptographischen Prüfsumme CRC werden beispielsweise in einem Datensatz D, wobei der Datensatz D beispielsweise als Transaktion in dem verteilten Datenbanksystem gespeichert wird. Hierzu kann die Transaktion eine zusätzliche Prüfsumme (z. B. eine Transaktionsprüfsumme) umfassen, die z. B. mittels eines kryptographischen Schlüssels (z. B. eine privaten kryptographischen Schlüssels) erzeugt wurde, der einer Entität zugeordnet ist oder von dieser genutzt wird. Bei der Entität kann es sich beispielsweise um einen Betreiber eine Messtation oder Verarbeitungsstation handeln, die das Objekt O steuern, verarbeiten oder verwalten. Der Datensatz D kann beispielsweise je nach Implementierung auch eine Nachricht oder Transaktion sein.

Je nach Implementierungsvariante kann der Datenstruktur DS auch dem Datensatz D entsprechen, wenn z. B. die Datenstruktur DS ein Datenfeld umfasst, um die kryptographische Prüfsumme CRC zu speichern oder die kryptographische Prüfsumme der Datenstruktur angehängt wird. Wie bereits erläutert können insbesondere die Datenstruktur DS und/oder der Datensatz D von einer Nachricht oder einer Transaktion gespeichert bzw. umfasst sein. Alternativ kann beispielsweise die Datenstruktur DS und/oder der Datensatz D eine Nachricht oder eine Transaktion sein.

Die Knoten des verteilten Datenbanksystems (z. B. Blockketten-Knoten) und/oder das verteilte Datenbanksystem können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Ein Knoten aus Fig. 1 kann z. B. das Gerät 100 umfassen oder als das Gerät 100 ausgebildet sein oder ein Knoten aus Fig. 1 ist über eine Datenleitung oder Kommunikationsnetzwerk mit dem Gerät 100 verbunden. Analog dazu kann beispielsweise auch ein Überprüfungsgerät zum Überprüfen der kryptographischen Prüfsumme CRC für eine Datenstruktur DS ausgebildet sein.

Das Gerät umfasst zur Erstellung der kryptographischen Prüfsumme CRC ein Erfassungsmodul 110, ein Berechnungsmodul 120, ein Kryptographiemodul 130 und ein Schutzmodul 130 und ein Kommunikationsmodul (z. B. eine Netzwerkschnittstelle) 101, die über einen Bus (z. B. ein PCI Bus, CAN Bus, USB oder Datenleitung) 102 kommunikativ miteinander verbunden sind.

Das Erfassungsmodul 110 ist zum Erfassen individueller Merkmale M des Objektes O mittels eines Erfassungsgerätes A eingerichtet. Hierzu ist das Erfassungsgerät A über eine Datenverbindung (wireless oder kabelgebunden) (z. B. mit USB, LAN, W-LAN, Bluetooth, Firewire) C mit dem Erfassungsgerätes A verbunden. Beispielsweise erfasst/misst das Erfassungsgerät A mittels eines Abtaststrahls S Oberflächenunebenheiten als individuelle Merkmale für das Objekt O.

Das Berechnungsmodul 120 ist zum Berechnen einer objektindividuellen Charakteristik anhand der individuellen Merkmale M eingerichtet. Bei der Berechnung der objektindividuellen Charakteristik können beispielsweise Toleranzwerte berücksichtigt werden, um z. B. Messungenauigkeiten des Erfassungsgerätes A bei der nachfolgend genannten Ermittlung des ersten kryptographischen Schlüssel zu berücksichtigen. Auf das Berechnungsmodul kann beispielsweise in Implementierungsvarianten verzichtet werden, bei dem der kryptographische Schlüssel anhand der individuellen Merkmale bereitgestellt wird.

Das Kryptographiemodul 130 ist zum Bereitstellen eines ersten kryptographischen Schlüssels anhand der individuellen Merkmale und/oder der objektindividuellen Charakteristik eingerichtet.

Das Bereitstellen kann dabei auf unterschiedliche Weise realisiert werden. Es können beispielsweise die individuellen Merkmale und/oder die objektindividuelle Charakteristik mit Referenzwerten vergleichen werden, wobei hier beispielsweise entsprechende Toleranzwerte berücksichtigt werden. Stimmen die individuellen Merkmale und/oder die objektindividuelle Charakteristik mit den Referenzwerten überein (z. B. nach Berücksichtigung der Toleranzwerte), so wird der erste kryptographische Schlüssel z. B. aus einem sicheren Datenspeicher geladen. Der Referenzwert kann beispielsweise während einer Initialisierungsphase und/oder Installationsphase des Gerätes erfasst oder gespeichert werden. Vorzugsweise ist die Initialisierungsphase und/oder oder Installationsphase für das Gerät nur einmalig ausführbar.

Alternativ wird der erste kryptographische Schlüssel anhand der individuellen Merkmale und/oder der objektindividuellen Charakteristik berechnet, indem die individuellen Merkmale und/oder die objektindividuelle Charakteristik als Eingangsdaten für eine Schlüsselableitungsfunktion genutzt werden. Hierbei können auch noch weitere Daten genutzt werden. Beispielsweise kann eine Zeichenfolge (z. B. ein geheimes Passwort) mit den individuellen Merkmalen und/oder der objektindividuellen Charakteristik verknüpft werden, wobei dann beispielsweise diese verknüpften Daten dazu genutzt werden, um mittels einer Schlüsselableitungsfunktion (z. B. PBKDF2) den ersten kryptographischen Schlüssel zu berechnen.

Das Schutzmodul 140 ist zum kryptographischen Schützen einer Datenstruktur mittels der kryptographischen Prüfsumme CRC eingerichtet, wobei das Schutzmodul die kryptographische Prüfsumme CRC mittels des ersten kryptographischen Schlüssels berechnet. Die kryptographische Prüfsumme kann dabei beispielsweise mit einem Keyed-Hash Message Authentication Code (HMAC z. B. unter Verwendung von MD5, SHA1, SHA256). In weiteren Implementierungsvarianten kann die kryptographische Prüfsumme als digitale Signatur oder als digitales Zertifikat realisiert sein, wobei je nach den verwendeten kryptographischen Verfahren (symmetrischer oder asymmetrische Verfahren), der erste kryptographische Schlüssel beispielsweise als privater Schlüssel fungiert um die digitale Signatur zu erzeugen. Zum Überprüfen der digitalen Signatur wird beispielsweise der öffentliche Schlüssel von dem ersten kryptographischen Schlüssel abgeleitet und durch eine vertrauenswürdige Instanz bereitgestellt (z. B. einen vertrauenswürdigen Server), so kann in Varianten des Überprüfungsgerätes, dieses auf den entsprechenden Schlüssel zugreifen. Ist der private Schlüssel z. B. erzeugt worden und z. B. in einem Speicher des Kryptographiemoduls 120 gespeichert worden, können beispielsweise die entsprechenden individuellen Merkmale des Objektes verändert oder unbrauchbar gemacht werden, sodass der erste kryptographische Schlüssel nicht mehr abgeleitet werden kann. Dies kann beispielsweise dadurch erfolgen, dass bei Oberflächenmerkmalen die entsprechende Position an der Oberfläche des Objektes poliert wird, Farben/Partikel vom Objekt abgewaschen werden (z. B. mittels Lösungsmittel) oder zusätzlich Farben/Partikel auf das Objekt aufgebracht werden, um die entsprechenden individuellen Merkmale unbrauchbar zu machen oder zu verändern. Es ist beispielsweise auch möglich, dass die individuellen Merkmale derart unbrauchbar gemacht werden, dass der erste kryptographische Schlüssel sich nicht mehr direkt anhand dieser berechnen lässt, jedoch noch die objektindividuelle Charakteristik anhand der veränderten individuellen Merkmale unter Berücksichtigung von Toleranzwerten berechnet werden kann, um z. B. den öffentlichen Schlüssel durch das Kryptographiemodul des Überprüfungsgerätes bereitzustellen bzw. zu berechnen.

Alternativ oder zusätzlich kann der öffentliche Schlüssel auch als ein (digitaler) Fingerabdruck in Form der individuellen Merkmale (z. B. Oberflächenunebenheiten, ein Farbstoff mit einem spezifischen Spektrum, der beispielsweise nach einer vorgegebenen Zeit zerfällt, um insbesondere damit eine Haltbarkeit zu kodieren) in das Objekt eingearbeitet/eingebracht werden oder auf das Objekt aufgebracht werden. Dieser Fingerabdruck bzw. die individuellen Merkmale sind beispielsweise mit dem bloßen Auge und/oder ohne Kenntnisse über die Art und Position nicht feststellbar/lesbar oder nur mit erheblichem technischen Aufwand feststellbar. Entsprechend können beispielsweise die Informationen, um die individuellen Merkmale zu erfassen in einem geschützten Speicher des Gerätes liegen, sodass kein Zugriff durch Unbefugte auf diese Informationen stattfinden kann. Bei dem eingearbeiteten Fingerabdruck/individuellen Merkmale kann es sich beispielsweise um Oberflächenunebenheiten handeln, die während der Fertigung des Objektes oder der Weiterverarbeitung des Objektes erzeugt werden. Alternativ oder zusätzlich kann der Fingerabdruck durch das Aufbringen von Farben oder Partikeln realisiert sein, wobei beispielsweise die Farben oder Partikel derart aufgebracht werden, dass ein individuelles Spektrum für das Objekt erzeugt wird. Hierzu können beispielsweise unterschiedliche Farben/Partikel über die Oberfläche des Objektes verteilt werden, sodass das beispielsweise ein geometrisches Spektrum erzeugt wird, damit z. B. an bestimmten Positionen des Objektes ein vorgegebenes Spektrum gemessen werden kann. Das Spektrum bzw. die Farben/Partikel sind beispielsweise derart gewählt, dass diese nicht im durch das menschliche Auge sichtbaren Spektrum liegen. Dies kann beispielsweise ein Spektrum sein, das jenseits der 800 nm liegt.

Die Verwendung von Toleranzwerten ist dahingehend vorteilhaft, um beispielsweise Messungenauigkeiten bei einer Berechnung der Charakteristik oder dem Erfassen der individuellen Merkmale zu berücksichtigen (oder kompensieren), um für das korrekte Objekt ggf. reproduzierbar die objektindividuelle Charakteristik oder die individuellen Merkmale zu berechnen.

Beispielsweise können die Toleranzwerte derart gewählt werden, dass bei spektroskopischen individuellen Merkmale eines Objektes z. B. in Form von Lebensmitteln, kein erster kryptographischer Schlüssel bereitgesellt wird (oder kein gültiger erster kryptographischer Schlüssel bereitgestellt werden kann), wenn das Objekt bzw. die Lebensmittel nicht mehr frisch genug sind. Handelt es sich beispielsweise bei dem Objekt um Bananen, so kann der Toleranzwert für das Spektrum der Oberflächen der Bananen derart gewählt werden, dass bei einem großflächigen Braunwerden der Bananen, für diese Bananen kein erster kryptographischer Schlüssel bereitgesellt wird (oder kein gültiger erster kryptographischer Schlüssel bereitgestellt werden kann) oder erzeugt wird. Entsprechend können die Bananen bzw. eine Bananenlieferung mit diesen Bananen an einem Transportpunkt oder bei einem Zwischenhändler nicht mehr als "Frisch" in einer Lieferkette mittels einer Nachricht mit der Datenstruktur oder der Datenstruktur in dem verteilten Datenbanksystem bestätigt/gespeichert werden. Auf die gleiche Weise können beispielsweise andere Objekte im Form von verderblichen Waren mittels Nachrichten/Datenstrukturen in einem verteilten Datenbanksystem überwacht werden. Die entsprechenden Toleranzwerte werden dann entsprechend gewählt, dass ggf. kein erster kryptographischer Schlüssel bereitgestellt wird, wenn die verderblichen Waren z. B. zu stark degeneriert sind (z. B. die Haltbarkeit von Lebensmittelabgelaufen sind oder die Lebensmittel verdorben sind). Alternativ kann beispielsweise beim Überschreiten der Toleranzwerte ein alternativer kryptographischer Schlüssel bereitgestellt werden, anhand dessen nachvollzogen werden kann, an welcher Stelle bei der Dokumentation des Transportes des Objektes die Toleranzwerte überschritten wurden.

Entsprechend können die genannten Toleranzwerte nicht nur bei der objektindividuellen Charakteristik verwendet werden, sondern sie lassen sich ebenso verwenden, wenn anhand der individuellen Merkmale der erste kryptographische Schlüssel bereitgestellt werden soll. Dies kann beispielsweise notwendig sein, wenn die individuellen Merkmale (die auch als objektindividuelle Merkmale bezeichnet werden können) mit einem Referenzwert verglichen werden sollen, um den ersten kryptographischen Schlüssel bei einer entsprechenden Übereinstimmung freizugeben oder die individuellen Merkmale als Eingabeparameter für eine Schlüsselableitungsfunktion dienen sollen und z. B. Fehler hinsichtlich einer reproduzierbaren Schlüsselableitung aufgrund von Messungenauigkeiten verhindert werden soll.

Die Erfindung kann beispielsweise vorteilhaft im Supply-Chain-Management bzw. beim Überwachen einer Supply-Chain verwendet werden. Insbesondere, wenn beispielsweise bei einem Transport von Objekten (z. B. Waren wie Lebensmittel, elektronische Bauteile, Edelsteile etc.) objektbezogene Daten von den unterschiedlichen Entitäten (z. B. Hersteller, mehrere Logistikfirmen, Vertrieb, Käufer), die z. B. bei der Herstellung, Transport oder dem Verkauf des Objektes beteiligt sind, aus Dokumentationsgründen an unterschiedlichen Stellen der Verarbeitung/Bearbeitung des Objektes und/oder Zeitpunkten erzeugt werden. Die Erfindung ist dabei insbesondere vorteilhaft, wenn sich die beteiligten Entitäten nicht vertrauen, da die entsprechenden Daten z. B. durch die kryptographische Prüfsumme und/oder einer Prüfsumme einer entsprechenden Entität geschützt sind. Das Gerät kann beispielsweise Teil eins Transportbehältnisses sein, um z. B. Lebensmittel wie Bananen oder Milch zu transportieren oder es sind mehrere gleichartige Geräte an den unterschiedlichen Stellen der Verarbeitung/Bearbeitung des Objektes bzw. den Zeitpunkten, wenn dies erfolgt vorhanden.

Beispielsweise werden an einem Verarbeitungsort (z. B. Übergabe des Objektes an das Logistikunternehmen) objektspezifische Daten (z. B. um welche Art von Objekt es sich handelt, Typ, Hersteller, eindeutiger Identifizierer/UID usw., Zeitpunkt der Ankunft beim Logistikunternehmen) erfasst und in einem Objektdatensatz oder Dokumentationsdatensatz gespeichert. Der Objektdatensatz/Dokumentationsdatensatz kann dann z. B. wiederum in der Datenstruktur gespeichert werden und wie bereits erläutert mit der kryptographischen Prüfsumme geschützt werden, indem der erste kryptographische Schlüssel entsprechend der Erläuterungen bereitgestellt wird. Es ist beispielsweise auch denkbar, dass zwei unterschiedliche Gruppen von objektspezifischen Daten für ein Objekt erzeugt werden, wobei hierzu z. B. eine erste Datengruppe und eine zweite Datengruppe jeweils in einer Datenstruktur (z. B. in eine ersten Datenstruktur und einer zweiten Datenstruktur) gespeichert wird. Eine entsprechende Datenstruktur kann beispielsweise einen kryptographischen Schlüssel umfassen, damit die kryptographische Prüfsumme (die auch als erste kryptographische Prüfsumme bezeichnet werden kann) zu überprüfen. Je nach Implementierungsvariante kann die Datenstruktur DS und/oder der Datensatz D den Objektdatensatz und/oder den Dokumentationsdatensatz umfassen. Es ist beispielsweise in Varianten auch möglich, dass der Objektdatensatz dem Dokumentationsdatensatz entspricht.

Die Datengruppen umfassen beispielsweise veränderliche Daten, die sich auf das Objekt beziehen und unveränderliche Daten, die sich auf das Objekt beziehen. Beispielsweise umfasst die erste Datengruppe/Datenstruktur unveränderliche Daten für das Objekt, diese können z. B. Art des Objektes (elektronisches Bauteil, Lebensmittel, Rohstoff wie Diamanten), Typ, Hersteller, eindeutiger Identifizierer/UID usw. angeben.

Beispielsweise umfasst die zweite Datengruppe/Datenstruktur veränderliche Daten für das Objekt. Diese veränderliche Daten können z. B. die Daten (Name, Adresse, digitale Signatur) der Entität, die das Objekt verarbeitet, Zeitpunkt der Verarbeitung, Arbeitsschritte, Bearbeitungsbedingungen (z. B. Temperaturen bei Transport/Herstellung/Bearbeitung des Objektes), Dauer der Verarbeitung (z. B. Dauer des Transportes, Dauer der Durchführung der Bearbeitungsschritte z. B. bei der Herstellung des Objektes) sein.

Die erste Datenstruktur und/oder die zweite Datenstruktur werden werden mittels des ersten kryptographischen Schlüssels kryptographisch geschützt, indem z. B. die kryptographische Prüfsumme beispielsweise in Form einer digitalen Signatur für die jeweilige Datenstruktur erzeugt wird. Die entsprechenden Datenstrukturen können dann durch die entsprechende verarbeitende Entität in einer Nachricht oder einer Transaktion in dem verteilten Datenbanksystem (z. B. eine Blockkette) gespeichert werden, wobei z. B. die entsprechende Entität mittels eines kryptographischen Schlüssels der Entität eine Transaktionsprüfsumme für die Nachricht oder die Transaktion erzeugt. Die Transaktionsprüfsumme kann dabei insbesondere ebenfalls eine digitale Signatur sein.

Dieser Prozess der digitalen Dokumentation wird beispielsweise von unterschiedlichen Entitäten zu entsprechenden Zeitpunkten durchgeführt, wenn eine Verarbeitung/Bearbeitung/Transport für das Objekt durchgeführt wird. Es kann beispielsweise auch möglich sein, dass während eines Transportes zu vorgegebenen Zeitpunkten entsprechende Nachrichten/Transaktionen mit entsprechenden Daten, die sich auf das Objekt beziehen, nach dem erläuterten Verfahren oder eines seiner Varianten mittels der kryptographischen Prüfsumme geschützt werden und z. B. in das verteilte Datenbanksystem geschrieben werden. Hierzu kann das Gerät beispielsweise ein Kommunikationsmodul (z. B. ein Mobilfunkmodul wie ein UMTS, LTE oder 5G Modul) umfassen. Diese Anwendung ist vorteilhaft, wenn z. B. die Transporttemperatur für das Objekt (z. B. Milch oder Fisch) während des Transportes mittels der Daten, die sich auf das Objekt beziehen, zu dokumentieren. Die individuellen Merkmale des Objektes können hierbei beispielsweise Oberflächenstrukturen des Transportbehältnisses sein oder spektrale Daten bzw. ein Spektrum von dem Objekt sein.

Durch die Verwendung der individuellen Merkmale für das Bereitstellen des ersten kryptographischen Schlüssels, kann ein entsprechendes Objekt, insbesondere ein physisches Objekt, mittels der "digitalen Welt" stärker verknüpft werden. Wird das Objekt beispielsweise zu lange Transportiert oder durch die Verarbeitung/Bearbeitung/Transport derart verändert, dass z. B. die entsprechenden Toleranzwerte nicht mehr eingehalten werden, lässt sich die Überschreitung der Toleranzwerte oder eine unsachgemäße Behandlung des Objektes lückenlos z. B. über das verteilte Datenbanksystem nachweisen. Auch lässt sich dabei nachweisen, ob das Objekt beispielsweise durch ein anderes Objekt ausgetauscht wurde, was beispielsweise bei Produktfälschungen relevant ist.

Würde das Objekt nun durch ein gefälschtes Objekt ausgetauscht werden, so würden sich die entsprechenden individuellen Merkmale ändern. Dies kann beispielsweise für Medizinprodukte relevant sein, um herauszufinden, ob es sich z. B. bei einem Silikonimplantat, tatsächlich um das Silikonimplantat eines Herstellers handelt und nicht um ein Implantat, das gefälscht wurde. Hierzu werden z. B. bei der Herstellung des Objektes (Implantat) die entsprechenden Daten für das Objekt nach einer der oben genannten Varianten in das verteilte Datenbanksystem geschrieben. Logistikunternehmen, Vertriebsunternehmen und Kliniken, die das Objekt transportieren, handeln und implantieren dokumentieren jeweils nach dem genannten Verfahren die entsprechenden durch sie durchgeführten Verarbeitungsschritte, Zeitpunkte und weiteren relevanten Daten (Angaben zur jeweiligen Entität). Bei den individuellen Merkmalen eines Implantates kann es sich beispielsweise um Oberflächenmerkmale des Implantates handeln (z. B. Oberfläche des Silikonkissens oder die Oberfläche eines metallischen Implantates). Bei dem Silikonkissen kann es sich beispielsweise auch bei den individuellen Merkmalen um ein gemessenes Spektrum des Inhaltes (Silikon) des Silikonkissens handeln. Die Erfindung ist nicht nur auf Silikonkissen beschränkt. Auch andere Implantate mit anderen Füllungen können ebenso überprüft werden. Auch ist es möglich hierdurch die Authentizität von anderen Medizinprodukten wie Medikamenten (z. B. über Spektren) oder medizintechnische Geräte wie MRTs, CTs und deren elektronische Bauteile (z. B. mittels Testsignalen oder Rauschsignalen).

Hierdurch kann dokumentiert werden, wann und wo eine Objektmanipulation durchgeführt wurde, da sich in einem solchen Fall die individuellen Merkmale verändern und dies ggf. eine Veränderung des ersten kryptographischen Schlüssels zur Folge hätte. Gibt es z. B. eine erste Datenstruktur mit objektunveränderlichen Daten, würde sich hier die digitale Signatur ändern. Beispielsweise wäre die digitale Signatur für die ersten 3 Einträge gleich. Versucht z. B. die vierte Entität in der Lieferkette das Implantat gegen eine Fälschung mit minderwertigem Material auszutauschen, würde dies z. B. durch die Erfindung dokumentiert werden. Die vierte Entität kann zwar noch einen korrekten Eintrag in dem verteilten Datenbanksystem erzeugen, jedoch spätestens, wenn das gefälschte Objekt von der fünften Entität verarbeitet wird, kann für eine entsprechender erste Datenstruktur nicht mehr eine korrekte digitalen Signatur/kryptographische Prüfsumme erzeugt werden. Die entsprechenden Entitäten erzeugen jeweils vorzugsweise auch eine entsprechende zweite Datenstruktur z. B. um veränderliche Daten zu speichern.

Dadurch, dass die jeweiligen Entitäten für ihre Transaktion(en) mit den entsprechenden Datenstrukturen jeweils eine Transaktionsprüfsumme mit ihrem eigenen kryptographischen Schlüssel (der Schlüssel der Entität) erzeugen, kann ggf. festgestellt werden, welche Entität betrogen hat. Es ist zwar wünschenswert, dass so viel wie möglich über Herstellung/Verarbeitung/Vertrieb/Bearbeitung/Transport in Datenstrukturen und Transaktionen sicher gespeichert wird, jedoch kann es auch ausreichend sein, wenn z. B. nur der Hersteller dies tut. Hierzu muss nicht zwangsläufig eine verteilte Datenbank verwendet werden. Es können auch andere Datenbanken (z. B. hierarchische SQL Datenbanken) oder ein Cloudservice von einer vertrauenswürdigen Instanz verwendet werden.

Mittels der Erfindung kann beispielsweise bei der Bestellung eines Objektes von dem Hersteller/Verkäufer gleich eine entsprechende Datenstruktur an den Käufer übermittelt werden oder eine entsprechende Datenstruktur wird nach der Herstellung des Objektes an den Käufer übertragen. Dabei ist die entsprechende Datenstruktur bzw. die entsprechenden Datenstrukturen (falls eine erste und eine zweite Datenstruktur verwendet wird) wie beschrieben mit einer entsprechenden kryptographischen Prüfsumme geschützt. Die entsprechenden Datenstrukturen können entweder direkt an den Käufer übermittelt werden oder mittels eines Datenbanksystems (z. B. ein verteiltes Datenbanksystem) dem Käufer bereitgestellt werden. Wird das Objekt an den Käufer geliefert, kann er anhand des Objektes und der Datenstrukturen überprüfen, ob es sich tatsächlich um das Objekt handelt, für das der Verkäufer/Hersteller entsprechende Datenstrukturen bereitgestellt oder in dem Datenbanksystem gespeichert hat.

Hierzu kann er z. B. für die Daten der ersten Datenstruktur eine entsprechende Prüfsumme bilden, indem die individuellen Merkmale von dem Objekt - wie bereits erläutert - erfasst werden und anhand dieser individuellen Merkmale der erste kryptographische Schlüssel bereitgestellt wird, damit die entsprechende kryptographische Prüfsumme erzeugt werden kann. Stimmen die jeweiligen kryptographischen Prüfsummen überein, so handelt es sich tatsächlich um das Objekt, das von dem Hersteller/Verkäufer ausgeliefert wurde und auf dem Transportweg und/oder Zwischenvertrieb fand keine Manipulation statt.

Es ist beispielsweise möglich, dass die individuellen Merkmale einen kryptographischen Schlüssel kodieren, der z. B. für ein Überprüfen der kryptographischen Prüfsumme der Datenstruktur des Herstellers/Verkäufers genutzt werden können. Zum Überprüfen der Datenstruktur kann ein wie nachfolgend kurz erläutertes Überprüfungsgerät verwendet werden, wobei die Funktionalität ähnlich realisiert ist, wie in dem bereits erläuterten Gerät.

Überprüfungsgerät zum Überprüfen einer kryptographischen Prüfsumme einer Datenstruktur umfassend:
- beispielsweise ein Empfangsmodul zum Empfangen einer Datenstruktur, wobei die Datenstruktur mittels einer kryptographischen Prüfsumme geschützt ist;
- beispielsweise ein Erfassungsmodul (110) zum Erfassen individueller Merkmale (M) eines Objektes (O) mittels eines Erfassungsgerätes (A);
- beispielsweise ein Berechnungsmodul (120) zum Berechnen einer objektindividuellen Charakteristik anhand der individuellen Merkmale;
- beispielsweise ein Kryptographiemodul (130) zum Bereitstellen eines ersten kryptographischen Schlüssels anhand der individuellen Merkmale und/oder der objektindividuellen Charakteristik;
- beispielsweise ein Überprüfungsmodul (140) zum Überprüfen der kryptographischen Prüfsumme mittels des ersten kryptographischen Schlüssels.

Beispielsweise können abhängig von dem Überprüfen Steuerdaten bereitgestellt werden, die ggf. bei einer Korrektheit der kryptographischen Prüfsumme die Authentizität des Objektes bestätigen und z. B. eine Fertigungsmaschine veranlassen das Objekt weiterzuverarbeiten oder ein Logistiksystem dazu veranlassen das Objekt weiter zu transportieren.

Die Orte bzw. Angaben wie und wo beispielsweise die individuellen Merkmale für das Gerät durch das Erfassungsgerät aufzufinden sind, können beispielsweise während der Produktion oder zu einem anderen Zeitpunkt zufällig festgelegt werden (z. B. um eine Manipulation der Merkmale am Objekt zu erschweren). Die entsprechende Konfiguration mit den Angaben wie und wo die individuellen Merkmale zu erfassen sind, umfassen dabei Daten über die geometrischen Stellen und/oder Schnittstellen wo das Erfassungsgerät die individuellen Merkmale erfassen kann. Diese Konfiguration ist vorzugsweise zugriffsgeschützt im Gerät bzw. im Überprüfungsgerät gespeichert. Zugriffgeschützt bedeutet hierbei beispielsweise, dass auf die Daten/Konfiguration nur eine berechtigte Person zugreifen kann, indem diese ggf. einen kryptographischen und/oder mechanischen und/oder elektromechanischen Schutz beispielsweise durch die Eingabe eines Passwortes/Pins aufhebt. Würde jemand durch eine unsachgemäße Manipulation des Gerätes die Konfiguration auslesen wollen, so könnte das entsprechende Gerät (oder Überprüfungsgerät) dies z. B. mit entsprechenden Sensoren (z. B. Bohrschutzfolie, Temperatursensoren, Lichtsensoren) erfassen und ggf. die Konfiguration aus dem Speicher des Gerätes löschen.

Auch können das Gerät und/oder das Überprüfungsgerät unterschiedliche individuelle Merkmale nutzen, wobei die individuellen Merkmale für das Überprüfungsgerät vorzugsweise einen vorgegebenen Schlüssel kodieren (z. B. als Fingerabdruck). Die unterschiedlichen individuellen Merkmale befinden sich dann z. B. an unterschiedlichen Positionen am Objekt.

Alternativ können die individuellen Merkmale nicht zufällig festgelegt werden, sondern befinden sich bei einem entsprechenden Objekt an einer bekannten/vergebenen Position (z. B. am Sockel des Objektes oder an unebenen Bereichen eines Implantates.

In einer Variante kann das Gerät zum Berechnen einer kryptographischen Prüfsumme auch auf die objektindividuelle Charakteristik bzw. dessen Berechnung verzichten. Ein solches Gerät umfasst dabei beispielsweise folgende Merkmale:
- beispielsweise ein Erfassungsmodul (110) zum Erfassen individueller Merkmale (M) eines Objektes (O) mittels eines Erfassungsgerätes (A);
- beispielsweise ein Kryptographiemodul (130) zum Bereitstellen eines ersten kryptographischen Schlüssels anhand der individuellen Merkmale;
- beispielsweise ein Schutzmodul (130) zum kryptographischen Schützen einer Datenstruktur mittels einer kryptographischen Prüfsumme, wobei das Schutzmodul die kryptographische Prüfsumme mittels des ersten kryptographischen Schlüssels berechnet.

Das Gerät ließe beispielsweise sich auch als Hardware-Wallet für Blockketten oder distributed Ledger Anwendungen nutzen, indem beispielsweise das Objekt ein elektronisches Gerät ist, das Transaktionen mittels der kryptographischen Prüfsumme (z. B. als digitale Signatur) schützt. Hierzu umfasst z. B. das Objekt das Gerät und das Erfassungsgerät erfasst die individuellen Merkmale (z. B. objektindividuelles Rauschsignal oder ein objektindividuelles Signal) und erzeugt den ersten kryptographischen Schlüssel, damit die digitale Signatur erstellt werden kann. Die Datenstruktur kann beispielsweise die Nachricht bzw. die Transaktion sein, die geschützt werden soll. Ist die Datenstruktur bzw. die Transaktion, die die vom Nutzer gewünschten Transaktionsdaten umfasst, erstellt und durch die digitale Signatur schützt, wird die digitale Signatur dem distributed Ledger/der verteilten Datenbank übergeben. Diese kann dann z. B. die entsprechende Transaktion (welche die Datenstruktur, die Transaktionsdaten und die digitale Signatur umfasst) validieren. Das Gerät und/oder das Objekt verfügt hierfür z. B. über eine Eingabeschnittstelle, um die Transaktionen einzugeben und/oder eine Ausgabeschnittstelle, um die Transaktion dem verteilten Datenbanksystem zu übermitteln.

In einer Variante des Überprüfungsgerätes können die individuellen Merkmale und/oder die objektindividuelle Charakteristik zum Überprüfen einer kryptographischen Prüfsumme verwendet werden. Ein solches Überprüfungsgerät umfasst dabei folgende Merkmale:
- beispielsweise ein Empfangsmodul zum Empfangen einer Datenstruktur, wobei die Datenstruktur mittels einer kryptographischen Prüfsumme geschützt ist;
- beispielsweise ein Erfassungsmodul (110) zum Erfassen individueller Merkmale (M) eines Objektes (O) mittels eines Erfassungsgerätes (A);
- beispielsweise ein Berechnungsmodul (120) zum Berechnen einer objektindividuellen Charakteristik (I) anhand der individuellen Merkmale;
- beispielsweise ein Überprüfungsmodul (140) zum Überprüfen der kryptographischen Prüfsumme mittels der individuellen Merkmale und/oder der objektindividuellen Charakteristik, wobei
   - beispielsweise abhängig vom Ergebnis des Überprüfens Steuerdaten bereitgestellt werden,
   - beispielsweise anhand der individuellen Merkmale und/oder der objektindividuellen Charakteristik eine weitere kryptographische Prüfsumme für die Datenstruktur erzeugt wird,
   - beispielsweise bei einem Übereinstimmen der weiteren kryptographischen Prüfsumme mit der kryptographischen Prüfsumme die Datenstruktur und/oder das Objekt als authentisch und/oder korrekt akzeptiert wird.

Auch in dieser Variante können entsprechende Verfahren verwendet werden, um Messungenauigkeiten z. B. mittels Toleranzwerten auszugleichen. Dies erfolgt wie bereits erläutert durch eine entsprechende Vorverarbeitung.

Die individuellen Merkmale und/oder die objektindividuelle Charakteristik wird beispielsweise als Geheimnis verwendet, um beispielsweise eine kryptographische Prüfsumme wie z. B. einen Message Authentication Code (MAC; deutsch Nachrichtenauthentifizierungscode) zu berechnen.

Beispielsweise kann in dieser Variante zum Überprüfungen der Datenstruktur eine andere Datenstruktur, die mit einer kryptographischen Prüfsumme geschützt wurde z. B. aus einem verteilten Datenbanksystem ausgelesen werden. Diese andere Datenstruktur wurde z. B. unter Verwendung der individuellen Merkmale und/oder der objektindividuellen Charakteristik (des gleichen Objektes) geschützt, indem für die andere Datenstruktur anhand der individuellen Merkmale und/oder der objektindividuellen Charakteristik die kryptographische Prüfsumme erzeugt wurde. Ist beispielsweise der Datenstrukturinhalt der Datenstruktur und der anderen Datenstruktur identisch, so stimmen vorzugsweise die jeweiligen kryptographischen Prüfsummen der Datenstrukturen überein. Für diese Überprüfung kann beispielsweise der entsprechende Datenstrukturinhalt der anderen Datenstruktur ausgelesen werden, um den entsprechenden Datenstrukturinhalt bereitzustellen. Alternativ oder zusätzlich kann beispielsweise nur eine kryptographische Prüfsumme für die Datenstruktur bereitgestellt werden (z. B. von dem verteilten Datenbanksystem). Diese kryptographische Prüfsumme wird dann überprüft, indem über die Datenstruktur erneut eine kryptographische Prüfsumme gebildet.

Stimmen z. B. die kryptographischen Prüfsummen überein, so wird das Objekt als authentisch bzw. als Original akzeptiert und/oder die Datenstruktur als authentisch akzeptiert. Stimmen die Prüfsummen nicht überein, so wird das Objekt und/oder die Datenstruktur abgelehnt und ggf. Steuerbefehle und/oder ein Steuersignal bereitgestellt, um z. B. auf die Ablehnung zu reagieren (z. B. wird das Objekt nicht verarbeitet, nicht weiter transportiert oder es wird eine Person informiert, das Objekt manuell zu überprüfen). Die Entscheidung ob beispielsweise das Objekt und/oder die Datenstruktur als authentisch akzeptiert werden, hängt beispielsweise von dem Vertrauensverhältnis in der Prüfsituation ab. Wird davon ausgegangen, dass das Objekt vertrauenswürdig oder ein Original ist, wird mit Hilfe des Objektes z. B. die Authentizität der Datenstruktur bestimmt. Ist beispielsweise die Datenstruktur mit ihrer kryptographischen Prüfsumme vertrauenswürdig, so kann die Authentizität des Objektes bestimmt werden.

Entsprechend kann ein Überprüfungsmodul zum Überprüfen der kryptographischen Prüfsumme mittels des ersten kryptographischen Schlüssels eingerichtet sein, wobei beispielsweise bei einem erfolgreichen Überprüfen der kryptographischen Prüfsumme die Datenstruktur und/oder das Objekt als authentisch und/oder korrekt und/oder integer akzeptiert wird.

Eine Variante des Überprüfungsgerätes umfasst beispielsweise folgende Merkmale:
- beispielsweise ein Empfangsmodul zum Empfangen einer Datenstruktur, wobei die Datenstruktur mittels einer kryptographischen Prüfsumme geschützt ist;
- beispielsweise ein Erfassungsmodul (110) zum Erfassen individueller Merkmale (M) eines Objektes (O) mittels eines Erfassungsgerätes (A);
- beispielsweise ein Überprüfungsmodul (140) zum Überprüfen der kryptographischen Prüfsumme mittels der individuellen Merkmale, wobei
   - beispielsweise abhängig vom Ergebnis des Überprüfens Steuerdaten bereitgestellt werden,
   - beispielsweise anhand der individuellen Merkmale eine weitere kryptographische Prüfsumme für die Datenstruktur erzeugt wird,
   - beispielsweise bei einem Übereinstimmen der weiteren kryptographischen Prüfsumme mit der kryptographischen Prüfsumme die Datenstruktur und/oder das Objekt als authentisch und/oder korrekt und/oder integer akzeptiert wird.

In einer Variante des Gerätes können die individuellen Merkmale und/oder die objektindividuelle Charakteristik zum Berechnen einer kryptographischen Prüfsumme für eine Datenstruktur verwendet werden. Ein solches Gerät umfasst dabei folgende Merkmale:
- beispielsweise ein Erfassungsmodul (110) zum Erfassen individueller Merkmale (M) eines Objektes (O) mittels eines Erfassungsgerätes (A);
- beispielsweise ein Berechnungsmodul (120) zum Berechnen einer objektindividuellen Charakteristik (I) anhand der individuellen Merkmale;
- beispielsweise ein Schutzmodul (130) zum kryptographischen Schützen einer Datenstruktur mittels einer kryptographischen Prüfsumme, wobei das Schutzmodul die kryptographische Prüfsumme mittels der individuellen Merkmale und/oder der objektindividuellen Charakteristik berechnet.

Auch in dieser Variante können entsprechende Verfahren verwendet werden, um Messungenauigkeiten z. B. mittels Toleranzwerten auszugleichen. Dies erfolgt wie bereits erläutert durch eine entsprechende Vorverarbeitung.

Die individuellen Merkmale und/oder die objektindividuelle Charakteristik wird beispielsweise als Geheimnis verwendet, um beispielsweise eine kryptographische Prüfsumme wie z. B. einen Message Authentication Code (MAC; deutsch Nachrichtenauthentifizierungscode) zu berechnen.

Eine Variante des Gerätes kann dabei folgende Merkmale umfassen:
- beispielsweise ein Erfassungsmodul (110) zum Erfassen individueller Merkmale (M) eines Objektes (O) mittels eines Erfassungsgerätes (A);
- beispielsweise ein Schutzmodul (130) zum kryptographischen Schützen einer Datenstruktur mittels einer kryptographischen Prüfsumme, wobei das Schutzmodul die kryptographische Prüfsumme mittels der individuellen Merkmale berechnet.

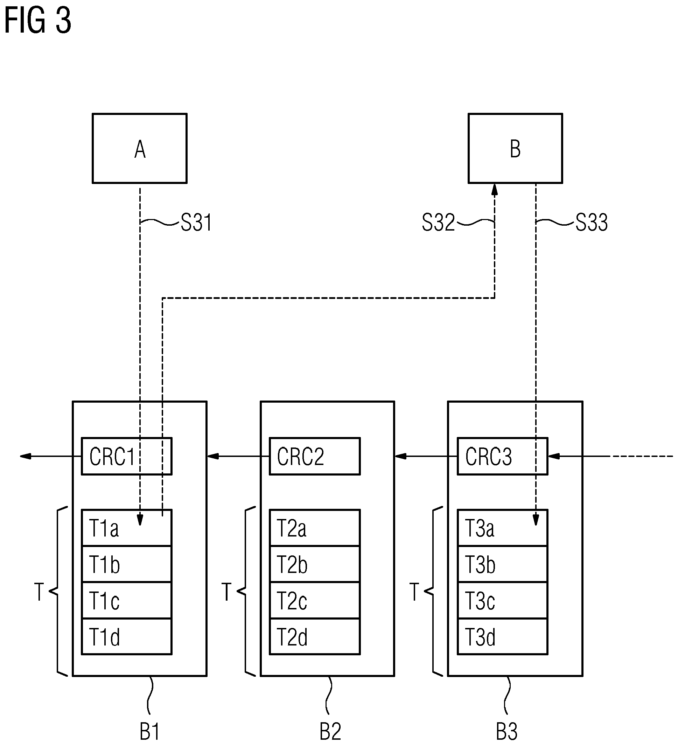

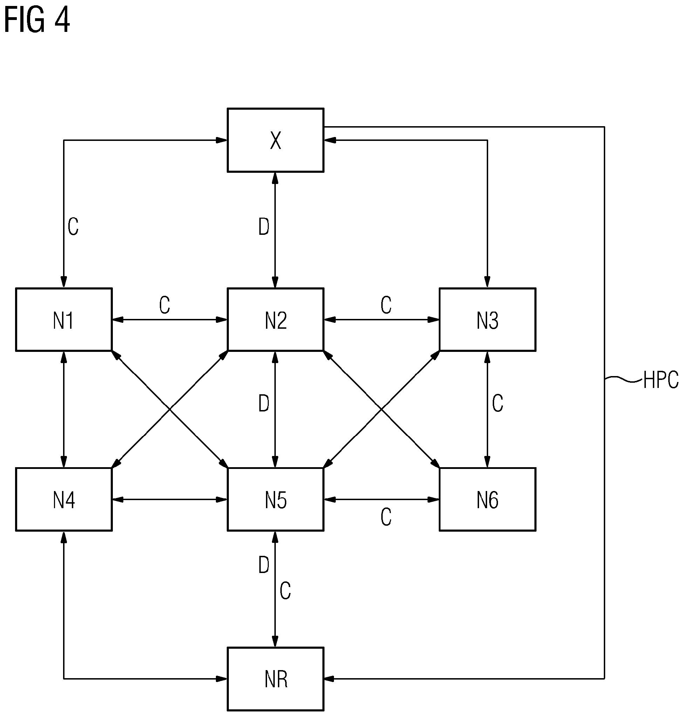

Es ist beispielsweise möglich, dass eine Zuordnungsvorrichtung oder ein Zuordnungssystem, das z. B. einen weiteren Speicher zum geordneten Speichern von Daten umfasst, verwendet wird, um ggf. in dem verteilten Datenbanksystem ggf. schnell die entsprechenden Transaktionen zu finden, die für das Objekt bereits Datensätze speichern. Beispielsweise kann das Gerät und/oder das Überprüfungsgerät in jeweiligen Varianten eine Zuordnungsvorrichtung oder ein Zuordnungssystem umfassen (auch die andere Ausführungsbeispiele der Fig. 3 und 4 können in jeweiligen Varianten eine Zuordnungsvorrichtung oder ein Zuordnungssystem umfassen).

Bei der Zuordnungsvorrichtung bzw. dem weiteren Speicher kann es sich beispielsweise um einen Hashtable, Hashmap oder Lookup-Tabelle handeln. Auch kann die Zuordnungsvorrichtung bzw. das Zuordnungssystem einen distributed hash table implementieren bzw. der weitere Speicher entspricht einem verteilten Speicher z. B. in Form des distributed hash table.

Wird beispielsweise eine Datenstruktur mit einer kryptographischen Prüfsumme durch eine Nachricht oder Transaktion in das verteilte Datenbanksystem geschrieben bzw. in diesem gespeichert, so wird beispielsweise ein Eintrag in die Zuordnungsvorrichtung geschrieben. Der Eintrag umfasst einen Schlüssel und einen transaktionsspezifischen Datensatz. Als Schlüssel können beispielsweise folgende Daten verwendet werden oder eine Kombination der folgenden Daten verwendet werden:
- individuelle Merkmale
- Objektindividuelle Charakteristik
- Unveränderliche objektbezogene Daten (erste Datengruppe)
- Der erste kryptographische Schlüssel
- Die kryptographische Prüfsumme
- Ein Hash über die genannten Daten
- Ein Hashwert über die Datenstruktur

Der Schlüssel kann in diesem Kontext auch als Zuordnungsschlüssel bezeichnet werden.

Der transaktionsspezifische Datensatz kann beispielsweise folgende Daten umfassen oder eine Kombination der folgenden Daten umfassen:
- Blocknummer des Blocks einer Blockkette/eines verteilten Datenbanksystems, der die Transaktion mit der entsprechenden Datenstruktur umfasst
- Transaktionsnummer einer Transaktion, die die Transaktion mit der entsprechenden Datenstruktur umfasst
- Speicherort oder Speicheradresse einer Nachricht, die die Nachricht mit der entsprechenden Datenstruktur umfasst
- Prüfsummen des entsprechenden Blocks und/oder Transaktion und/oder Nachricht
- Daten über die Entität, die den Eintrag vorgenommen hat
- Sonstige Daten die relevant erscheinen können

Der transaktionsspezifische Datensatz kann dabei ggf. auch als Metadaten über die Transaktion bzw. den Eintrag in der verteilten Datenbank bezeichnet werden. Bei einem Eintrag kann es sich beispielsweise um eine Transaktion, Nachricht, Datenblock, Block oder Speicheradresse handeln, der z. B. die Datenstruktur mit der entsprechenden kryptographischen Prüfsumme speichert.

Wird ein Eintrag in das verteilte Datenbanksystem geschrieben, wird, falls noch kein Eintrag für einen Schlüssel vorhanden ist, z. B. ein Eintrag erstellt und der entsprechende transaktionsspezifische Datensatz eingetragen.

Ist ein Eintrag für einen entsprechenden Schlüssel bereits vorhanden, so kann z. B. der zugehörige transaktionsspezifische Datensatz entweder mit dem aktuellen transaktionsspezifischen Datensatz überschrieben werden. Mit anderen Worten wird der bereits vorhandene Eintrag durch den transaktionsspezifischen Datensatz überschrieben, der eingetragen werden soll. Alternativ kann der aktuelle/neue transaktionsspezifische Datensatz an den vorhandenen transaktionsspezifischen Datensatz angehängt werden, wobei in einer solchen Variante der transaktionsspezifische Datensatz als eine Liste oder ein Vector mit transaktionsspezifischen Datensätzen realisiert ist. Die transaktionsspezifischen Datensätze können z. B. in die Liste oder den Vector geordnet oder sortiert geschrieben werden, sodass der aktuellste/neueste transaktionsspezifische Datensatz z. B. der erste Eintrag oder der letzte Eintrag ist. Entsprechend ist die Liste/Vector z. B. nach dem Zeitpunkt der Eintragung sortiert. Auch andere Sortierungen oder Ordnungen sind dabei möglich. Beispielsweise können nach den Orten, Postleitzahlen, GPS-Positionen, usw. die Einträge geordnet sein. Der transaktionsspezifische Datensatz bzw. die transaktionsspezifischen Datensätze können beispielsweise auch als Metadaten für entsprechende Datenstrukturen bezeichnet werden, die z. B. durch ein verteiltes Datenbanksystem gespeichert und/oder bereitgestellt werden können.

Mit der Zuordnungsvorrichtung ist es möglich schnell innerhalb des verteilten Datenbanksystems die jeweiligen Einträge zu finden, die einem Objekt zugeordnet sind. Zunächst wird der entsprechende Schlüssel für ein Objekt erzeugt, indem z. B. die individuellen Merkmale und/oder die objektindividuelle Charakteristik erfasst bzw. berechnet wird. Anhand dieser Daten können dann die entsprechenden Daten zur Bestimmung des Schlüssels berechnet werden.

Ist der Schlüssel verfügbar/bereitgestellt, so kann über die Zuordnungsvorrichtung bzw. das Zuordnungssystem der entsprechende transaktionsspezifische Datensatz gelesen werden. Anhand dieses transaktionsspezifischen Datensatzes können dann ggf. die entsprechenden Einträge/Transaktionen in dem verteilten Datenbanksystem ausgelesen werden. Hierdurch kann beispielsweise sehr schnell die entsprechenden Transaktionen mit einer Datenstruktur gefunden werden, die für das Objekt von einer anderen Entität bzw. zu einem früheren Zeitpunkt eingetragen wurden. Dies ist vorteilhaft, wenn die Authentizität für das Objekt und/oder die (aktuelle) Datenstruktur mit dem Überprüfungsgerät mittels einer früheren/älteren Datenstruktur (z. B. eine Datenstruktur, die von einer anderen Entität in das verteilte Datenbanksystem geschrieben wurde) überprüft werden soll. Wie bereits erwähnt sind entsprechenden Datenstrukturen sind mit jeweiligen kryptographischen Prüfsummen geschützt, so wie dies bereits in diesem oder anderen Ausführungsbeispielen beschrieben wurde.

Eine Zuordnungsvorrichtung oder ein Zuordnungssystem kann dabei folgendes umfassen:
- beispielsweise ein Schlüsselbereitstellungsmodul, wobei
   - beispielsweise das Schlüsselbereitstellungsmodul dazu eingerichtet ist einen Schlüssel bereitzustellen,
   - beispielsweise der Schlüssel anhand von Eingabedaten berechnet wird, oder
   - beispielsweise der Schlüssel über eine Datenschnittstelle abgerufen oder an das Schlüsselbereitstellungsmodul übertragen wird
- beispielsweise ein Metadatenbereitstellungsmodul, wobei
   - beispielsweise das Metadatenbereitstellungsmodul dazu eingerichtet ist, Metadaten für einen Eintrag in einer Datenbank (z. B. ein verteiltes Datenbanksystem) bereitzustellen,
   - beispielsweise die Metadaten durch das Metadatenbereitstellungsmodul berechnet werden, indem beispielsweise ein Verweis oder ein Link auf den Eintrag an das Metadatenbereitstellungsmodul übergeben werden und beispielsweise das Metadatenbereitstellungsmodul die entsprechenden Metadaten für den Eintrag aus der Datenbank ausliest, oder
   - beispielsweise die Metadaten über eine Datenschnittstelle von dem Metadatenbereitstellungsmodul abgerufen oder an das Metadatenbereitstellungsmodul übertragen werden
- beispielsweise ein Speichermodul, wobei
   - das Speichermodul dazu eingerichtet ist, ein Datenpaar aus einem Schlüssel und entsprechenden Metadaten zu speichern.

Nachfolgend wird ein Gerät und ein Überprüfungsgerät erläutert, das jeweils eine entsprechende Zuordnungsvorrichtung oder ein Zuordnungssystem umfasst. Umfasst ist kann hierbei beispielsweise breit verstanden werden, so dass eine entsprechende Zuordnungsvorrichtung oder ein Zuordnungssystem mit einem Gerät oder einem Überprüfungsgerät auch über eine Kommunikationsschnittstelle/Datenschnittstelle (z. B. Ethernet, LAN, Mobilfunkschnittstelle) verbunden ist. Alternativ umfasst ein Gerät und/oder Überprüfungsgerät eine entsprechende Zuordnungsvorrichtung oder ein Zuordnungssystem als integrale Komponente. Alternativ ist eine entsprechende Zuordnungsvorrichtung oder ein Zuordnungssystem als einer oder mehrerer Knoten des verteilten Datenbanksystems ausgebildet.

Ein Gerät umfasst in dieser Variante folgendes:
- beispielsweise ein Erfassungsmodul zum Erfassen individueller Merkmale eines Objektes mittels eines Erfassungsgerätes;
- beispielsweise ein Berechnungsmodul zum Berechnen einer objektindividuellen Charakteristik anhand der individuellen Merkmale;
- beispielsweise ein Kryptographiemodul zum Bereitstellen eines ersten kryptographischen Schlüssels anhand der individuellen Merkmale und/oder der objektindividuellen Charakteristik;
- beispielsweise ein Schutzmodul zum kryptographischen Schützen einer Datenstruktur mittels einer kryptographischen Prüfsumme, wobei das Schutzmodul die kryptographische Prüfsumme mittels des ersten kryptographischen Schlüssels berechnet;
- beispielsweise ein Schreibmodul, wobei
   - beispielsweise das Schreibmodul dazu eingerichtet ist, die Datenstruktur in eine Datenbank (z. B. ein verteiltes Datenbanksystem) zu schreiben,
   - beispielsweise das Schreibmodul einen Schlüssel (z. B. auch als Zuordnungsschlüssel bezeichnet) für einen Eintrag in der Datenbank bildet, der z. B. die Datenstruktur umfasst (in diesen Eintrag wurde die Datenstruktur gespeichert),
   - beispielsweise das Schreibmodul in eine Zuordnungsvorrichtung Metadaten über den Eintrag in der Datenbank mittels des Schlüssels schreibt.

Ein Gerät umfasst in einer weiteren Variante folgendes:
- beispielsweise ein Erfassungsmodul zum Erfassen individueller Merkmale eines Objektes mittels eines Erfassungsgerätes;
- beispielsweise ein Kryptographiemodul zum Bereitstellen eines ersten kryptographischen Schlüssels anhand der individuellen Merkmale und/oder einer objektindividuellen Charakteristik;
- beispielsweise ein Schutzmodul zum kryptographischen Schützen einer Datenstruktur mittels einer kryptographischen Prüfsumme, wobei das Schutzmodul die kryptographische Prüfsumme mittels des ersten kryptographischen Schlüssels berechnet;
- beispielsweise ein Schreibmodul, wobei
   - beispielsweise das Schreibmodul dazu eingerichtet ist, die Datenstruktur in eine Datenbank (z. B. ein verteiltes Datenbanksystem) zu schreiben,
   - beispielsweise das Schreibmodul einen Schlüssel (z. B. auch als Zuordnungsschlüssel bezeichnet) für einen Eintrag in der Datenbank bildet, der z. B. die Datenstruktur umfasst (in diesen Eintrag wurde die Datenstruktur gespeichert),
   - beispielsweise das Schreibmodul in eine Zuordnungsvorrichtung Metadaten über den Eintrag in der Datenbank mittels des Schlüssels schreibt.

Ein Gerät umfasst in einer weiteren Variante folgendes:
- beispielsweise ein Erfassungsmodul zum Erfassen individueller Merkmale eines Objektes mittels eines Erfassungsgerätes;
- beispielsweise ein Schutzmodul zum kryptographischen Schützen einer Datenstruktur mittels einer kryptographischen Prüfsumme, wobei das Schutzmodul die kryptographische Prüfsumme mittels der individuellen Merkmale und/oder objektindividuellen Merkmale berechnet;
- beispielsweise ein Schreibmodul, wobei
   - beispielsweise das Schreibmodul dazu eingerichtet ist, die Datenstruktur in eine Datenbank (z. B. ein verteiltes Datenbanksystem) zu schreiben,
   - beispielsweise das Schreibmodul einen Schlüssel (z. B. auch als Zuordnungsschlüssel bezeichnet) für einen Eintrag in der Datenbank bildet, der z. B. die Datenstruktur umfasst,
   - beispielsweise das Schreibmodul in eine Zuordnungsvorrichtung Metadaten über den Eintrag in der Datenbank mittels des Schlüssels schreibt.

Ein Überprüfungsgerät umfasst in dieser Variante folgendes:
- beispielsweise ein Empfangsmodul zum Empfangen einer Datenstruktur, wobei die Datenstruktur mittels einer kryptographischen Prüfsumme geschützt ist;
- beispielsweise ein Erfassungsmodul (110) zum Erfassen individueller Merkmale (M) eines Objektes (O) mittels eines Erfassungsgerätes (A);
- beispielsweise ein Berechnungsmodul (120) zum Berechnen einer objektindividuellen Charakteristik anhand der individuellen Merkmale;
- beispielsweise ein Kryptographiemodul (130) zum Bereitstellen eines ersten kryptographischen Schlüssels anhand der individuellen Merkmale und/oder der objektindividuellen Charakteristik;
- beispielsweise ein Überprüfungsmodul (130) zum Überprüfen der kryptographischen Prüfsumme mittels des ersten kryptographischen Schlüssels, wobei
   - beispielsweise das Überprüfungsmodul einen Schlüssel (z. B. auch als Zuordnungsschlüssel bezeichnet) für die Datenstruktur und/oder für das Objekt bildet,
   - beispielsweise das Überprüfungsmodul dazu eingerichtet ist, anhand des Schlüssels Metadaten für einen Eintrag in einer Datenbank (z. B. ein verteiltes Datenbanksystem) aus einer Zuordnungsvorrichtung zu laden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Beispielsweise wird die Datenstruktur und/oder das Objekt als authentisch akzeptiert, wenn die entsprechenden Prüfsummen übereinstimmen.

Ein Überprüfungsgerät umfasst in einer weiteren Variante folgendes:
- beispielsweise ein Erfassungsmodul (110) zum Erfassen individueller Merkmale (M) eines Objektes (O) mittels eines Erfassungsgerätes (A);
- beispielsweise ein Kryptographiemodul (130) zum Bereitstellen eines ersten kryptographischen Schlüssels anhand der individuellen Merkmale;
- beispielsweise ein Überprüfungsmodul (130) zum Überprüfen einer kryptographischen Prüfsumme einer Datenstruktur mittels des ersten kryptographischen Schlüssels.

Ein Überprüfungsgerät umfasst in einer weiteren Variante folgendes:
- beispielsweise ein Erfassungsmodul (110) zum Erfassen individueller Merkmale (M) eines Objektes (O) mittels eines Erfassungsgerätes (A);
- beispielsweise ein Kryptographiemodul (130) zum Bereitstellen eines ersten kryptographischen Schlüssels anhand der individuellen Merkmale;
- beispielsweise ein Überprüfungsmodul (130) zum Überprüfen einer kryptographischen Prüfsumme einer Datenstruktur mittels des ersten kryptographischen Schlüssels, wobei
   - beispielsweise das Überprüfungsmodul einen Schlüssel (z. B. auch als Zuordnungsschlüssel bezeichnet) für die Datenstruktur und/oder für das Objekt bildet,
   - beispielsweise das Überprüfungsmodul dazu eingerichtet ist, anhand des Schlüssels Metadaten für einen Eintrag in einer Datenbank (z. B. ein verteiltes Datenbanksystem) aus einer Zuordnungsvorrichtung zu laden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Ein Überprüfungsgerät umfasst in einer weiteren Variante folgendes:
- beispielsweise ein Erfassungsmodul (110) zum Erfassen individueller Merkmale (M) eines Objektes (O) mittels eines Erfassungsgerätes (A);
- beispielsweise ein Überprüfungsmodul (130), das zum Überprüfen einer kryptographischen Prüfsumme einer Datenstruktur eingerichtet ist, wobei
   - beispielsweise das Überprüfungsmodul einen Schlüssel (z. B. auch als Zuordnungsschlüssel bezeichnet) für die Datenstruktur und/oder für das Objekt bildet,
   - beispielsweise das Überprüfungsmodul dazu eingerichtet ist, anhand des Schlüssels Metadaten für einen Eintrag in einer Datenbank (z. B. ein verteiltes Datenbanksystem) aus einer Zuordnungsvorrichtung zu laden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Ein Überprüfungsgerät umfasst in einer weiteren Variante folgendes:
- beispielsweise ein Überprüfungsmodul (130), das zum Überprüfen einer kryptographischen Prüfsumme einer Datenstruktur eingerichtet ist, wobei
   - beispielsweise das Überprüfungsmodul einen Schlüssel (z. B. auch als Zuordnungsschlüssel bezeichnet) für die Datenstruktur und/oder für das Objekt bildet,
   - beispielsweise das Überprüfungsmodul dazu eingerichtet ist, anhand des Schlüssels Metadaten für einen Eintrag in einer Datenbank (z. B. ein verteiltes Datenbanksystem) aus einer Zuordnungsvorrichtung zu laden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Ein Überprüfungsgerät umfasst in einer weiteren Variante folgendes:
- beispielsweise ein Erfassungsmodul (110) zum Erfassen individueller Merkmale (M) eines Objektes (O) mittels eines Erfassungsgerätes (A);
- beispielsweise ein Überprüfungsmodul (130), das zum Überprüfen einer kryptographischen Prüfsumme einer Datenstruktur eingerichtet ist, wobei
   - beispielsweise das Überprüfungsmodul einen Schlüssel (z. B. auch als Zuordnungsschlüssel bezeichnet) für die Datenstruktur und/oder für das Objekt anhand der individueller Merkmale (M) und/oder einer objektindividuellen Charakteristik bildet,
   - beispielsweise das Überprüfungsmodul dazu eingerichtet ist, anhand des Schlüssels Metadaten für einen Eintrag in einer Datenbank (z. B. ein verteiltes Datenbanksystem) aus einer Zuordnungsvorrichtung zu laden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

In den genannten Ausführungsformen und Varianten kann z. B. je nach der gewählten Implementierung anstelle der Datenstruktur die entsprechende kryptographische Prüfsumme geschrieben werden. Die Datenstruktur kann dabei in einem anderen Speichersystem gespeichert werden, um z. B. möglichst geringe Datenvolumen in dem verteilten Datenbanksystem zu speichern. Mit anderen Worten kann die Datenstruktur beispielsweise auch indirekt in dem verteilten Datenbanksystem gespeichert werden, indem z. B. die Transaktion in Datenbanksystem die kryptographische Prüfsumme und einen entsprechenden Verweis auf den Speicherort in dem anderen Speichersystem (z. B. eine Datenbank).

Beispielsweise können anstelle des verteilten Datenbanksystems Verfahren verwendet werden, die eine vertrauenswürdige Speicherung von Nachrichten/Transaktionen erlauben.

Beispielsweise können in diesem Zusammenhang mit den Erfindung und den Ausführungsbeispielen, Ausführungsformen und deren Varianten vertrauenswürdige Datenbanken, Cloud-Services, revisionssichere Speichersysteme (z. B. revisionssichere Datenbanken) Netzwerkkommunikationssysteme (z. B. Ethernet-Kommunikationssysteme, TCP-IP Kommunikationssysteme, Mobilfunk-Kommunikationssysteme), verteilte Systeme, verteilte Speichersysteme oder Peer-2-Peer Systeme verwendet werden, um die entsprechenden Transaktionen/Nachrichten vertrauenswürdig zu speichern und/oder zu übertragen und/oder zwischen Knoten auszutauschen. Auch könnte ein schreibgeschützter Speicher, bei dem eine einmalig geschriebene Transaktion oder Nachricht unveränderbar gespeichert wird, verwendet werden, um beispielsweise eine Transaktion oder Nachricht mit dem beschriebenen Verfahren zu speichern, wobei die entsprechende Nachricht eine entsprechende Datenstruktur mit der kryptographischen Prüfsumme umfasst und die Transaktion/Nachricht optional mit einer Transaktionsprüfsumme geschützt ist.

Auch können beispielsweise für die unterschiedlichen Prüfsummen oder kryptographischen Prüfsummen verschiedene Verfahren verwendet werden. So kann beispielsweise die Transaktionsprüfsumme (oder im Falle einer Nachricht die Nachrichtenprüfsumme) als digitale Signatur realisiert sein und die kryptographische Prüfsumme für die Datenstruktur ist beispielsweise ein Message Authentication Code (MAC; deutsch Nachrichtenauthentifizierungscode). Alternativ kann die Datenstruktur mit der kryptographischen Prüfsumme ein digitales Zertifikat für das Objekt realisieren, indem z. B. objektspezifische Informationen/Daten in der Datenstruktur gespeichert sind und/oder die individuellen Merkmale und/oder die objektindividuellen Charakteristik in der Datenstruktur gespeichert ist.

Insbesondere in Kombination mit dem Überprüfungsgerät, lässt sich mittels kryptographischer Mittel eine Verknüpfung mit dem Objekt bzw. individuellen Merkmalen des Objektes (insbesondere ein physisches Objekt, das auch als nicht-digitales Objekt bezeichnet werden kann) und eines digitalen Zwillings oder Abbildes des Objektes erreichen.

Dadurch, dass die Nachricht bzw. die Datenstruktur, die durch das Gerät mittels der kryptographischen Prüfsumme geschützt ist, z. B. mittels einer Transaktion unveränderlich in einem entsprechenden Speichersystem (z. B. verteiltes Datenbanksystem oder eine der genannten Alternativen) gespeichert wird, kann das Überprüfungsgerät ggf. auf einfache Weise durch den ermittelten ersten kryptographischen Schlüssel überprüfen, ob es sich tatsächlich um das vom Gerät genutzte Objekt handelt.

Das Gerät und/oder das Überprüfungsgerät und/oder die Zuordnungsvorrichtung und/oder das Zuordnungssystem kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Ein nicht in einer Figur gezeigtes Ausführungsbeispiel betrifft ein System, das ein Gerät und ein Überprüfungsgerät umfasst. Bei dem jeweiligen Gerät und/oder dem jeweiligen Überprüfungsgerät kann es sich z. B. auch um eine Ausführungsform, Ausführungsbeispiel oder eine Variante von dem jeweiligen Gerät und/oder dem jeweiligen Überprüfungsgerät handeln.

Die Fig. 3 zeigt ein Ausführungsbeispiel, das ein Schreibsteuerungsmodul betrifft. das Schreibsteuerungsmodul kann beispielsweise dazu verwendet werden, um sicherzustellen, dass die in Fig. 2 erläuterte Datenstruktur in ein verteiltes Datenbanksystem oder Datenbanksystem geschrieben wird, das vorgegebenen Sicherheitsanforderungen entspricht, die z. B. in einer Datenschreibkonfiguration vorgegeben sind. Das Ausführungsbeispiel der Erfindung wird insbesondere unter Verwendung der Fig. 1 erläutert und entsprechend gelten die Erläuterungen der Bezugszeichen aus Fig. 1 auch für die Fig. 3.

Das Schreibsteuerungsmodul umfasst eine Kommunikationsschnittstelle (z. B. eine Netzwerkkarte), ein Überprüfungsmodul und ein Übertragungssteuerungsmodul, die über den Bus kommunikativ miteinander verbunden sind.

Die Kommunikationsschnittstelle ist zum Übertragen von Nachrichten eingerichtet, wobei die Nachrichten beispielsweise an ein verteiltes Datenbanksystem übertragen werden.

Das Überprüfungsmodul ist dazu eingerichtet eine/die Datenschreibkonfiguration zuladen, wobei die Datenschreibkonfiguration angibt unter welchen Bedingungen die Nachrichten in das verteilte Datenbanksystem geschrieben werden. Das Überprüfungsmodul überprüft dabei beispielsweise, ob die Bedingungen zum Schreiben der Nachrichten in das verteilte Datenbanksystem erfüllt sind. Die Datenschreibkonfiguration kann beispielsweise im Schreibsteuerungsmodul gespeichert sein oder im verteilten Datenbanksystem gespeichert sein.

Das Übertragungssteuerungsmodul ist dazu eingerichtet abhängig von einem Prüfergebnis des Überprüfungsmoduls eine Übertragung einer Nachricht an das verteilte Datenbanksystem mittels der Kommunikationsschnittstelle zu steuern.

In Varianten der genannten Erfindung kann das verteilte Datenbanksystems beispielsweise durch eines der in Fig. 2 genannten Alternativen ersetzt werden.

Nachfolgend wird erläutert, wie die Bedingungen der Datenschreibkonfiguration genutzt werden, um sicherzustellen, dass z. B. die entsprechende Nachricht erst geschrieben wird, wenn ein entsprechender anderer Knoten bereits eine Nachricht in das verteilte Datenbanksystem geschrieben hat.

Hierzu gibt beispielsweise die Datenschreibkonfiguration vor, dass ein oder mehrere vorgegebene Knoten bereits Nachrichten in das verteilte Datenbanksystem geschrieben haben, wobei beispielsweise die Bedingungen der Datenschreibkonfiguration vorgeben, dass Nachrichten der Knoten bereits in dem vorteilten Datenbanksystem vorhanden sind.

Bei den Nachrichten kann es sich um Transaktionen mit einer Datenstruktur handeln, die beispielsweise in Fig. 2 erläutert wurden. Die Knoten können Entitäten oder Blockkettenorakel sein, für die mittels der Datenschreibkonfiguration eine Abhängigkeit besteht, die beispielsweise auch in der physikalischen Welt existiert. Beispielsweise soll beim Transport des Objektes aus Fig. 2 eine Reihenfolge von Checkpoints eingehalten werden, wobei jeder Checkpoint eine entsprechende Transaktion/Nachricht beispielsweise mit einer Datenstruktur, die mittels der kryptographischen Prüfsumme geschützt ist, in das verteilte Datenbanksystem schreibt.

Ein erster Knoten A schreibt z. B. eine Transaktion (z. B. Transaktion T1a) in das verteilte Datenbanksystem in einem ersten Verarbeitungsschritt S31. Der erste Knoten A kann dabei ein Knoten sein, der den Versand und/oder Herstellung und/oder Durchführung eines Verarbeitungs/Bearbeitungschrittes (Objekt wurde z. B. von einem ersten Unterauftragnehmer erstellt und dem Lieferanten übergeben) für das Objekt bestätigt. Ein zweiter Knoten B mit einem Schreibsteuerungsmodul liest bei der Verarbeitung des Objektes bei einem zweiten Unterauftragnehmer (z. B. wird das Objekt - beispielsweise ein Werkstück) die Transaktion T1a oder sucht in dem verteilten Datenbanksystem nach eine Transaktion, die von dem ersten Knoten mit einem Bezug auf das Objekt geschrieben wurde. Dies erfolgt dann in dem Verarbeitungsschritt S32.

Die Datenschreibkonfiguration gibt beispielsweise an, von welchem Knoten welche Daten im verteilten Datenbanksystem vorhanden sein müssen, damit der zweite Knoten bzw. das Schreibsteuerungsmodul ein Schreiben einer weiteren Nachricht in das verteilte Datenbanksystem zulässt. Die Datenschreibkonfiguration kann alternativ oder zusätzlich ein Zeitfenster vorgeben, das die Nachrichten eines vorgegebenen Knoten einhalten müssen. Beispielsweise ist durch die Datenschreibkonfiguration vorgeben, dass entsprechende Nachrichten eines Knotens nicht älter als 24 h (alternativ auch 1 h, 5 min) sein dürfen. Anhand dieser Information kann der zweite Knoten B dann die entsprechenden Einträge/Transaktionen im verteilten Datenbanksystem durchsuchen, wobei ein jeweiliger Eintrag/Transaktion vorzugsweise einen Zeitstempel umfasst. Alternativ oder zusätzlich kann auch ein Block einen Zeitstempel umfassen. Anhand der entsprechenden Zeitstempel wird dann ermittelt, welche Blöcke/Transaktionen durchsucht werden und/oder ob die Bedingung der Datenschreibkonfiguration eingehalten ist. Es können noch weitere Informationen bei der Suche der entsprechenden Nachrichten verwendet werden. Das sind beispielsweise objektspezifische Daten oder die Daten der Datenstrukturen aus Fig. 2.

Sind die Bedingungen bzw. Anforderungen der Datenschreibkonfiguration erfüllt so schreibt beispielsweise der zweite Knoten B in einem Verarbeitungsschritt S33 eine entsprechende Nachricht, z. B. eine Nachricht bzw. Transaktion mit einer Datenstruktur, die mittels einer kryptographischen Prüfsumme geschützt ist, in das verteilte Datenbanksystem. Bei der Nachricht kann es sich dann beispielsweise um die Transaktion T3a handeln.

Das Schreibsteuerungsmodul kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Fig. 4 zeigt ein Ausführungsbeispiel, das eine Übermittlungsvorrichtung betrifft. Ein Knoten aus dem verteilten Datenbanksystem aus Fig. 1 oder ein Knoten aus Fig. 2 oder 3 können beispielsweise je nach Anwendungsszenario die Übermittlungsvorrichtung umfassen. Es kann beispielsweise ein Knoten oder eine eigenständige Vorrichtung das Gerät und/oder das Schreibsteuerungsmodul und/oder das Überprüfungsgerät und/oder die Übermittlungsvorrichtung umfassen. Beispielsweise kann ein solcher Knoten bzw. Vorrichtung auch entsprechende erläuterten Varianten, Ausführungsformen und Ausführungsbeispiele dieser Erfindungen (Gerät und/oder das Schreibsteuerungsmodul und/oder das Überprüfungsgerät und/oder die Übermittlungsvorrichtung) umfassen.

Die Übermittlungsvorrichtung umfasst ein Nachrichtendatenerfassungsmodul (z. B. eine Netzwerkkarte mit einer Netzwerckarte verbunden), ein Bestimmungsmodul und ein Übertragungsmodul, die über einen Bus kommunikativ miteinander verbunden sind.

Das Nachrichtendatenerfassungsmodul ist dazu eingerichtet einen Prioritätsdatensatz mit einer Priorität von einer Nachricht auszulesen. Bei der Nachricht kann es sich insbesondere um eine Nachricht oder einer Transaktion handeln, die eine Datenstruktur mit einer kryptographischen Prüfsumme umfasst, so wie dies z. B. in Fig. 2 erläutert wurde. Die Priorität bzw. der Prioritätsdatensatz können dabei beispielsweise von dem Gerät aus Fig. 2 vorgegeben werden. Alternativ oder zusätzlich wurde die Nachricht von einem anderen Gerät erzeugt. Bei dem Gerät kann es sich beispielsweise um eine Fertigungsmaschine handeln oder eine Steuer- oder Überwachungsgerät eines technischen Systems (z. B. eine Kraftwerksanlage, ein Energieverteilungsnetz, ein Feldgerät) handeln. Die Nachricht oder die Datenstruktur kann beispielsweise Steuerbefehle zum Steuern von weiteren Geräten umfassen, um z. B. auf Sensorwerte eines Überwachungsgerätes, ein Schaltersignal eines Steuergerätes oder weitere Verarbeitungsschritte für das Objekt (z. B. ein Werkstück wie eine Turbinenschaufel, Generatorenteil, ein Feldgerät usw.) bei seiner Fertigung und/oder Wartung zu steuern. Die genannten Varianten des Nachrichtenerstellers können beispielsweise Sender X genannt werden.

Das Nachrichtendatenerfassungsmodul liest ein Ziel NR (z. B. ein Knoten eines verteilten Datenbanksystems, so wie dieses z. B. in Fig. 1 dargestellt ist oder ein anderes Gerät, das die Nachricht verarbeitet) der Nachricht aus, hierzu umfasst die Nachricht vorzugsweise eine Zieladresse (eine UID oder eine Netzwerkadresse) oder andere Informationen (Namen, Gerätetyp für die Nachricht), um eine Zieladresse des Ziels NR (das auch als Empfänger bezeichnet werden kann) zu bestimmen. Zusätzlich sind beispielsweise der Priorität Übermittlungsparameter für die Nachrichtenübermittlung zugeordnet sind. Dies bedeutet beispielsweise folgendes:
Priorität 0: niedrige Priorität, es sind keine Übermittlungszeiten für die Nachricht einzuhalten und/oder eine erfolgreiche Zustellung ist nicht zwingend erforderlich. Die Übermittlung kann beispielsweise als Broadcast oder Multicast erfolgen.
Priorität 1: normale Priorität, die Nachricht soll innerhalb einer vorgegebenen Übermittlungszeit (z. B.5 Minuten, 1 Stunde, 5 Stunden) an das Ziel NR übermittelt werden.
Priorität 2: hohe Priorität, die Nachricht soll schneller als Nachrichten mit normaler oder niedriger Priorität an das Ziel NR übermittelt werden (z. B. innerhalb von 5 oder 10 Sekunden). Hierzu wird ggf. eine Verarbeitung einer Nachricht mit einer niedrigeren Priorität durch die Knoten unterbrochen (z. B. bei einem Replikationsvorgang innerhalb des verteilten Datenbanksystems) und die Nachricht mit der hohen Priorität bevorzugt bearbeitet.
Priorität 3: kritische Priorität, eine solche Nachricht muss so schnell wie möglich an das Ziel NR übertragen werden.

Die Zuordnung der Übermittlungsparameter kann dabei durch das verteilte Datenbanksystem vorgegeben werden, indem dies beispielsweise mittels eines Smart-Contracts/Chain-Code konfiguriert wird.

Die Zuordnung bzw. die Konfiguration der Übermittlungsparameter kann beispielsweise lokal erfolgen, indem eine entsprechende Konfiguration in der Übermittlungsvorrichtung gespeichert ist. Alternativ oder zusätzlich kann Zuordnung bzw. die Konfiguration der Übermittlungsparameter kann beispielsweise durch das verteilte Datenbanksystem erfolgen, indem beispielsweise eine entsprechende Steuerung mittels eines Smart Contracts realisiert ist, der beispielsweise in einer Transaktion des verteilten Datenbanksystems gespeichert ist.

Das Bestimmungsmodul ist dazu eingerichtet anhand des Ziels und der Priorität einen Nachrichtensteuerungsdatensatz zum Steuern der Übertragung der Nachricht zu erzeugen, wobei der Nachrichtensteuerdatensatz der Nachricht zugeordnet wird. Beim Bestimmen werden insbesondere die Übermittlungsparameter berücksichtigt.

Alternativ oder zusätzlich ist das Bestimmungsmodul dazu eingerichtet anhand des Ziels und der Priorität zu überprüfen, ob eine gültige Route ermittelbar ist, wobei beispielsweise abhängig vom Ergebnis des Prüfens ein Nachrichtensteuerungsdatensatz zum Steuern der Übertragung der Nachricht erzeugt wird. Beim Bestimmen werden insbesondere ebenfalls die Übermittlungsparameter berücksichtigt.

Der Nachricht kann der Nachrichtensteuerdatensatz beispielsweise angehängt werden und damit dann vorzugsweise einen Teil dieser Nachricht bilden und/oder der Nachrichtensteuerdatensatz wird der Nachricht über eine UID (z. B. eine Zufallszahl, ein Hashwert, eine Nachrichtennummer, der erste kryptographische Schlüssel aus Fig. 2, die kryptographische Prüfsumme aus Fig. 2 usw.) zugeordnet und separat in dem verteilten Datenbanksystem gespeichert (z. B. als Hashmap, Hashtable oder als Lookup-Table).

Das Übertragungsmodul ist dazu eingerichtet die Nachricht abhängig von Nachrichtensteuerungsdatensatz an einen Knoten des verteilten Datenbanksystems (z. B. das verteilte Datenbanksystem, das in den vorhergehenden Ausführungsbeispielen bereits erläutert wurde) zu übermitteln, wobei der Knoten durch den Nachrichtensteuerungsdatensatz vorgegeben ist.

Beispielsweise umfasst der Nachrichtensteuerungsdatensatz eine Route über mehrere Knoten des verteilten Datenbanksystems, wobei beispielsweise zur Ermittlung der Route die Übermittlungszeit von Nachrichten zwischen den Knoten durch die Knoten an die Übermittlungsvorrichtung übertragen wird und insbesondere die entsprechenden Übermittlungszeiten beim ermitteln des Nachrichtensteuerungsdatensatzes berücksichtigt werden. Dabei wird die Route beispielsweise abhängig von dem Ergebnis des Prüfens der Priorität und der Übermittlungszeiten durch das Bestimmungsmodul beim Ermitteln des Nachrichtensteuerungsdatensatz bestimmt.

Wie in Fig. 4 dargestellt wird die Nachricht über ein verteiltes System (z. B. das verteilte Datenbanksystem) und seine Knoten (z. B. Knoten N1 - N6) an das Ziel NR übertragen. Handelt es sich beispielsweise um eine Nachricht mit einer niedrigen Priorität, wird die Route C (X, N1, N2, N3, N6, N5, NR) berechnet durch das Bestimmungsmodul für die Nachricht mittels des Nachrichtensteuerungsdatensatzes festgelegt bzw. berechnet. Für die Wahl der Route können unterschiedliche Parameter verwendet werden, z. B. sind die Übertragungszeiten zwischen den Knoten bekannt, indem diese Übertragungszeiten bei Übertragungen zwischen den Knoten erfasst und zwischen den Knoten ausgetauscht werden. Auch kann eine solche langsame Route für Nachrichten niedriger Priorität gewählt werden, um Nachrichten mit hoher Priorität eine schnelle Route freizuhalten. Bei den Knoten der Route C kann es sich z. B. um langsame Knoten mit schlechterer Netzwerkanbindung handeln.

Der Knoten, an den das Übertragungsmodul die Nachricht abhängig von Nachrichtensteuerungsdatensatz übermittelt, ist vorzugsweise der entsprechend nächste Knoten in der berechneten Route. Ausgehend von Sender X wäre der nächste Knoten N1 für die Route C. Ausgehend von Knoten N1 wäre der nächste Knoten N2 für die Route C, wenn der Knoten N1 gerade die Nachricht verarbeitet und/oder die Route bestimmt und/oder neue bestimmt und/oder überprüft hat.

Wird eine weitere Nachricht mit hoher Priorität geschickt, so kann für diese beispielsweise die Route D (X, N2, N5, NR) festgelegt werden. Trifft bei Nachrichten z. B. im Knoten N2 gleichzeitig ein, so wird ggf. die Nachricht mit höherer Priorität zuerst durch den Knoten N2 bearbeitet.

Es können auch ein Knoten (z. B. Knoten N2), mehrere Knoten (z. B. Knoten N1 bis N3), alle Knoten (N1 bis N6), das Ziel NR und/oder der Sender X eine entsprechende Übermittlungsvorrichtung umfassen. Dies ist vorteilhaft, um ggf. die Route der Nachricht anzupassen, wenn z. B. sich die Übertragungszeit der gewählten Route derart verschlechtert, dass diese nicht ihrer Priorität entsprechend rechtzeitig beim Ziel NR eintrifft. Auch können entsprechende Knoten die Route überprüfen, um festzustellen, ob diese noch den Anforderungen der Übermittlungsparameter der Priorität der Nachricht erfüllen. Wird dabei festgestellt, dass die aktuelle Route diese Anforderungen der Priorität bzw. die Übermittlungsparameter nicht mehr erfüllen, so kann ein entsprechenden Knoten die Route anpassen, damit diese wieder den Anforderungen entspricht (und beispielsweise sogar einen separaten und/oder direkten Kommunikationskanal benutzen, falls keine gültige Route ermittelbar ist). Erfüllt die aktuelle Route noch den Anforderungen, so passt der Knoten die Route nicht an.

Der Nachrichtensteuerungsdatensatz kann beispielsweise auch einen Konfigurationsdatensatz umfassen. Dabei wird beispielsweise überprüft, ob die Nachricht derart übertragen wird, dass diese Vorgaben der Priorität und/oder Übermittlungsparameter einhält (z. B. rechtzeitig übertragen wird). Abhängig von diesem Ergebnis des Prüfens wird dann der Konfigurationsdaten erzeugt, der entweder eine Route vorgibt oder beispielsweise bei einer kritischen Priorität einer Nachricht (z. B. eine Steuernachricht für eine Notausschaltung eines Fertigungsgerätes) einen separaten und/oder direkten Kommunikationskanal HPC erzeugt und die Nachricht ggf. direkt an das Ziel NR überträgt. Mittels des Konfigurationsdatensatzes wird dann beispielsweise das Übertragungsmodul derart konfiguriert, dass zum Übertragen der Nachricht der separate und/oder direkte Kommunikationskanal HPC zum Ziel NR aufgebaut wird.

Der Nachrichtensteuerungsdatensatz kann beispielsweise zusätzlich einen vorkonfigurierten Datensatz umfasst, der den Übertragungsweg bzw. die Route der Nachricht an das Ziel zumindest zu teil vorgibt.

Handelt es sich bei dem verteilten Datenbanksystem, beispielsweise um eine Blockkette oder einen distributed Ledger, so kann abhängig von der Priorität z. B. der Validierungsprozess der Nachrichten, die beispielsweise unvalidierte Transaktionen sind, angepasst werden. Beispielsweise kann bei einer Implementierung mittels eines Proof-of-Work Algorithmus, die Schwierigkeit des kryptographischen Puzzles abhängig von der Priorität angepasst werden. Für Nachrichten mit hoher Priorität werden dabei z. B. die Schwierigkeit zu Lösung des kryptographischen Puzzles des Proof-of-Work Algorithmus z. B. derart angepasst, dass die zeitlichen Vorgaben der Priorität für die Übertragung an das Ziel nicht überschritten werden. Hierzu kann die Lösungsdauer des kryptographischen Puzzles derart angepasst werden, dass die Übermittlungszeiten/Übertragungszeiten über die Knoten (z. B. Knoten N1 - N6) des verteilten Datenbanksystems an das Ziel NR + die erforderliche Zeit zum Lösen des kryptographischen Puzzles, die zeitliche Vorgabe nicht überschreitet. Beispielsweise kann ggf. hierzu auch noch eine Pufferzeit berücksichtigt werden.

Die Schwierigkeit des kryptographischen Puzzles ist somit durch die Zeit zum Lösen für dieses Puzzle vorgegeben. Die Zeit wird wie folgt bestimmt: $Zeit zum Lösen des Puzzles = \left(Zeitvorgabe der Priorität\right) - \left(voraussichtliche Übertragungszeit zum Ziel+Pufferzeit\right)$

Die Pufferzeit kann dabei durch die maximal erwartbare Abweichung der Übertragungszeit bestimmt sein. Sollte keine Pufferzeit verwendet werden, kann diese beispielsweise 0 sein. Diese Abweichung kann beispielsweise durch die Knoten bei Nachrichtenübertragungen erfasst werden und zwischen den Knoten ausgetauscht werden.

Durch die Reduktion der Schwierigkeit des kryptographischen Puzzles wird ggf. die Nachricht, die z. B. eine Transaktion ist, als validierte Transaktion des verteilten Datenbanksystems schneller zur Verfügung gestellt.

Zusätzlich oder alternativ kann eine Nachricht mit einer kritischen Priorität beispielsweise mittels des separaten und/oder direkten Kommunikationskanal HPC zum Ziel NR übertragen.

Die Übermittlungsvorrichtung ist dahingehend vorteilhaft, um beispielsweise eine schnelle Übertragung für die entsprechende Nachricht an das Ziel zu ermöglichen, ohne den Replikationsmechanismus des verteilten Datenbanksystems zu nutzen und z. B. nur den Empfang der Nachricht durch eine Bestätigungstransaktion zu dokumentieren und/oder das Absenden der Nachricht durch eine entsprechende Sendetransaktion zu dokumentieren. Dies ist vorteilhaft, um z. B. die Nachricht möglichst schnell (z. B. bei kritischer Priorität) an das Ziel zu übertragen, jedoch mit der Bestätigungstransaktion und/oder der Sendetransaktion dennoch die Übertragung und den Empfang sicher durch das verteilte Datenbanksystem zu dokumentieren. Hierzu umfassen die Sendetransaktion beispielsweise Sende-Datum und/oder Sende-Uhrzeit und/oder Ziel (z. B. die Zieladresse), eine Bestätigung über den Verbindungsaufbau zum Ziel und/oder eine Bestätigung der Übertragung an das Ziel, wobei die Bestätigung der Übertragung z. B. vom Ziel durch eine Prüfsumme wie eine digitale Signatur mittels einer entsprechenden Bestätigungsnachricht an die Übermittlungsvorrichtung bestätigt wurde (auch diese Bestätigungsnachricht kann ggf. in der Sendetransaktion gespeichert sein). Analog kann beispielsweise die Bestätigungstransaktion aufgebaut sein. Diese umfasst z. B. sodass ein Empfangs-Datum und/oder eine Empfangs-Uhrzeit und/oder Sendeadresse (z. B. die Adresse der Übermittlungsvorrichtung), eine Bestätigung über den Verbindungsaufbau vom Sender und/oder eine Bestätigung der Übertragung vom Sender, wobei die Bestätigung der Übertragung z. B. vom Sender durch eine Prüfsumme wie eine digitale Signatur mittels einer entsprechenden Bestätigungsnachricht an die Übermittlungsvorrichtung bestätigt wurde (auch diese Bestätigungsnachricht kann ggf. in der Sendetransaktion gespeichert sein). Die Nachricht selbst kann beispielsweise wieder mittels einer Transaktionsprüfsumme geschützt sein. Der Inhalt der Nachricht kann z. B. ebenfalls in der Bestätigungstransaktion gespeichert sein.

In Varianten des Ausführungsbeispiels wird nach Empfang der Nachricht durch das Ziel eine Bestätigungstransaktion in dem verteilten Datenbanksystem gespeichert.

Die Übermittlungsvorrichtung ist dahingehend vorteilhaft, um beispielsweise zu dokumentieren, wie schnell die Datenübertragung für Nachrichten zu einem Ziel erfolgt. Hierbei können beispielsweise die jeweiligen Übertragungszeiten zwischen den einzelnen Knoten des verteilten Datenbanksystems dokumentiert werden. Mittels der Bestätigungstransaktionen kann dann die Übermittlungsvorrichtung berechnen, welche Route durch die Infrastruktur des verteilten Datenbanksystems angemessen ist für die Priorität.

Die Übermittlungsvorrichtung kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Erfindung ist dahingehend vorteilhaft, um beispielsweise ein Steuersystem für Fertigungsgeräte, Infrastruktur (z. B. Wasserwerke, Abwassersteuerung, Gebäudesteuerung) oder Kraftwerksanlagen mittels eines verteilten Datenbanksystems zu realisieren, wobei Nachrichten, die ggf. Transaktionen des verteilten Datenbanksystems sind. Besonders vorteilhaft ist dabei, dass ggf. auf Nachrichten mit unterschiedlich hoher Priorität die Übertragungszeit und/oder die Zeit zum Lösen des Proof-of-Work-Nachweises angepasst werden kann. Hierdurch kann insbesondere eine Nachricht mit kritischer Priorität schneller als validierte Nachricht/Transaktion durch das verteilte Datenbanksystem gespeichert bzw. zur Verfügung gestellt werden. Wird beispielsweise ein Notschalter für ein Kraftwerk betätigt, so sendet dieser Schalter eine entsprechende Nachricht mit Steuerbefehlen zur Notabschaltung an die Kraftwerkssteuerung, sodass diese über ein Kommunikationsnetzwerk alle relevanten Maschinen und Geräte der Kraftwerksanlage abschaltet. Ist die Kraftwerkssteuerung mittels eines verteilten Datenbanksystems realisiert, so wird diese entsprechende Nachricht an die relevanten Maschinen und Geräte mit der Erfindung deutlich schneller übertragen.

Auf analoge Weise kann ggf. eine Steuerung eines Energieversorgungsnetzes realisiert werden, wenn z. B. Spannungsspitzen oder Spannungsabfälle im Netz durch einen Sender X bzw. ein Gerät mit entsprechender sensorischer Ausstattung gemessen werden. Der Sender X sendet dann eine Nachricht mit entsprechenden Steuerbefehlen und/oder Messwerten an Feldgeräte und/oder Steuerungsgeräte und/oder Reservekraftwerke des Energieversorgungsnetzes, um die entsprechenden Spannungsschwankungen im Energieversorgungsnetz durch eine Steuerung mittels der Feldgeräte und/oder der Steuerungsgeräte und/oder der Reservekraftwerke möglichst stark zu kompensieren. Diese Nachrichten umfassen dann vorzugsweise einen Prioritätsdatensatz mit einer hohen oder kritischen Priorität, wobei die Höhe der Priorität z. B. von der Stärke der Spannungsschwankung im Energieversorgungsnetz bestimmt wird.

In einer Variante umfasst die Übermittlungsvorrichtung zum Steuern einer Übermittlung einer Nachricht folgendes:
- beispielsweise ein Nachrichtendatenerfassungsmodul, wobei
   - beispielsweise das Nachrichtendatenerfassungsmodul einen Prioritätsdatensatz mit einer Priorität von einer Nachricht ausliest,
   - beispielsweise das Nachrichtendatenerfassungsmodul ein Ziel der Nachricht ausliest,
   - beispielsweise der Priorität Übermittlungsparameter für die Nachrichtenübermittlung zugeordnet sind;
- beispielsweise ein Bestimmungsmodul, wobei
   - beispielsweise das Bestimmungsmodul anhand des Ziels und der Priorität einen Nachrichtensteuerungsdatensatz zum Steuern der Übertragung der Nachricht erzeugt,
   - beispielsweise der Nachrichtensteuerdatensatz der Nachricht zugeordnet wird,
- beispielsweise ein Übertragungsmodul, wobei
   - beispielsweise das Übertragungsmodul die Nachricht abhängig von Nachrichtensteuerungsdatensatz an einen Knoten eines verteilten Datenbanksystems übermittelt,
   - beispielsweise der Knoten durch den Nachrichtensteuerungsdatensatz vorgegeben ist.

In Varianten der genannten Erfindung kann das verteilte Datenbanksystems beispielsweise durch eines der in Fig. 2 genannten Alternativen ersetzt werden.

Das Gerät und/oder das Schreibsteuerungsmodul und/oder die Übermittlungsvorrichtung aus den Fig. 2 - 4 können in einer integralen Vorrichtung oder einem System kombiniert werden.

Das System umfasst dabei beispielsweise zusätzlich ein Erzeugungsmodul zum Erzeugen von Nachrichten für ein Objekt, wobei die Nachricht beispielsweise einen Prioritätsdatensatz mit einer Priorität und/oder eine Datenstruktur umfasst, so wie diese in den Ausführungsbeispielen und deren Varianten in den Fig. 2 - 4 beschreiben wurden.

Das Erzeugungsmodul kann beispielsweise zusätzlich einen Sensor umfassen oder auf das Erfassungsgerät des Gerätes zugreifen, um Sensordaten zu erfassen. Die Sensordaten könne beispielsweise von dem Objekt erfasst werden und beispielsweise in der Datenstruktur gespeichert werden (zweite Gruppe von Daten/veränderliche Daten oder erste Gruppe von Daten/unveränderliche Daten). Beispielsweise wird durch die Art der Sensorwerte (z. B. Betätigung eines Notschalters) das Ziel für die Nachricht festgelegt und insbesondere in einer entsprechenden Nachricht gespeichert. Alternativ oder zusätzlich legt das Erzeugungsgerät das Ziel der Nachricht fest.

Das System kann dabei folgendes umfassen:
- beispielsweise ein Erzeugungsmodul zum Erzeugen von Nachrichten für ein Objekt, wobei die Nachricht beispielsweise einen Prioritätsdatensatz mit einer Priorität und/oder eine Datenstruktur umfassen;
- beispielsweise ein Gerät zum Berechnen einer kryptographischen Prüfsumme für die Datenstruktur aufweisend:
   - beispielsweise ein Erfassungsmodul (110) zum Erfassen individueller Merkmale (M) des Objektes (O) mittels eines Erfassungsgerätes (A);
   - beispielsweise ein Berechnungsmodul (120) zum Berechnen einer objektindividuellen Charakteristik anhand der individuellen Merkmale;
   - beispielsweise ein Kryptographiemodul (130) zum Bereitstellen eines kryptographischen Schlüssels anhand der individuellen Merkmale und/oder der objektindividuellen Charakteristik;
   - beispielsweise ein Schutzmodul (130) zum kryptographischen Schützen der Datenstruktur mittels einer kryptographischen Prüfsumme, wobei das Schutzmodul die kryptographische Prüfsumme mittels des kryptographischen Schlüssels berechnet;
- beispielsweise ein Schreibsteuerungsmodul aufweisend:
   - beispielsweise eine Kommunikationsschnittstelle zum Übertragen von Nachrichten, wobei die Nachrichten beispielsweise an ein verteiltes Datenbanksystem übertragen werden;
   - beispielsweise ein Überprüfungsmodul, wobei
      - beispielsweise das Überprüfungsmodul eine Datenschreibkonfiguration lädt, die angibt unter welchen Bedingungen die Nachrichten in das verteilte Datenbanksystem geschrieben werden,
      - beispielsweise das Überprüfungsmodul überprüft, ob die Bedingungen zum Schreiben der Nachrichten das verteilte Datenbanksystem erfüllt sind;
   - beispielsweise ein Übertragungssteuerungsmodul, wobei
      - beispielsweise das Übertragungssteuerungsmodul abhängig von einem Prüfergebnis des Überprüfungsmoduls eine Übertragung einer Nachricht an das verteilte Datenbanksystem mittels der Kommunikationsschnittstelle steuert,
- beispielsweise eine Übermittlungsvorrichtung zum Steuern einer Übermittlung der Nachricht über mehrere Knoten aufweisend:
   - beispielsweise ein Nachrichtendatenerfassungsmodul, wobei
      - beispielsweise das Nachrichtendatenerfassungsmodul einen Prioritätsdatensatz mit einer Priorität von einer Nachricht ausliest,
      - beispielsweise das Nachrichtendatenerfassungsmodul ein Ziel der Nachricht ausliest,
      - beispielsweise der Priorität Übermittlungsparameter für die Nachrichtenübermittlung zugeordnet sind;
   - beispielsweise ein Bestimmungsmodul, wobei
      - beispielsweise das Bestimmungsmodul anhand des Ziels und der Priorität einen Nachrichtensteuerungsdatensatz zum Steuern der Übertragung der Nachricht erzeugt,
      - beispielsweise der Nachrichtensteuerdatensatz der Nachricht zugeordnet wird,
   - beispielsweise ein Übertragungsmodul, wobei
      - beispielsweise das Übertragungsmodul die Nachricht abhängig von Nachrichtensteuerungsdatensatz an einen Knoten eines verteilten Datenbanksystems übermittelt,
      - beispielsweise der Knoten durch den Nachrichtensteuerungsdatensatz vorgegeben ist,
      - beispielsweise die Kommunikationsschnittstelle mittels Übermittlungsvorrichtung Nachricht übermittelt.

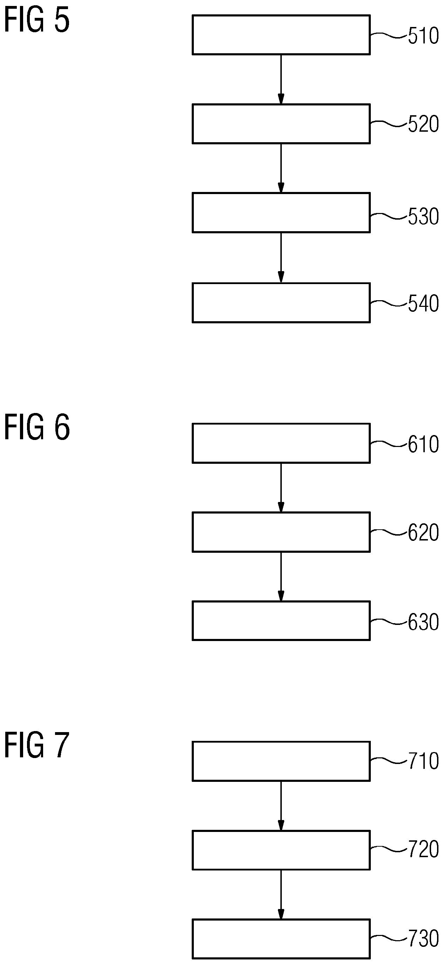

Die Fig. 5 zeigt ein weiteres Ausführungsbeispiel der Erfindung als Ablaufdiagramm für ein Verfahren dargestellt.

Das Verfahren ist vorzugsweise rechnergestützt realisiert.

Im Einzelnen wird in diesem Ausführungsbeispiel ein Verfahren zum rechnergestützten Berechnen einer kryptographischen Prüfsumme.

Das Verfahren umfasst einen ersten Verfahrensschritt 510 zum Erfassen individueller Merkmale eines Objektes mittels eines Erfassungsgerätes.

Das Verfahren umfasst einen optionalen zweiten Verfahrensschritt 520 zum Berechnen einer objektindividuellen Charakteristik anhand der individuellen Merkmale.

Das Verfahren umfasst einen dritten Verfahrensschritt 530 zum Bereitstellen eines ersten kryptographischen Schlüssels anhand der individuellen Merkmale und/oder der objektindividuellen Charakteristik.

Das Verfahren umfasst einen vierten Verfahrensschritt 540 zum kryptographisches Schützen einer Datenstruktur mittels einer kryptographischen Prüfsumme, wobei die kryptographische Prüfsumme mittels des ersten kryptographischen Schlüssels berechnet wird.

Ein weiteres Ausführungsbeispiel der Erfindung, das nicht in einer Fig. gezeigt ist, betrifft ein Verfahren zum rechnergestützten Überprüfen einer kryptographischen Prüfsumme dargestellt.

Das Verfahren ist vorzugsweise rechnergestützt realisiert.

Das Verfahren umfasst einen ersten Verfahrensschritt zum Empfangen einer Datenstruktur, wobei die Datenstruktur mittels einer kryptographischen Prüfsumme geschützt ist.

Das Verfahren umfasst einen zweiten Verfahrensschritt zum Erfassen individueller Merkmale eines Objektes mittels eines Erfassungsgerätes.

Das Verfahren umfasst einen dritten optionalen Verfahrensschritt zum Berechnen einer objektindividuellen Charakteristik anhand der individuellen Merkmale.

Das Verfahren umfasst einen vierten Verfahrensschritt zum Bereitstellen eines ersten kryptographischen Schlüssels anhand der individuellen Merkmale und/oder der objektindividuellen Charakteristik.

Das Verfahren umfasst einen fünften Verfahrensschritt zum Überprüfen der kryptographischen Prüfsumme mittels des ersten kryptographischen Schlüssels.

Die Fig. 6 zeigt ein weiteres Ausführungsbeispiel der Erfindung als ein Ablaufdiagramm für ein Verfahren.

Das Verfahren ist vorzugsweise rechnergestützt realisiert.

Im Einzelnen wird in diesem Ausführungsbeispiel ein Verfahren zum rechnergestützten Steuern einer Datenübertragung dargestellt.

Das Verfahren umfasst einen ersten Verfahrensschritt 610 zum Übertragen von Nachrichten, wobei die Nachrichten beispielsweise an ein verteiltes Datenbanksystem übertragen werden.

Das Verfahren umfasst einen zweiten Verfahrensschritt 620 zum Überprüfen einer Datenschreibkonfiguration, wobei
- die Datenschreibkonfiguration angibt unter welchen Bedingungen die Nachrichten in das verteilte Datenbanksystem geschrieben werden,
- überprüft wird, ob die Bedingungen zum Schreiben der Nachrichten das verteilte Datenbanksystem erfüllt sind;

Das Verfahren umfasst einen dritten Verfahrensschritt 630 zum Übertragen der Nachrichten an ein verteiltes Datenbanksystem mittels einer Kommunikationsschnittstelle, wobei
- das Übertragen abhängig von einem Prüfergebnis des Überprüfens der Datenschreibkonfiguration gesteuert wird.

Die Fig. 7 zeigt ein weiteres Ausführungsbeispiel der Erfindung als ein Ablaufdiagramm für ein Verfahren.

Das Verfahren ist vorzugsweise rechnergestützt realisiert.

Im Einzelnen wird in diesem Ausführungsbeispiel ein Verfahren zum rechnergestützten Steuern einer Übermittlung von Nachrichten über mehrere Knoten dargestellt.

Das Verfahren umfasst einen ersten Verfahrensschritt 710 zum Auslesen einer Nachricht eines Prioritätsdatensatzes mit einer Priorität von einer Nachricht, wobei
- ein Ziel der Nachricht ausgelesen wird,
- der Priorität Übermittlungsparameter für die Nachrichtenübermittlung zugeordnet sind.

Das Verfahren umfasst einen zweiten Verfahrensschritt 720 zum Bestimmen eines Nachrichtensteuerungsdatensatz zum Steuern der Übertragung der Nachricht anhand der Priorität und des Ziels, wobei der Nachrichtensteuerdatensatz der Nachricht zugeordnet wird.

Das Verfahren umfasst einen dritten Verfahrensschritt 730 zum Übermittelt der Nachricht abhängig von Nachrichtensteuerungsdatensatz an einen Knoten eines verteilten Datenbanksystems, wobei der Knoten durch den Nachrichtensteuerungsdatensatz vorgegeben ist.

Die in den Ausführungsbeispielen genannten Module können beispielsweise als eigenständige Knoten realisiert werden und über eine Kommunikationsinfrastruktur (z. B. des verteilten Systems oder des verteilten Datenbanksystems) miteinander kommunikativ verbunden sein. Entsprechend können mehrere Module gleicher Bauart vorgesehen sein, um z. B. eine erhöhte Ausfallsicherheit von entsprechenden Modulen zu gewährleisten.

Weitere nicht in Figuren gezeigte Ausführungsbeispiele sind im folgenden Abschnitt kurz erläutert.

Eine weitere Ausführungsform betrifft ein rechnergestütztes Verfahren mit folgenden Verfahrensschritten:
- beispielsweise Breitstellen eines eines Schlüssels, wobei
   - beispielsweise der Schlüssel anhand von Eingabedaten berechnet wird, oder
   - beispielsweise der Schlüssel über eine Datenschnittstelle abgerufen oder übertragen oder empfangen wird;
- beispielsweise Bereitstellen von Metadaten für einen Eintrag in einer Datenbank (z. B. ein verteiltes Datenbanksystem), wobei
   - beispielsweise die Metadaten berechnet werden, indem beispielsweise ein Verweis oder ein Link auf den Eintrag übergeben oder empfangen werden und beispielsweise die entsprechenden Metadaten für den Eintrag aus der Datenbank ausgelesen werden, oder
   - beispielsweise die Metadaten über eine Datenschnittstelle abgerufen oder übertragen oder empfangen werden;
- beispielsweise Speicherns eines Datenpaares aus dem Schlüssel und den Metadaten.

Eine weitere Ausführungsform betrifft ein rechnergestütztes Verfahren mit folgenden Verfahrensschritten:
- beispielsweise ein Erfassen individueller Merkmale eines Objektes mittels eines Erfassungsgerätes;
- beispielsweise ein Berechnen einer objektindividuellen Charakteristik anhand der individuellen Merkmale;
- beispielsweise ein Bereitstellen eines ersten kryptographischen Schlüssels anhand der individuellen Merkmale und/oder der objektindividuellen Charakteristik;
- beispielsweise ein kryptographisches Schützen einer Datenstruktur mittels einer kryptographischen Prüfsumme, wobei die kryptographische Prüfsumme mittels des ersten kryptographischen Schlüssels berechnet wird;
- beispielsweise ein Schreiben der Datenstruktur in eine Datenbank (z. B. ein verteiltes Datenbanksystem), wobei
   - beispielsweise ein Schlüssel (z. B. auch als Zuordnungsschlüssel bezeichnet) für einen Eintrag in der Datenbank gebildet wird, der z. B. die Datenstruktur umfasst (in diesen Eintrag wurde die Datenstruktur gespeichert),
   - beispielsweise Metadaten über den Eintrag der Datenbank mittels des Schlüssels in eine Zuordnungsvorrichtung geschrieben werden.

Eine weitere Ausführungsform betrifft ein rechnergestütztes Verfahren mit folgenden Verfahrensschritten:
- beispielsweise ein Erfassen individueller Merkmale eines Objektes mittels eines Erfassungsgerätes;
- beispielsweise ein Bereitstellen eines ersten kryptographischen Schlüssels anhand der individuellen Merkmale und/oder einer objektindividuellen Charakteristik;
- beispielsweise ein kryptographisches Schützen einer Datenstruktur mittels einer kryptographischen Prüfsumme, wobei die kryptographische Prüfsumme mittels des ersten kryptographischen Schlüssels berechnet wird;
- beispielsweise ein Schreiben der Datenstruktur in eine Datenbank (z. B. ein verteiltes Datenbanksystem), wobei
   - beispielsweise ein Schlüssel (z. B. auch als Zuordnungsschlüssel bezeichnet) für einen Eintrag in der Datenbank gebildet wird, der z. B. die Datenstruktur umfasst (in diesen Eintrag wurde die Datenstruktur gespeichert),
   - beispielsweise Metadaten über den Eintrag der Datenbank mittels des Schlüssels in eine Zuordnungsvorrichtung geschrieben werden.

Eine weitere Ausführungsform betrifft ein rechnergestütztes Verfahren mit folgenden Verfahrensschritten:
- beispielsweise ein Erfassen individueller Merkmale eines Objektes mittels eines Erfassungsgerätes;
- beispielsweise ein kryptographisches Schützen einer Datenstruktur mittels einer kryptographischen Prüfsumme, wobei die kryptographische Prüfsumme mittels der individuellen Merkmale und/oder objektindividuellen Merkmale berechnet wird;
- beispielsweise ein Schreiben der Datenstruktur in eine Datenbank (z. B. ein verteiltes Datenbanksystem), wobei
   - beispielsweise ein Schlüssel (z. B. auch als Zuordnungsschlüssel bezeichnet) für einen Eintrag in der Datenbank gebildet wird, der z. B. die Datenstruktur umfasst (in diesen Eintrag wurde die Datenstruktur gespeichert),
   - beispielsweise Metadaten über den Eintrag der Datenbank mittels des Schlüssels in eine Zuordnungsvorrichtung geschrieben werden.

Eine weitere Ausführungsform betrifft ein rechnergestütztes Verfahren mit folgenden Verfahrensschritten:
- beispielsweise ein Empfangen einer Datenstruktur, wobei die Datenstruktur mittels einer kryptographischen Prüfsumme geschützt ist;
- beispielsweise ein Erfassen individueller Merkmale eines Objektes mittels eines Erfassungsgerätes;
- beispielsweise ein Berechnen einer objektindividuellen Charakteristik anhand der individuellen Merkmale;
- beispielsweise ein Bereitstellen eines ersten kryptographischen Schlüssels anhand der individuellen Merkmale und/oder der objektindividuellen Charakteristik;
- beispielsweise ein Überprüfen der kryptographischen Prüfsumme mittels des ersten kryptographischen Schlüssels, wobei
   - beispielsweise ein Schlüssel (z. B. auch als Zuordnungsschlüssel bezeichnet) für die Datenstruktur und/oder für das Objekt bildet wird,
   - beispielsweise anhand des Schlüssels Metadaten für einen Eintrag in einer Datenbank (z. B. ein verteiltes Datenbanksystem) aus einer Zuordnungsvorrichtung geladen werden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Eine weitere Ausführungsform betrifft ein rechnergestütztes Verfahren mit folgenden Verfahrensschritten:
- beispielsweise ein Erfassen individueller Merkmale eines Objektes mittels eines Erfassungsgerätes;
- beispielsweise ein Bereitstellen eines ersten kryptographischen Schlüssels anhand der individuellen Merkmale und/oder einer objektindividuellen Charakteristik;
- beispielsweise ein Überprüfen der kryptographischen Prüfsumme mittels des ersten kryptographischen Schlüssels.

Eine weitere Ausführungsform betrifft ein rechnergestütztes Verfahren mit folgenden Verfahrensschritten:
- beispielsweise ein Erfassen individueller Merkmale eines Objektes mittels eines Erfassungsgerätes;
- beispielsweise ein Bereitstellen eines ersten kryptographischen Schlüssels anhand der individuellen Merkmale und/oder einer objektindividuellen Charakteristik;
- beispielsweise ein Überprüfen der kryptographischen Prüfsumme mittels des ersten kryptographischen Schlüssels, wobei
   - beispielsweise ein Schlüssel (z. B. auch als Zuordnungsschlüssel bezeichnet) für die Datenstruktur und/oder für das Objekt bildet wird,
   - beispielsweise anhand des Schlüssels Metadaten für einen Eintrag in einer Datenbank (z. B. ein verteiltes Datenbanksystem) aus einer Zuordnungsvorrichtung geladen wird,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Eine weitere Ausführungsform betrifft ein rechnergestütztes Verfahren mit folgenden Verfahrensschritten:
- beispielsweise ein Erfassen individueller Merkmale (M) eines Objektes (O) mittels eines Erfassungsgerätes (A);
- beispielsweise ein Überprüfen einer kryptographischen Prüfsumme einer Datenstruktur, wobei
   - beispielsweise ein Schlüssel (z. B. auch als Zuordnungsschlüssel bezeichnet) für die Datenstruktur und/oder für das Objekt gebildet wird,
   - beispielsweise anhand des Schlüssels Metadaten für einen Eintrag in einer Datenbank (z. B. ein verteiltes Datenbanksystem) aus einer Zuordnungsvorrichtung geladen werden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Eine weitere Ausführungsform betrifft ein rechnergestütztes Verfahren mit folgenden Verfahrensschritten:
- beispielsweise ein Überprüfen einer kryptographischen Prüfsumme einer Datenstruktur, wobei
   - beispielsweise ein Schlüssel (z. B. auch als Zuordnungsschlüssel bezeichnet) für die Datenstruktur und/oder für das Objekt gebildet wird,
   - beispielsweise anhand des Schlüssels Metadaten für einen Eintrag in einer Datenbank (z. B. ein verteiltes Datenbanksystem) aus einer Zuordnungsvorrichtung geladen werden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Eine weitere Ausführungsform betrifft ein rechnergestütztes Verfahren mit folgenden Verfahrensschritten:
- beispielsweise ein Erfassen individueller Merkmale (M) eines Objektes (O) mittels eines Erfassungsgerätes (A);
- beispielsweise ein Überprüfen einer kryptographischen Prüfsumme einer Datenstruktur, wobei
   - beispielsweise ein Schlüssel (z. B. auch als Zuordnungsschlüssel bezeichnet) für die Datenstruktur und/oder für das Objekt anhand der individuellen Merkmale (M) und/oder einer objektindividuellen Charakteristik gebildet wird,

   - beispielsweise anhand des Schlüssels Metadaten für einen Eintrag in einer Datenbank (z. B. ein verteiltes Datenbanksystem) aus einer Zuordnungsvorrichtung zu laden,
   - beispielsweise anhand der Metadaten für den Eintrag eine weitere Datenstruktur und/oder eine weitere kryptographische Prüfsumme aus der Datenbank geladen wird,
   - beispielsweise das Überprüfen dadurch erfolgt, indem die weitere kryptographische Prüfsumme mit der kryptographischen Prüfsumme verglichen wird.

Die genannten Ausführungsbeispiele, Ausführungsformen und deren Varianten können beispielsweise zusätzlich noch Kommunikationsschnittstellen (z. B. Ethernet, Mobilfunk wie 5G) oder Datenschnittstelle umfasse, um ggf. die notwendigen Daten zu empfangen, zu senden, zu schreiben (z. B. in das verteilte Datenbanksystem).

Die Erfindung betrifft ein Ökosystem von Geräten, die mittels einer Blockkette miteinander autonom interagieren. Insbesondere wird mittels der Erfindung mit einer Blockketteninfrastruktur eine sicherheitsgeschützte Datenverarbeitung von Sensordaten oder Messdaten für ein Objekt realisiert. Anwendungsgebiete sind hierbei Supply-Chain-Szenarien oder industrielle Steueranwendungen von Blockketten.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Gerät zum Berechnen einer kryptographischen Prüfsumme für eine Datenstruktur aufweisend:
- ein Erfassungsmodul (110) zum Erfassen individueller Merkmale (M) eines physischen Objektes (O) mittels eines Erfassungsgerätes (A);
- ein Kryptographiemodul (130) zum Bereitstellen eines ersten kryptographischen Schlüssels anhand der individuellen Merkmale;
- ein Schutzmodul (130) zum kryptographischen Schützen einer Datenstruktur mittels einer kryptographischen Prüfsumme, wobei das Schutzmodul die kryptographische Prüfsumme mittels des ersten kryptographischen Schlüssels berechnet, wobei
- die individuellen Merkmale mit einem vorgegebenen Referenzwert verglichen werden,
- bei einer ausreichend genauen Übereinstimmung des vorgegebenen Referenzwertes mit den individuellen Merkmalen der erste kryptographische Schlüssel durch das Kryptographiemodul freigegeben wird.

2. Gerät nach Anspruch 1, wobei
- das Gerät ein Berechnungsmodul (120) umfasst,
- das Berechnungsmodul (120) zum Berechnen einer objektindividuellen Charakteristik anhand der individuellen Merkmale eingerichtet ist, der erste kryptographische Schlüssel anhand der objektindividuellen Charakteristik und/oder anhand der individuellen Merkmale berechnet wird,
- die Charakteristik unter Berücksichtigung vorgegebener Toleranzwerte der individuellen Merkmale berechnet wird,
- anhand der Charakteristik und/oder der individuellen Merkmale und/oder einer Zeichenfolge der erste kryptographische Schlüssel berechnet wird, oder
- anhand der Charakteristik und/oder der individuellen Merkmale und/oder einer Zeichenfolge ein zweiter kryptographischer Schlüssel berechnet wird, der den ersten kryptographischen Schlüssel entschlüsselt, oder
- die Charakteristik und die individuellen Merkmale mit einem entsprechenden Referenzwert verglichen werden und wobei bei einer ausreichend genauen Übereinstimmung der Referenzwerte mit der Charakteristik und der individuellen Merkmale der erste kryptographische Schlüssel durch das Kryptographiemodul freigegeben wird.

3. Gerät nach Anspruch 1 oder 2, wobei
- die Datenstruktur einen Objektdatensatz umfasst,
- der Objektdatensatz angibt an welchen geometrischen Stellen und/oder Schnittstellen das Erfassungsgerät die individuellen Merkmale erfassen kann,
- der Objektdatensatz die individuellen Merkmale und/oder die objektindividuelle Charakteristik in verschlüsselter Form umfasst,
- die verschlüsselten die individuellen Merkmale und/oder die objektindividuelle Charakteristik mittels des ersten kryptographischen Schlüssels oder eines dritten kryptographischen Schlüssels entschlüsselt werden können,
- der Objektdatensatz weitere objektbezogene Daten umfasst wie Messwerte des Objektes, Messwerte über das Objekt, Herstellungsangaben des Objektes, Aufenthaltsorte des Objektes,
- die weiteren Objektdaten von Sensoren des Gerätes für das Objekt erfasst werden,
- die Sensoren ein GPS-Modul ist und/oder Temperatursensoren und/oder optische Sensoren sind, die entsprechende Eigenschaften von dem Objekt erfassen.

4. Gerät nach einem der vorhergehenden Ansprüche, wobei
- der erste kryptographische Schlüssel und/oder der zweite kryptographische Schlüssel und/oder der dritte kryptographische Schlüssel zusätzlich unter Berücksichtigung mittels einer geheimen Zeichenkette berechnet wird, und/oder
- der erste kryptographische Schlüssel und/oder der zweite kryptographische Schlüssel und/oder der dritte kryptographische Schlüssel ein privater Schlüssel eines asymmetrischen Schlüsselpaares ist oder ein symmetrischer Schlüssel ist.

5. Gerät nach einem der vorhergehenden Ansprüche, wobei
- die Datenstruktur eine Transaktion eines verteilten Datenbanksystems ist und die kryptographische Prüfsumme die Transaktionsprüfsumme ist,
- das verteilte Datenbanksystem eine Blockkette ist,
- das Gerät als Knoten oder Orakel des verteilten Datenbanksystems ausgebildet ist,
- die kryptographische Prüfsumme eine digitale Signatur ist.

6. Überprüfungsgerät zum Überprüfen einer kryptographischen Prüfsumme einer Datenstruktur umfassend:
- ein Empfangsmodul zum Empfangen einer Datenstruktur, wobei die Datenstruktur mittels einer kryptographischen Prüfsumme geschützt ist;
- ein Erfassungsmodul (110) zum Erfassen individueller Merkmale (M) eines physischen Objektes (O) mittels eines Erfassungsgerätes (A);
- ein Kryptographiemodul (130) zum Bereitstellen eines ersten kryptographischen Schlüssels anhand der individuellen Merkmale;
- ein Überprüfungsmodul (130) zum Überprüfen der kryptographischen Prüfsumme mittels des ersten kryptographischen Schlüssels, wobei
- die individuellen Merkmale mit einem vorgegebenen Referenzwert verglichen werden und bei einer ausreichend genauen Übereinstimmung des vorgegebenen Referenzwertes mit den individuellen Merkmalen wird der erste kryptographische Schlüssel durch das Kryptographiemodul freigegeben.

7. Verfahren zum rechnergestützten Berechnen einer kryptographischen Prüfsumme mit folgenden Verfahrensschritten:
- Erfassen individueller Merkmale (M) eines physischen Objektes (O) mittels eines Erfassungsgerätes (A);
- Bereitstellen eines ersten kryptographischen Schlüssels anhand der individuellen Merkmale ;
- kryptographisches Schützen einer Datenstruktur mittels einer kryptographischen Prüfsumme, wobei die kryptographische Prüfsumme mittels des ersten kryptographischen Schlüssels berechnet wird, wobei
- die individuellen Merkmale mit einem vorgegebenen Referenzwert verglichen werden,
- bei einer ausreichend genauen Übereinstimmung des vorgegebenen Referenzwertes mit den individuellen Merkmalen der erste kryptographische Schlüssel freigegeben wird.

8. Verfahren zum rechnergestützten Überprüfen einer kryptographischen Prüfsumme mit folgenden Verfahrensschritten:
- Empfangen einer Datenstruktur, wobei die Datenstruktur mittels einer kryptographischen Prüfsumme geschützt ist;
- Erfassen individueller Merkmale (M) eines physischen Objektes (O) mittels eines Erfassungsgerätes (A);
- Bereitstellen eines ersten kryptographischen Schlüssels anhand der individuellen Merkmale;
- Überprüfen der kryptographischen Prüfsumme mittels des ersten kryptographischen Schlüssels, wobei
- die individuellen Merkmale mit einem vorgegebenen Referenzwert verglichen werden und bei einer ausreichend genauen Übereinstimmung des vorgegebenen Referenzwertes mit den individuellen Merkmalen wird der erste kryptographische Schlüssel freigegeben.

9. Computerprogrammprodukt mit Programmbefehlen zur Durchführung des Verfahrens nach einem der Ansprüche 7 - 8.

10. Bereitstellungsvorrichtung für das Computerprogrammprodukt nach Anspruch 9, wobei die Bereitstellungsvorrichtung das Computerprogrammprodukt speichert und/oder bereitstellt.

## Claims

1. Device for calculating a cryptographic checksum for a data structure, having:
- a recording module (110) for recording individual features (M) of a physical object (O) by way of a recording device (A);
- a cryptography module (130) for providing a first cryptographic key based on the individual features;
- a protection module (130) for cryptographically protecting a data structure by way of a cryptographic checksum, wherein the protection module calculates the cryptographic checksum by way of the first cryptographic key, wherein
- the individual features are compared with a predefined reference value,
- when there is a sufficiently accurate match between the predefined reference value and the individual features, the first cryptographic key is released by the cryptography module.

2. Device according to Claim 1, wherein
- the device comprises a calculation module (120),
- the calculation module (120) is configured so as to calculate an object-specific characteristic based on the individual features, and the first cryptographic key is calculated based on the object-specific characteristic and/or based on the individual features,
- the characteristic is calculated taking into account predefined tolerance values of the individual features,
- the first cryptographic key is calculated based on the characteristic and/or the individual features and/or a string of characters, or
- a second cryptographic key that decrypts the first cryptographic key is calculated based on the characteristic and/or the individual features and/or a string of characters, or
- the characteristic and the individual features are compared with a corresponding reference value, and wherein, when there is a sufficiently accurate match between the reference values and the characteristic and the individual features, the first cryptographic key is released by the cryptography module.

3. Device according to Claim 1 or 2, wherein
- the data structure comprises an object data record,
- the object data record specifies the geometrical points and/or interfaces at which the recording device is able to record the individual features,
- the object data record comprises the individual features and/or the object-specific characteristic in encrypted form,
- the encrypted individual features and/or the object-specific characteristic are able to be decrypted by way of the first cryptographic key or of a third cryptographic key,
- the object data record comprises further object-related data, such as measured values of the object, measured values regarding the object, manufacturing information about the object, locations of the object,
- the further object data are recorded for the object by sensors of the device,
- the sensors are a GPS module and/or are temperature sensors and/or optical sensors that record corresponding properties of the object.

4. Device according to one of the preceding claims, wherein
- the first cryptographic key and/or the second cryptographic key and/or the third cryptographic key is additionally calculated taking into account a secret string of characters, and/or
- the first cryptographic key and/or the second cryptographic key and/or the third cryptographic key is a private key of an asymmetric key pair or is a symmetric key.

5. Device according to one of the preceding claims, wherein
- the data structure is a transaction of a distributed database system and the cryptographic checksum is the transaction checksum,
- the distributed database system is a blockchain,
- the device is in the form of a node or oracle of the distributed database system,
- the cryptographic checksum is a digital signature.

6. Checking device for checking a cryptographic checksum of a data structure, comprising:
- a reception module for receiving a data structure, wherein the data structure is protected by way of a cryptographic checksum;
- a recording module (110) for recording individual features (M) of a physical object (O) by way of a recording device (A);
- a cryptography module (130) for providing a first cryptographic key based on the individual features;
- a checking module (130) for checking the cryptographic checksum by way of the first cryptographic key, wherein
- the individual features are compared with a predefined reference value and, when there is a sufficiently accurate match between the predefined reference value and the individual features, the first cryptographic key is released by the cryptography module.

7. Method for the computer-aided calculation of a cryptographic checksum, having the following method steps:
- recording individual features (M) of a physical object (O) by way of a recording device (A);
- providing a first cryptographic key based on the individual features;
- cryptographically protecting a data structure by way of a cryptographic checksum, wherein the cryptographic checksum is calculated by way of the first cryptographic key, wherein
- the individual features are compared with a predefined reference value,
- when there is a sufficiently accurate match between the predefined reference value and the individual features, the first cryptographic key is released.

8. Method for the computer-aided checking of a cryptographic checksum, having the following method steps:
- receiving a data structure, wherein the data structure is protected by way of a cryptographic checksum;
- recording individual features (M) of a physical object (O) by way of a recording device (A);
- providing a first cryptographic key based on the individual features;
- checking the cryptographic checksum by way of the first cryptographic key, wherein
- the individual features are compared with a predefined reference value and, when there is a sufficiently accurate match between the predefined reference value and the individual features, the first cryptographic key is released.

9. Computer program product containing program commands for performing the method according to either of Claims 7-8.

10. Provision device for the computer program product according to Claim 9, wherein the provision device stores and/or provides the computer program product.

## Revendications

1. Procédé pour calculer une somme de contrôle cryptographique pour une structure de données, comportant :
- un module de détection (110) pour détecter des caractéristiques individuelles (M) d'un objet physique (O) au moyen d'un appareil de détection (A) ;
- un module de cryptographie (130) pour fournir une première clé cryptographique à l'aide des caractéristiques individuelles ;
- un module de protection (130) pour la protection cryptographique d'une structure de données au moyen d'une somme de contrôle cryptographique, le module de protection calculant la somme de contrôle cryptographique au moyen de la première clé cryptographique,
▪ les caractéristiques individuelles étant comparées avec une valeur de référence donnée ;
▪ en cas de coïncidence suffisamment précise entre la valeur de référence donnée et les caractéristiques individuelles, la première clé cryptographique étant validée par le module de cryptographie.

2. Appareil selon la revendication 1,
- l'appareil comprenant un module de calcul (120) ;
- le module de calcul (120) étant configuré pour calculer une caractéristique individuelle d'objet à l'aide des caractéristiques individuelles,
- la première clé cryptographique étant calculée à l'aide de la caractéristique individuelle d'objet et/ou à l'aide des caractéristiques individuelles,
- la caractéristique étant calculée compte tenu de valeurs de tolérance données des caractéristiques individuelles,
- la première clé cryptographique étant calculée à l'aide de la caractéristique et/ou des caractéristiques individuelles et/ou d'une suite de caractères ou
- à l'aide de la caractéristique et/ou des caractéristiques individuelles et/ou d'une suite de caractères étant calculée une deuxième clé cryptographique qui décrypte la première clé cryptographique ou
- la caractéristique et les caractéristiques individuelles étant comparées avec une valeur de référence correspondante et, en cas de coïncidence suffisamment précise des valeurs de référence avec la caractéristique et les caractéristiques individuelles, la première clé cryptographique étant validée par le module de cryptographie.

3. Appareil selon la revendication 1 ou 2,
- la structure de données comprenant un jeu de données d'objet ;
- le jeu de données d'objet indiquant à quels points et/ou interfaces géométriques l'appareil de détection peut détecter les caractéristiques individuelles ;
- le jeu de données d'objet comprenant les caractéristiques individuelles et/ou la caractéristique individuelle d'objet sous forme cryptée ;
- les caractéristiques individuelles cryptées et/ou la caractéristique individuelle d'objet pouvant être décryptées au moyen de la première clé cryptographique ou d'une troisième clé cryptographique ;
- le jeu de données d'objet comprenant d'autres données relatives à un objet, telles que des valeurs de mesure de l'objet, des valeurs de mesure sur l'objet, des informations sur la fabrication de l'objet, des emplacements de l'objet ;
- les autres données d'objet étant détectées par des capteurs de l'appareil pour l'objet ;
- les capteurs étant un module GPS et/ou des capteurs de température et/ou des capteurs optiques qui détectent des caractéristiques correspondantes de l'objet.

4. Appareil selon l'une des revendications précédentes,
- la première clé cryptographique et/ou la deuxième clé cryptographique et/ou la troisième clé cryptographique étant en outre calculées compte tenu d'une chaîne de caractères secrète et/ou
- la première clé cryptographique et/ou la deuxième clé cryptographique et/ou la troisième clé cryptographique étant une clé privée d'une paire de clés asymétrique ou une clé symétrique.

5. Appareil selon l'une des revendications précédentes,
- la structure de données étant une transaction d'un système de base de données distribué et la somme de contrôle cryptographique étant la somme de contrôle de la transaction ;
- le système de base de données distribué étant une chaîne de blocs ;
- l'appareil étant réalisé en tant que nœud ou oracle du système de base de données distribué ;
- la somme de contrôle cryptographique étant une signature numérique.

6. Appareil de vérification pour vérifier une somme de contrôle cryptographique d'une structure de données, comprenant :
- un module de réception pour recevoir une structure de données, la structure de données étant protégée au moyen d'une somme de contrôle cryptographique ;
- un module de détection (110) pour détecter des caractéristiques individuelles (M) d'un objet physique (O) au moyen d'un appareil de détection (A) ;
- un module de cryptographie (130) pour fournir une première clé cryptographique à l'aide des caractéristiques individuelles ;
- un module de vérification (130) pour vérifier la somme de contrôle cryptographique au moyen de la première clé cryptographique,
▪ les caractéristiques individuelles étant comparées avec une valeur de référence donnée et, en cas de coïncidence suffisamment précise entre la valeur de référence donnée et les caractéristiques individuelles, la première clé cryptographique étant validée par le module de cryptographie.

7. Procédé de calcul assisté par ordinateur d'une somme de contrôle cryptographique, comportant les étapes suivantes :
- détection de caractéristiques individuelles (M) d'un objet physique (O) au moyen d'un appareil de détection (A) ;
- fourniture d'une première clé cryptographique à l'aide des caractéristiques individuelles ;
- protection cryptographique d'une structure de données au moyen d'une somme de contrôle cryptographique, la somme de contrôle cryptographique étant calculée au moyen de la première clé cryptographique,
▪ les caractéristiques individuelles étant comparées avec une valeur de référence donnée ;
▪ en cas de coïncidence suffisamment précise entre la valeur de référence donnée et les caractéristiques individuelles, la première clé cryptographique étant validée.

8. Procédé de calcul assisté par ordinateur d'une somme de contrôle cryptographique, comportant les étapes suivantes :
- réception d'une structure de données, la structure de données étant protégée au moyen d'une somme de contrôle cryptographique ;
- détection de caractéristiques individuelles (M) d'un objet physique (O) au moyen d'un appareil de détection (A) ;
- fourniture d'une première clé cryptographique à l'aide des caractéristiques individuelles ;
- vérification de la somme de contrôle cryptographique au moyen de la première clé cryptographique,
▪ les caractéristiques individuelles étant comparées avec une valeur de référence donnée et, en cas de coïncidence suffisamment précise entre la valeur de référence donnée et les caractéristiques individuelles, la première clé cryptographique étant validée.

9. Produit de programme informatique comportant des instructions de programme pour l'exécution du procédé selon l'une des revendications 7 - 8.

10. Dispositif de fourniture pour le produit de programme informatique selon la revendication 9, le dispositif de fourniture sauvegardant et/ou fournissant le produit de programme informatique.
